# EUROPEAN PATENT APPLICATION

(11) **EP 4 718 916 A1**
(43) Date of publication of application: **01.04.2026**
(21) Application number: 23945368.1
(22) Date of filing: 14.07.2023
(51) Int. Cl.: H04W 52/02, H04W 48/16, H04W 48/20

(54) **METHOD FOR WIRELESS COMMUNICATION, AND DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LU, Qianxi, Dongguan, Guangdong 523860 (CN); LENG, Bingxue, Dongguan, Guangdong 523860 (CN)
(74) Representative: Penza, Giancarlo
(86) International application number: PCT/CN2023/107569
(87) International publication number: WO 2025/015469

(57) **Abstract**

A method for wireless communication, and a device. The method comprises: a terminal device receives first information, wherein the first information is used for one or more of the following: indicating a first cell and/or second information, identifying the first cell, synchronizing with the first cell, and providing information on the first cell, wherein the second information comprises information associated with the first cell, and the first cell is a cell that does not transmit some or all common signals. A terminal device can receive information (i.e., first information) associated with a first cell (such as an SSB-less cell), and can identify, discover, and access the first cell on the basis of the information, thereby facilitating operation of the terminal device in the cell.

## Description

### TECHNICAL FIELD

The present disclosure relates to that technical field of communication, and more particularly, to a method and device for wireless communication.

### BACKGROUND

Energy consumption has become a significant component operating costs of operators. In order to reduce the energy consumption of mobile networks, the research on energy-saving cells is put forward. However, how to realize the operations in energy-saving communities is an urgent problem to be solved.

### SUMMARY

The present disclosure provides a method and device for wireless communication, and various aspects of the present disclosure will be described below.

In a first aspect, there is provided a method for wireless communication, the method including: receiving, by the terminal device, first information, the first information being used for one or more of: indicating a first cell and/or second information; identifying the first cell; or synchronizing with the first cell; and providing information of the first cell; wherein the second information includes information associated with the first cell, and the first cell is a cell that does not transmit part or all of common signals.

In a second aspect, there is provided a method for wireless communication, the method including: receiving, by a terminal device, fourth information and/or fifth information transmitted by a network device, wherein the fourth information is used to indicate configuration information of discontinuous transmission (DTX) and/or discontinuous reception (DRX) of a third cell, and the fifth information is used to indicate activation/deactivation of the configuration information of DTX/DRX of the third cell, wherein the network device is a network device corresponding to the third cell.

In a third aspect, there is provided a method for wireless communication, the method including: transmitting, by a first cell, first information to a terminal device, the first information being used for one or more of: indicating the first cell and/or second information; identifying the first cell; synchronizing with the first cell; or providing information of the first cell; wherein the second information includes information associated with the first cell, and the first cell is a cell that does not transmit part or all of common signals.

In a fourth aspect, there is provided a method for wireless communication, the method including: transmitting, by a second cell, first information to the terminal device, the first information being used for one or more of: indicating a first cell and/or second information; identifying the first cell; synchronizing with the first cell; or providing information of the first cell; wherein the second information includes information associated with the first cell, and the first cell is a cell that does not transmit part or all of common signals.

In a fifth aspect, there is provided a method for wireless communication, the method including: transmitting, by a network device, fourth information and/or fifth information to a terminal device, wherein the fourth information is used to indicate configuration information of discontinuous transmission (DTX) and/or discontinuous reception (DRX) of a third cell, and the fifth information is used to indicate activation/deactivation of the configuration information of DTX/DRX of the third cell, wherein the network device is a network device corresponding to the third cell.

In a sixth aspect, there is provided a terminal device including: a first receiving unit configured to receive first information, the first information being used for one or more of: indicating a first cell and/or second information; identifying the first cell; synchronizing with the first cell; or providing information of the first cell; wherein the second information includes information associated with the first cell, and the first cell is a cell that does not transmit part or all of common signals.

In a seventh aspect, there is provided a terminal device, the terminal device including: a fifth receiving unit, configured to receive fourth information and/or fifth information transmitted by a network device, wherein the fourth information is used to indicate configuration information of discontinuous transmission (DTX) and/or discontinuous reception (DRX) of a third cell, and the fifth information is used to indicate activation/deactivation of the configuration information of DTX/DRX of the third cell, wherein the network device is a network device corresponding to the third cell.

In an eighth aspect, there is provided a network device, the network device being a network device corresponding to a first cell, the network device including: a first transmitting unit configured to transmit first information to the terminal device, the first information being used for one or more of: indicating the first cell and/or second information; identifying the first cell; synchronizing with the first cell; or providing information of the first cell; wherein the second information includes information associated with the first cell, and the first cell is a cell that does not transmit part or all of common signals.

In a ninth aspect, there is provided a network device, the network device being a network device corresponding to a second cell, and the network device includes: a first transmitting unit configured to transmit first information to the terminal device, the first information being used for one or more of: indicating the first cell and/or second information; identifying the first cell; synchronizing with the first cell; or providing information of the first cell; wherein the second information includes information associated with the first cell, and the first cell is a cell that does not transmit part or all of common signals.

In a tenth aspect, there is provided a network device, the network device including: a first transmitting unit configured to transmit fourth information and/or fifth information to a terminal device, wherein the fourth information is used to indicate configuration information of discontinuous transmission (DTX) and/or discontinuous reception (DRX) of the third cell, and the fifth information is used to indicate activation/deactivation of the configuration information of DTX/DRX of the third cell, wherein the network device is a network device corresponding to the third cell.

In an eleventh aspect, there is provided a terminal device including a processor for storing a program and a memory for invoking the program in the memory to perform the method of the first or second aspect.

In a twelfth aspect, there is provided a network device including a processor for storing a program and a memory for invoking the program in the memory to perform the method of the third, fourth, or fifth aspect.

In a thirteenth aspect, there is provided a terminal device including a processor for invoking a program from a memory to perform the method of the first or second aspect.

In a fourteenth aspect, there is provided a network device including a processor for invoking a program from a memory to perform the method of the third, fourth, or fifth aspect.

In a fifteenth aspect, there is provided a chip including a processor for invoking a program from a memory such that a device on which the chip is mounted performs the method of the first or second aspect.

In a sixteenth aspect, there is provided a chip including a processor for invoking a program from a memory such that a device on which the chip is mounted performs the method of the third, fourth, or fifth aspect.

In a seventeenth aspect, there is provided a communication system including the above-described terminal device and/or network device. In another possible design, the system may further include other devices that interact with the terminal device and/or the network device in the solution provided by the embodiment of the present disclosure.

In an eighteenth aspect, there is provided a computer-readable storage medium having stored thereon a program that causes a computer to perform the method of the first or second aspect.

In a nineteenth aspect, there is provided a computer-readable storage medium having stored thereon a program that causes a computer to perform the method of the third, fourth, or fifth aspect.

In a twentieth aspect, there is provided a computer program product including a program that causes a computer to perform the method of the first or second aspect.

In a twenty-first aspect, there is provided a computer program product including a program that causes a computer to perform the method of the third, fourth, or fifth aspect.

In a twenty-second aspect, there is provided a computer program that causes a computer to perform the method of the first or second aspect.

In a twenty-third aspect, there is provided a computer program that causes a computer to perform the method of the third, fourth, or fifth aspect.

In embodiments of the present disclosure, the terminal device may receive information (i.e., first information) associated with a first cell (such as an SSB-less cell), and may identify, discover, and access the first cell based on the information, which can facilitate the terminal device to implement operation in the cell.

### BRIEF DESCRIPTION OF THE DRAWINGS

FIG. 1 is a wireless communication system to which an embodiment of the present disclosure is applied.
FIG. 2 is a schematic flow chart of a wireless communication method according to an embodiment of the present disclosure.
FIG. 3 is a schematic flow chart of a wireless communication method according to another embodiment of the present disclosure.
FIG. 4 is a schematic structural diagram of a terminal device according to an embodiment of the present disclosure.
FIG. 5 is a schematic structural diagram of another terminal device according to an embodiment of the present disclosure.
FIG. 6 is a schematic structural diagram of a network device according to an embodiment of the present disclosure.
FIG. 7 is a schematic structural diagram of another network device provided by an embodiment of the present disclosure.
FIG. 8 is a schematic structural diagram of another network device provided by an embodiment of the present disclosure.
FIG. 9 is a schematic configuration diagram of a device for communication according to an embodiment of the present disclosure.

### DETAILED DESCRIPTION

Hereinafter, technical solutions in the present disclosure will be described with reference to the accompanying drawings.

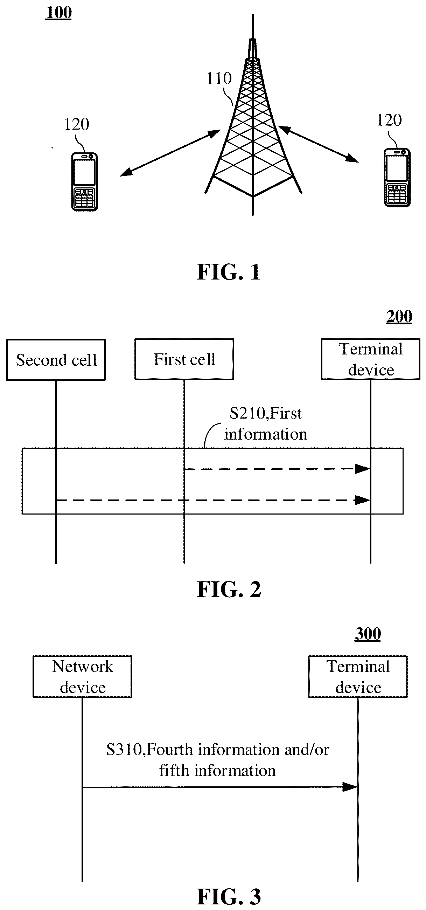

FIG. 1 shows a wireless communication system 100 to which an embodiment of the present disclosure is applied. The wireless communication system 100 may include devices with which the communication device 120 communicates. The network device 110 may provide communication coverage for a particular geographic area and may communicate with the terminal device 120 located within the coverage area.

FIG. 1 exemplarily illustrates one network device and two terminals. Optionally, the wireless communication system 100 may include a plurality of network devices and another number of terminal devices may be included within the coverage range of each network device, which is not limited by the embodiment of the present disclosure.

Optionally, the wireless communication system 100 may further include other network entities such as a network controller and a mobility management entity, and the embodiments of the present disclosure are not limited thereto.

It should be understood that the technical solutions of the embodiments of the present disclosure can be applied to various communication systems, such as a fifth generation (5G) system or a new radio (NR) system, a long term evolution (LTE) system, an LTE frequency division duplex (FDD) system, an LTE time division duplex (TDD), and the like. The technical solution provided in the present disclosure can also be applied to future communication systems, such as a sixth generation mobile communication system, a satellite communication system, and the like.

The terminal device in the embodiment of the present disclosure may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user device. The terminal device in the embodiment of the present disclosure may be a device that provides voice and/or data connectivity to a user, and may be used to connect people, objects, and machines, for example, a handheld device having a wireless connection function, a vehicle-mounted device, or the like. The terminal device in the embodiment of the present disclosure may be a mobile phone (mobile phone), a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, a UE may act as a scheduling entity that provides sidelink signals between UEs in vehicle-to-everything (V2X) or device-to-device (D2D), etc. For example, cellular telephones and automobiles communicate with each other using sidelink signals. Communication between cellular phones and smart home devices without relaying communication signals through base stations.

The network device in the embodiment of the present disclosure may be a device for communicating with a terminal device, and the network device may also be referred to as an access network device or a radio access network device, for example, the network device may be a base station. The network device in the embodiment of the present disclosure may refer to a radio access network (RAN) node (or device) that connects the terminal device to the wireless network. The base station may broadly cover, or be substituted for, various names among, a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), A multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a locationing node. The base station may be a macro base station, a micro base station, a relay node, a donor node, or the like, or a combination thereof. The base station may also refer to a communication module, modem, or chip for disposal within the aforementioned device or device. The base station may be a mobile switching center, a device that assumes the function of a base station in D2D, V2X, or M2M communication, a network-side device in a 6G network, a device that assumes the function of a base station in a future communication system, or the like. The base stations may support networks of the same or different access technologies. The embodiments of the present disclosure do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the network device in the embodiment of the present disclosure may refer to a

CU or a DU, or the network device includes a CU and a DU. The gNB may also include an AAU.

Network devices and terminal devices can be deployed on land, including indoor or outdoor, handheld or vehicle-mounted; it can also be deployed on the water; it can also be deployed on aircraft, balloons and satellites in the air. In the embodiment of the present disclosure, the scenario in which the network device and the terminal device are located is not limited.

It should be understood that all or part of the functionality of the communication device in the present disclosure may also be implemented by software functionality running on hardware, or by virtualization functionality instantiated on a platform, such as a cloud platform.

Currently, with people's pursuit of speed, latency, high-speed mobility, energy efficiency, and the diversity and complexity of services in future life, the 3GPP International Standards Organization has begun to develop 5G. The main application scenarios of 5G are: enhanced mobile broadband (eMBB), ultra reliability and low latency communication (URLLC), and massive machine type communications (mMTC).

eMBB still aims at users' access to multimedia content, services and data, and its demand is growing rapidly. On the other hand, since eMBB may be deployed in different scenarios, such as indoors, urban areas, rural areas, etc., its capabilities and needs are quite different, so it cannot be generalized and must be analyzed in detail based on specific deployment scenarios. Typical applications of URLLC include: industrial automation, power automation, telemedicine operations (surgery), traffic safety and security, etc. The typical characteristics of mMTC include: high connection density, small data volume, delay-insensitive services, low cost and long service life of modules, etc.

### radio resource control (RRC) state and mobility management

NR can also be deployed independently. In the 5G network environment, in order to reduce air interface signaling, quickly restore wireless connections, and quickly restore data services, a new RRC state is set, that is, RRC inactive state (RRC _ INACTIVE). This state is different from RRC idle state (RRC _ IDLE) and RRC active state (RRC_ACTIVE) states. These three states are introduced below

The RRC connected state may refer to a state in which the terminal device does not perform RRC release after completing the random access procedure. There is an RRC connection between the terminal device and the network device, such as an access network device. In the RRC connection state, the terminal device may perform data transmission with the network device, such as downlink data transmission and/or uplink data transmission. Optionally, the terminal device may transmit a data channel and/or a control channel specific to the terminal device with the network device to transmit specific information or unicast information of the terminal device.

In the RRC connection state, the network device may determine the location information of the terminal device at the cell level, that is, the network device may determine the cell to which the terminal device belongs. In the RRC connected state, after the location of the terminal device moves, such as moving from one cell to another, the network device can control the terminal device to perform cell handover. Thus, the mobility management of the terminal device in the RRC connected state may include cell handover. In addition, the mobility management of the terminal device in the RRC connected state may be controlled by the network device, and accordingly, the terminal device may switch to the designated cell in accordance with an instruction issued by the network device.

The RRC idle state refers to a state in which the terminal device camps on a cell but does not perform random access. The terminal device usually enters the RRC idle state after power-on or after RRC release. In the RRC idle state, there is no RRC connection between the terminal device and the network device (e.g., a camped network device), the network device does not store the context of the terminal device, and no connection for the terminal device is established between the network device and the core network. If the terminal device needs to enter the RRC connection state from the RRC idle state, it needs to initiate an RRC connection establishment procedure.

In the RRC idle state, the core network (CN) may send a paging message to the terminal device, that is, the paging procedure may be triggered by the CN. Optionally, the paging area may also be configured by the CN. In some cases, for a terminal device in an RRC idle state, the terminal device may initiate a cell reselection procedure after a location shift of the terminal device occurs (e.g., from one cell to another). In other cases, for a terminal device in an RRC idle state, the terminal device may initiate a cell selection procedure when the terminal device needs to access a cell. That is, the mobility management of the terminal device in the RRC idle state may include cell reselection and/or cell selection.

The RRC inactive state is a state defined for reducing air interface signaling, quickly restoring wireless connections and quickly restoring data services. The RRC inactive state is a state between the connected state and the idle state. The terminal device has previously entered the RRC connection state and then released the RRC connection with the network device, but the network device saves the context of the terminal device. In addition, the connection established between the network device and the core network for the terminal device is not released, that is, the user plane bearer and the control plane bearer between the RAN and the CN are still maintained, that is, there is a CN-NR connection.

In the RRC inactive state, the RAN may send a paging message to the terminal device, that is, the paging procedure may be triggered by the RAN. The RAN-based paging area is managed by the RAN, and the network device can know that the location of the terminal device is based on the RAN-based paging area level.

In some cases, for a terminal device in an RRC inactive state, the terminal device may initiate a cell reselection procedure after a location movement of the terminal device occurs (e.g., from one cell to another cell). In other cases, for a terminal device in the RRC inactive state, the terminal device may initiate a cell selection procedure when the terminal device needs to access a cell. That is, the mobility management of the terminal device in the RRC inactive state may include cell reselection and/or cell selection.

### Network energy saving

Energy consumption has become a significant component of operators' operating costs. According to the report of the global system for mobile communications association (GSMA), the energy cost of mobile networks accounts for about 23% of the total cost of operators. Most of the energy consumption comes from radio access networks, especially active antenna units (AAU), while data centers and optical fiber transmissions only account for a small share.

Among them, the power consumption mainly includes two kinds of dynamic part, such as consumption at the time of data transmission/reception, and static part, such as consumption to maintain necessary operation of the wireless access device (even if there is no continuous data transmission/reception at this time).

The research of network energy conservation should not only evaluate the potential network energy consumption benefits, but also evaluate and balance the impact on network and user performance. For example, this study should not have a particularly large impact on some key performance indicators (KPIs), such as: spectral efficiency, capacity, user-perceived throughput, latency, power consumption of end equipment, complexity, handover performance, call drop rate, initial access performance, etc.

In the RAN2 # 119 conference, the research directions to propose possible network energy savings are as follows.
solution groups:
   1. Adaptation of MIB/SSB/SIB of master information block (MIB)/synchronization signal block (SSB)/system information block (SIB);
      - part of SSB/simplified SSB;
   2. increase of SSB/SIB periodicity;
   3. On demand SSB/SIB1 (FFS if there are enhancements for other SIBs);
      - FFS for on-demand MIB;
   4. receiving SSB/SIB on one carrier/cell and performing access to another carrier/cell;
   5. handover/fast PCell change for NES of network edge services;
      - CHO or new configuration;
      - group HO;
   6. resource adaptation (frequency and time domain);
      - including a physical random access channel, a sounding reference signal (SRS), a physical uplink shared channel (PUSCH), a physical uplink control channel (PUCCH) resources and periodicities;
      - cell discontinuous transmission/reception (cell DTX/DRX);
      - measurement;
      - reference signal type and configuration of reference signal pattern for connected mode;
      - BWP adaptation;
   7. any Cell activation/re-activation or UE wake up request signal (connected/idle);
   8. paging enhancements (includes paging-less solutions);
   9. Cell selection/reselection (ie. cell priority also including legacy UEs).
things to study:
   1. study group configuration and signalling for transitions for different solutions;
      - pre-configuration and L1/L2 signaling to trigger change of configuration;
   2. identify/capture RAN2 impact to legacy for the different solutions;
   3. Understand the status of different solutions' network edge services at the UE side awareness of the NES states at the UE side for the different solutions;
   4. aim to minimize DL signalling for NES;
   5. considerer UE complexity and energy consumption;
   6. UE assistance information for the specific network energy technique, it's benefits and impact to UE/NW.

In order to realize network energy saving, an energy-saving cell, or a cell with energy-saving operating state, such as SSB-less cell, is proposed. For example, an energy-saving cell may achieve energy saving by reducing transmission of common signals, or may achieve energy saving by discontinuous transmission (DTX) and/or discontinuous reception (DRX).

The following is a brief introduction to the SSB-less cell.

### SSB-less cell

The SSB-less cell may refer to a cell that does not transmit some or all of the SSB, or may refer to a cell that does not transmit some or all of the other common signals.

In the related art, a secondary cell scell may be a cell that does not transmit an SSB, and this cell and a special cell sPcell (including a primary cell and a primary and secondary cell) or other scells may be cells in the system. As an SSB-less scell, the UE is synchronized with the sPcell or other scells according to the prior art.

The related content of Absolute Frequency SSB mentioned in the related art is as follows.

Frequency of the SSB to be used for this serving cell. SSB related parameters (e.g. SSB index) provided for a serving cell refer to this SSB frequency unless mentioned otherwise. The CD-SSB of the PCell is always on the sync raster. Frequencies are considered to be on the sync raster if they are also identifiable with a GSCN value (see TS 38.101-1 [15]). If the field is absent, the SSB related parameters should be absent, e.g. ssb-PositionsInBurst, ssb-periodicityServingCell and subcarrierSpacing in ServingCellConfigCommon IE. If the field is absent, the UE obtains timing reference from the SpCell or an SCell if applicable as described in TS 38.213 [13], clause 4.1. This is only supported in case the Cell for which the UE obtains the timing reference is in the same frequency band as the cell (i.e. the SpCell or the SCell, respectively) from which the UE obtains the timing reference.

For cells supporting RedCap, this field responds to the CD-SSB.

In R18, the network energy-saving project considers a scenario in which an intra-band method is extended to an inter-band method, that is, an SSB-less scell is a cell between a frequency band and a Pcell or another scell.

In R19, the SSB-less cell may be used as an Scell or an independently operating cell. However, it has not been proposed how SSB-less cells operate as independently operating cells.

It can be seen that the above-mentioned energy-saving community can save energy consumption, but how to realize the operation in the energy-saving community is an urgent problem to be solved.

In order to solve the above problems, an embodiment of the present disclosure provides a method for wireless communication, in which information (i.e., first information) associated with a first cell (such as an SSB-less cell) is received by a terminal device, and based on the information, the terminal device is helpful to realize the operation in the cell.

FIG. 2 is a schematic flow chart of a wireless communication method according to an embodiment of the present disclosure. The method illustrated in FIG. 2 may be applied to communication between the terminal device and the first cell. The first cell may be a cell that does not transmit part or all of the common signal, such as the aforementioned SSB-less cell. The common signal may include one or more of a synchronization signal block (SSB), a master information block (MIB), a system information block (SIB), a paging message, or system information content. The common signals mentioned here may include all system information content or part of the system information content, such as the MIB, and/or SIB1, and/or at least one of SIB2/3/4/5; or at least one information element (IE) in the MIB/SIB1/SIB2/3/4/5 information.

The first cell may be a cell that can be discovered independently or can operate independently. For example, the first cell may be independently discovered may mean that the first cell may be discovered or monitored by transmitting the first signal. For another example, the first cell may independently implement the communication process with the terminal device without using other cells. Here, the first signal may be a discovery signal, an SSB signal, a simplified SSB signal, a non-SSB signal, or the like.

The first cell may also be a cell that cannot be discovered independently or cannot operate independently. A cell that cannot be discovered independently may, for example, be discovered by means of other cells (hereinafter, other cells associated with the first cell will be referred to as second cells), or may be indicated by means of other cells, or communication with the terminal device may be realized. As an example, the terminal device may acquire information such as a time-frequency resource location and a random access configuration of the first cell through another cell, and may camp on/select/reselect the first cell based on the acquired information, or realize communication with the first cell. For another example, the terminal device may obtain the existence of the first cell through another cell, thereby acquiring information of the first cell through the request information of the terminal device in the other cell or the first cell, and then camping on/selecting/reselecting to the first cell, or realizing communication with the first cell. For another example, a cell that cannot be independently discovered may transmit information such as a first signal (such as a discovery signal, etc.) at the request of another cell, so that the terminal device can camp on/select/reselect the first cell based on the discovery signal, or realize communication with the first cell.

Referring to FIG. 2, the method 200 may include step S201. Hereinafter, the method will be described from the perspective of interaction between the terminal device, the first cell, and the second cell.

In step S201, the terminal device receives the first information. Optionally, the first cell transmits the first information to the terminal device, and/or the second cell transmits the first information to the terminal device.

The first information may be associated with the first cell. The first information may be used for one or more of: indicating a first cell and/or second information; identifying a first cell; synchronizing with the first cell; or providing information of the first cell.

In some embodiments, the first information may be used to identify a first cell. For example, the terminal device may discover the first cell through the first information, identify the first cell, or measure the first cell. As one example, the first information may be the first signal described above.

In some embodiments, the first information may be used to indicate second information, wherein the second information includes information associated with the first cell. For example, the first information may include the second information, or the first information may indicate a location of the second information.

In other embodiments, the first information does not include the second information, or the second information is acquired after the first information is acquired. As an example, the second information may be acquired by the first cell, or may be acquired by another cell.

As one example, the second information may include one or more of: time-frequency resources of the first cell; a preamble of the first cell; random access channel (RACH) configuration information of the first cell; physical random access channel (PRACH) configuration information of the first cell; a time-frequency resource for transmitting the first request information; a paging configuration or time-frequency resource of the first cell; part or all of the common information of the first cell; or configuration information of the first request information. The first request information is a request message for the first cell. The first request information may be used to request transmission or acquisition of one or more common signals of the first cell, or may be used to request execution of a transition of an operation mode or an operation state of the first cell. The first request information will be described in detail later, and will not be repeatedly described here for the sake of brevity.

Based on the second information, it is helpful for the terminal device to perform random access in the first cell and acquire relevant information of the first cell.

In some embodiments, the first information may be used to synchronize with the first cell. For example, the first information may be a synchronization signal SSB of the first cell, or may be a simplified SSB signal. As another example, the first information may include a timing advance amount of the first cell.

In some embodiments, the first information may be used to identify the first cell, or to learn the presence of the first cell. For example, the first information may be a discovery signal of the first cell, a synchronization signal SSB, a TRS, or a simplified SSB signal.

In some embodiments, the first information may be used to learn from which cell the information of the first cell is learned. For example, the first information carries an association relationship between the first cell and other cells, or the first information informs from which frequency point/cell the information of the first cell is acquired.

In some embodiments, the first information may be used to provide information for the first cell. For example, the first information may be used to provide a time-frequency resource location associated with the first cell. As an example, the time-frequency resource location may include the time-frequency resource location of the second information, or a request message may be transmitted to the first cell, such as the time-frequency resource location of the first request information, or a resource of the RACH/PRACH of the first cell. The time-frequency resource location at which the request message is transmitted may be used to request relevant information of the first cell and/or to request the first cell to perform certain actions.

In some embodiments, the first information may be acquired from a first cell or from a second cell, wherein the second cell is a cell associated with the first cell. For example, the second cell may be a primary cell of the terminal device, an anchor cell, a cell that provides first cell information, a cell that controls or indicates the first cell, a cell that receives a request from the terminal device for the first cell, or a cell that communicates with the terminal device before the terminal device accesses the first cell.

Based on the first information associated with the first cell, the terminal device may identify the first cell, acquire information of the first cell, synchronize with the first cell, access the first cell, and the like, thereby facilitating communication between the terminal device and the first cell.

In some embodiments, based on the first information, the terminal device may perform one or more of: acquiring a time-frequency resource location of the second information; transmitting first request information; identifying a first cell; performing measurements; performing cell selection or reselection; camping; downlink synchronization with the first cell; performing a random access channel (RACH) procedure in the first cell; receiving a paging message in a first cell; accessing a first cell; determining whether to camp on the first cell; determining whether to perform cell selection; determining whether to perform cell reselection; determining whether to perform a cell handover; determining whether to perform cell redirection; determining whether to select to a first cell; determining whether to reselect the first cell; determining whether to handover to a first cell; determining whether to redirect to a first cell; or determining whether to use the first cell as a secondary cell; wherein the first request information is associated with the first cell.

As described above, if the second information is included in the first information, the terminal device may acquire the second information based on the first information. If the first information does not include the second information, the terminal device may acquire the time-frequency resource location of the second information based on the first information, and may further acquire the second information based on the time-frequency resource location of the second information. If the first information does not include the second information, the terminal device may acquire the second information according to the predefined time-frequency resource information after acquiring the first information, or transmit the first request message.

In some embodiments, the terminal device may transmit the first request information. For example, the terminal device may transmit the first request information to the first cell. As described above, in a case where the first cell is a cell that cannot be independently discovered/operated, or as described above, in a case where the first cell is a cell that can be independently discovered/operated, the terminal device may transmit the first request information to the first cell. As another example, the terminal device may transmit the first request information to the second cell. As described above, in a case where the first cell is a cell that cannot be independently discovered/operated, or as described above, in a case where the first cell is a cell that can be independently discovered/operated, the terminal device may transmit the first request information to the second cell.

The first request information is associated with the first cell, and for example, the first request information may be used to request information associated with the first cell. For example, the first request information may be used to request transmission or acquisition of one or more common signals of the first cell, or may be used to request the first cell to perform certain actions, such as transition of an operation mode or an operation state. For example, the first request information may be used to request other cells to control the action of the first cell, or to forward a request message such that a requesting device (such as a UE) acquires one or more common signals of the first cell.

In some cases, the terminal device may transmit the first request information to the first cell for requesting information associated with the first cell and/or requesting the first cell to perform certain actions, such as transition of an operating mode or an operating state. In other cases, the terminal device may transmit the first request information to the second cell for requesting acquisition of information associated with the first cell. For example, the terminal device may receive information associated with the first cell from the second cell. For another example, the terminal device may receive information associated with the first cell from the first cell, and before that, the second cell may transmit third request information to the first cell, and the third request information is associated with the first request information. If the first request message transmitted by the terminal device to the second cell is used to request the first cell to perform certain actions, the second cell may transmit third request information to the first cell for requesting the first cell to perform certain actions. As an example, the third request information may be the same as the content of the first request information, or may include a part of the content of the first request information. Optionally, the third request information is realized by interaction between base stations or interaction between core networks. Optionally, the interface involved in the interaction may be N2, Xn, or the like.

In some embodiments, the first request information is used to request transmission or acquisition of one or more common signals of the first cell, and may include a variety of cases. For example, the first request information may be used to request transmission or acquisition of a specific common signal or a plurality of common signals of the first cell, or may request transmission or acquisition of one or more common signals not transmitted, broadcasted, or provided by the first cell. For another example, the first request information may be used to request transmission or acquisition of part or all of the system information/system information content of the first cell, or may request transmission or acquisition of part or all of the system information/system information content that are not transmitted, broadcasted, or provided by the first cell.

The transition of the operation mode or the operation state of the first cell may include one or more of: a transition between an energy-saving mode and a non-energy-saving mode; a transition between a state in which part or all of the common signal is not transmitted and a normal operating state; a transition between a state in which one or more common signals are not transmitted, broadcasted or provided and a normal operating state; a transition between a state in which part or all of the system information/system information content are not transmitted and a normal operating state; a transition between a state in which part or all of the system information/system information content is not transmitted, not broadcasted, or not provided and a normal operating state; or a transition between a state in which part or all of the common signal is not transmitted and a state in which part or all of the common signal is transmitted; the normal operation state is a normal transmission state, a state in which all common signals are transmitted, or a state in which minimum system information (MSI) is transmitted.

In some embodiments, the terminal device may identify the first cell based on the first information. For example, when the terminal device may acquire the cell identifier of the first cell based on the first information.

In some embodiments, the terminal device may perform the measurement based on the first information. For example, the terminal device may measure the signal quality of the first information to determine a decision associated with the first cell.

In some embodiments, the terminal device may perform cell selection or reselection based on the first information. For example, if the measurement result of the first information satisfies certain conditions, such as S and/or R criteria, or is greater than or equal to the first threshold, the terminal device selects or reselects to the first cell.

In some embodiments, the terminal device may perform cell selection or reselection based on first information and/or other information, such as second information, information requested by the first request information, all or part of the common signal of the first cell, or information of other cells. For example, if the measurement result of the first information and the indication of other information satisfy certain conditions, the terminal device selects or reselects to the first cell.

In some embodiments, the terminal device may camp based on the first information. For example, when the current serving cell of the terminal device is the first cell, the terminal device may camp on the first cell when the measurement result of the first information is greater than or equal to the first threshold. For another example, the current serving cell of the terminal device is not the first cell, and when the measurement result of the first information is less than or equal to the seventh threshold, the terminal device camps on the current serving cell.

In some embodiments, the terminal device may camp based on first information and/or other information, such as second information, information requested by the first request information, all or part of the common signal of the first cell, or information of other cells. For example, when the current serving cell of the terminal device is the first cell, the terminal device may camp on the first cell when the measurement result of the first information and the indication of other information satisfy certain conditions. For another example, the current serving cell of the terminal device is not the first cell, and when the measurement result of the first information and the indication of other information satisfy certain conditions, the terminal device camps on the current serving cell.

In some embodiments, the terminal device may perform downlink synchronization with the first cell based on the first information. For example, the terminal device may perform downlink synchronization with the first cell based on the first information. For example, the terminal device may perform downlink synchronization with the first cell based on information such as the SFN indicated by the first information.

In some embodiments, the terminal device may perform uplink synchronization with the first cell based on the first information. For example, the terminal device may perform uplink synchronization with the first cell based on the random access configuration of the first cell included or indicated by the first information.

In some embodiments, the terminal device may perform uplink synchronization with the first cell based on the first information and/or other information, such as second information, information requested by the first request information, all or part of a common signal of the first cell, or information of other cells. For example, the terminal device may perform uplink synchronization with the first cell based on the first information and other information.

In some embodiments, the terminal device may perform uplink synchronization with the first cell based on the first information. For example, the first information includes or indicates a difference between the timing advance amount of the second cell and the timing advance amount of the first cell, and the terminal device may perform synchronization with the first cell based on the timing advance amount of the second cell and the difference between the timing advance amount of the second cell and the timing advance amount of the first cell.

In some embodiments, the terminal device may perform uplink synchronization with the first cell based on the first information and/or other information, such as second information, information requested by the first request information, all or part of a common signal of the first cell, or information of other cells. For example, based on the difference between the timing advance amount of the second cell and the timing advance amount of the first cell included or indicated in the first information and/or other information, the terminal device may perform synchronization with the first cell based on the timing advance amount of the second cell and the difference between the timing advance amount of the second cell and the timing advance amount of the first cell.

In some embodiments, the terminal device may perform a random access channel RACH procedure in the first cell based on the first information. For example, the terminal device may perform the random access procedure in the first cell based on the configuration of the random access channel of the first cell included or indicated by the first information.

In some embodiments, the terminal device may perform a random access channel RACH procedure in the first cell based on the first information and/or other information (such as second information, information requested by the first request information, all or part of a common signal of the first cell, or information of other cells). For example, the terminal device may perform the random access procedure in the first cell based on the configuration of the random access channel of the first cell included or indicated by the first information and/or the second information.

In some embodiments, the terminal device may receive a paging message in the first cell based on the first information. That is, the first cell may send a paging message (e.g., the first information may include a paging message), and the terminal device may receive the paging message in the first cell.

In some embodiments, the terminal device may receive a paging message in the first cell based on the first information and/or other information, such as second information, information requested by the first request information, all or part of a common signal of the first cell, or information of other cells. That is, the first cell may send a paging message (e.g., the first information and/or other information may include a paging message), and the terminal device may receive the paging message in the first cell.

In some embodiments, the terminal device may access the first cell based on the first information.

In some embodiments, the terminal device may access the first cell based on the first information and/or other information (such as second information, information requested by the first request information, all or part of a common signal of the first cell, or information of other cells).

In some embodiments, the terminal device may determine whether to camp on the first cell based on the first information; determining whether to perform cell selection; determining whether to perform cell reselection; determining whether to perform a cell handover; determining whether to perform cell redirection; determining whether to select to a first cell; determining whether to reselect the first cell; determining whether to handover to a first cell; determining whether to redirect to a first cell; and determining whether to use the first cell as a secondary cell.

In some embodiments, the terminal device may determine whether to camp on the first cell based on the first information and/or other information (such as second information, information requested by the first request information, all or part of a common signal of the first cell, or information of other cells); determining whether to perform cell selection; determining whether to perform cell reselection; determining whether to perform a cell handover; determining whether to perform cell redirection; determining whether to select to a first cell; determining whether to reselect the first cell; determining whether to handover to a first cell; determining whether to redirect to a first cell; and determining whether to use the first cell as a secondary cell.

If the first cell is a current serving cell of the terminal device, it may be determined whether to camp on the first cell based on the first information.

If the first cell is a current serving cell of the terminal device, it may be determined whether to camp on the first cell based on the first information and/or other information (such as second information, information requested by the first request information, all or part of the common signal of the first cell, or information of other cells).

If the terminal device is in the idle state, it may be determined whether to select the first cell or whether to reselect the first cell based on the first information.

If the terminal device is in the idle state, it may determine whether to select the first cell, or whether to reselect the first cell, based on the first information and/or other information, such as second information, information requested by the first request information, all or part of the common signal of the first cell, or information of other cells.

If the current serving cell of the terminal device is not the first cell and the terminal device is in the connected state, the terminal device may determine whether to switch to the first cell, whether to redirect the first cell, or whether to use the first cell as a secondary cell based on the first information.

If the current serving cell of the terminal device is not the first cell, and the terminal device is in the connected state, the terminal device may determine whether to switch to the first cell, whether to redirect the first cell, or whether to use the first cell as a secondary cell based on the first information and/or other information (such as second information, information requested by the first request information, all or part of the common signal of the first cell, or information of the other cell).

In some embodiments, the terminal device may determine whether to camp on, select, reselect, handover, redirect, or access the first cell based on one or more of the following information; whether to receive paging in the first cell; whether to perform a RACH procedure in the first cell; or determine which cell/frequency point to camp on, select, reselect, handover, redirect, receive paging, perform RACH procedure or access (the above plurality of behaviors may be the first behavior): whether the first information is detected; whether the second information is acquired; whether the time-frequency resource location of the second information is acquired; whether it is able to transmit the first request information; a measurement result of the first information; a measurement result of the second cell; a comparison result of the measurement result of the first information with the measurement result of the second cell; data to be transmitted; R criterion; S criterion; whether the terminal device supports carrier aggregation (CA) and/or dual connectivity (DC); slice information of the terminal device; and support of the first cell and/or the second cell for the network slice.

In some embodiments, the terminal device may measure or detect the first information. The terminal device may determine whether or not to perform the first action based on whether or not the first information is detected.

In some embodiments, the terminal device may determine whether to perform the first action based on whether the second information is acquired. If the terminal device obtains the second information, the terminal device may perform the first action; if the terminal device acquires the second information, the first action is not performed. For example, if the second information is acquired, the terminal device may perform a random access procedure in the first cell, or paging, or transmit a first request message.

In some embodiments, the terminal device may determine whether to perform the first action based on whether the first information and the second information are acquired. If the terminal device acquires the first information and the second information, the terminal device may perform the first action; if at least one of the first information or the second information is acquired by the terminal device, the first action is not performed. For example, if the second information is acquired, the terminal device may perform a random access procedure in the first cell, or paging, or transmit a first request message.

In some embodiments, the terminal device may determine whether to perform the first action based on whether the time-frequency resource location of the second information is acquired. For example, in a case where the second information is not acquired, or in a case where the second information is not included in the first information, the terminal device may determine whether or not to perform the first action based on whether or not the time-frequency resource location of the second information is acquired.

In some embodiments, the terminal device may determine whether to perform the first action based on whether there is a time-frequency resource location of the predefined second information. For example, when there is no predefined time-frequency resource location, the terminal device determines whether to perform the first behavior.

In some embodiments, in the case of acquiring the first information, the terminal device acquires the second information. The first information and the second information mentioned herein are independent, that is, the first information does not indicate or include the second information.

In some embodiments, the terminal device may determine whether to perform the first action based on whether it is able to transmit the first request information. If the first request information can be transmitted, the terminal device can perform the first action; if the first request information cannot be transmitted, the terminal device may not perform the first action. In some cases, the terminal device may determine whether one or more of the following information can camp on the first cell based on the request result of the first request information; whether it is able to select the first cell; whether the first cell can be re-selected; whether to perform a RACH procedure in the first cell; whether to receive paging in the first cell; whether to handover to a first cell; whether to establish a connection or operation in the first cell; and whether it whether to redirect to the first cell.

In some embodiments, after acquiring at least one of the SSB or SIB of the first cell, the terminal device may determine whether to camp on the first cell, reselect the first cell, or select the first cell. For example, at least one item of the SSB/SIB of the first cell may be acquired from the first cell, that is, the first cell transmits at least one item of the SSB/SIB. For example, if at least one of the SSB or SIB of the first cell allows the UE to access, camp on, select/reselect the first cell, the first cell may camp on, reselect the first cell, or select the first cell. For example, if at least one of the SSB or SIB of the first cell does not allow the UE to access, camp on, select/reselect the first cell, the UE may not camp on, reselect the first cell, or select the first cell for a certain duration.

If the first cell does not transmit the SSB/SIB/paging, at least one of the SSB, SIB or paging may be obtained from the first cell and/or from the second cell through the first request information or other messages. As an example, the terminal device may directly request the first cell to transmit at least one item of SSB/SIB/paging, or request the first cell to transmit at least one item of SSB/SIB/paging through the second cell, such as the second cell instructs the first cell to transmit at least one item of SSB/SIB/paging through an interface such as Xn/N2. As another example, the terminal device may request the second cell to transmit at least one of SSB, SIB or paging of the first cell.

In some embodiments, the terminal device may determine whether to perform the first action based on the measurement result of the first information.

For example, if the measurement result of the first information is greater than or equal to the first threshold, the terminal device camps on, selects or reselects the first cell. Optionally, it is further determined whether to access, select, reselect, and camp on the first cell based on or performing a final check, or based on some or all of the common signals (e.g., of the first cell and/or other cells). The measurement result of the first information may include one or more of a reference signal received power (RSRP), a reference signal received quality (RSRQ), or a received signal strength indication (RSSI).

When the measurement result of the first information is compared with the threshold, the comparison may be performed directly based on the measurement result of the first information, or the comparison may be performed after the measurement result of the first information is corrected. For example, if the first threshold employs a threshold for a normal SSB signal, and the measurement of the first signal is a measurement of a simplified SSB or a discovery signal, then the measurement of the first signal is corrected.

For another example, if the measurement result of the first information satisfies the S criterion or the cell selection criterion, the terminal device selects the first cell. Optionally, it is further determined whether to select a first cell according to or performing a final check, or from some or all of the common signals, such as those of the first cell and/or other cells.

For another example, the terminal device reselects the first cell if the measurement result of the first information satisfies one or more of: R criterion; S criterion; or cell reselection criteria. Optionally, whether to re-select the first cell is further determined based on or performing a final check, or based on some or all of the common signals (e.g., of the first cell and/or other cells).

In some embodiments, the terminal device may determine whether to perform the first action based on the measurement result of the second cell. For example, the terminal device may determine whether to perform the first action based on the measurement result of the first information and the measurement result of the second cell. Wherein the measurement result of the second cell may include measurements of one or more of a discovery signal, an SSB signal, a tracking reference signal, a simplified SSB signal, or a non-SSB signal.

As an example, if the measurement result of the first information is greater than or equal to the third threshold and the measurement result of the second cell is less than or equal to the fourth threshold, the terminal device may camp on, select, or reselect the first cell. Optionally, it is further determined whether to access, select, reselect, and camp on the first cell based on a final check, or based on some or all of the common signals (e.g., of the first cell and/or other cells).

As another example, the terminal device may determine whether to perform the first action based on a comparison result of the measurement result of the first information and the measurement result of the second cell. If the comparison result of the measurement result of the first information and the measurement result of the second cell is greater than or equal to the second threshold, the terminal device may camp on, select, or reselect the first cell. Optionally, it is further determined whether to access, select, reselect, and camp on the first cell based on a final check, or based on some or all of the common signals (e.g., of the first cell and/or other cells).

If the measurement result of the first information and the measurement result of the second cell are measurement results of the same signal, for example, both of them are normal SSB signals, the comparison result may be determined based on the measurement result of the first information and the measurement result of the second cell, that is, the measurement result of the first information and the measurement result of the second cell may be directly compared to obtain the comparison result.

If the measurement result of the first information and the measurement result of the second cell are measurement results of different signals, for example, the measurement result of the first information is a measurement result of a simplified SSB signal and the measurement result of the second cell is a measurement result of a normal SSB signal, the comparison result may be determined based on the correction result associated with the measurement result of the first information and the measurement result of the second cell, that is, the measurement result needs to be corrected before the comparison result is acquired. For example, the correction result associated with the measurement result of the first information may be a result obtained by correction or variation (e.g., a certain change) of the measurement result of the first information.

In some embodiments, the terminal device may determine whether to perform the first action based on data to be transmitted. For example, if there is data to be transmitted, the terminal device camps on, selects or reselects the first cell. For another example, if the terminal device has data to be transmitted, and the amount of data to be transmitted is greater than or equal to the fourth threshold, the terminal device camps on, selects or reselects the first cell. Whether there is data to be transmitted can be determined according to the information of data to be transmitted of the logical channel or the service request information.

In some embodiments, the terminal device may determine whether to perform the first action based on the slice information of the terminal device and the support of the first cell and/or the second cell for the network slice. For example, if a slice supported by the first cell is the same as a slice required by the terminal device, or if the slice supported by the first cell includes the slice required by the terminal device, the terminal device camps on, selects or reselects the first cell. For another example, if the slice supported by the first cell is different from the slice required by the terminal device, or the slice supported by the first cell does not contain, does not match, or does not support the slice required by the terminal device, the terminal device does not select or reselect the first cell, or the terminal device selects or reselect to another cell.

In some embodiments, the terminal device may determine whether to perform the first action based on whether the terminal device supports carrier aggregation (CA) and/or dual-connectivity (DC). For example, if the terminal device supports CA/DC, when the terminal device accesses the first cell, the first cell is a secondary cell of the terminal device.

In some embodiments, if the measurement result of the current serving cell of the terminal device is less than or equal to the third threshold, such as when the signal quality of the current serving cell is poor, the terminal device camps on, selects or reselects the first cell.

In some embodiments, the terminal device may send a measurement report to the current serving cell, and the measurement report is used to indicate the channel quality of the first cell. For example, if the measurement result of the first information is greater than or equal to the first threshold, the terminal device transmits a measurement report to the current serving cell.

If the second cell is a current serving cell of the terminal device, the terminal device receives first indication information transmitted by the second cell, wherein the first indication information may be determined based on the measurement report, and the first indication information may be used to indicate the terminal device to handover or redirect to the first cell, or that the terminal device transmits simultaneously with the first cell and the second cell.

For example, if the terminal device has CA/DC capability, the first indication information is used to indicate that the first cell is used as the secondary cell of the terminal device, and the terminal device transmits simultaneously with the first cell and the second cell. As one example, the second cell may activate the first cell as a secondary cell of the terminal device by transmitting a secondary cell activation indication, such as a secondary cell activation medium access control control element (MAC CE). Optionally, the second cell or the current label of the terminal device may add the first cell as the secondary cell of the terminal device.

For another example, if the terminal device does not have CA/DC capability, the first indication information is used to indicate the terminal device to handover or redirect to the first cell.

In some embodiments, if the network edge node cell can be a potential candidate cell, the terminal device may transmit the first request signal to determine whether the cell can be accessed. Optionally, the first request signal may be an uplink wake up signal (WUS).

In some embodiments, the terminal device performs a random access procedure with the first cell when one or more of the following conditions are satisfied: the first cell is a camping cell; the first cell is a cell selected by the cell; the first cell is a cell of cell reselection; the channel quality of the first cell is greater than or equal to a fifth threshold; the terminal device has data to be transmitted; the amount of data to be transmitted is greater than or equal to a sixth threshold; the slice supported by the first cell is the same as the slice required by the terminal device; or the slice supported by the first cell includes a slice required by the terminal device.

For example, if the terminal device is in an idle state or an inactive state, and the first cell is a cell selected by a cell, the first cell is a cell reselected by a cell, or the channel quality of the first cell is greater than or equal to a fifth threshold, the terminal device performs a random access procedure with the first cell.

For another example, if the terminal device is in a connected state (the current serving cell is the second cell), and the data to be transmitted or the amount of data to be transmitted by the terminal device is greater than or equal to the sixth threshold, the terminal device may perform a random access procedure with the first cell. As one example, the terminal device may access the first cell as a secondary cell.

In some embodiments, the terminal device performs a random access procedure with the first cell or performs synchronization with the first cell based on the RACH configuration information of the first cell. For example, when one or more of the above conditions are satisfied, the terminal device performs a random access procedure with the first cell or performs synchronization with the first cell.

When the terminal device transmits the first request information or accesses the first cell, the terminal device may receive a physical downlink control channel (PDCCH) in the first cell and/or perform transmission with the first cell.

However, in general, there may be a certain delay when the first cell receives the first request information or the access information transmitted by the terminal device, and there may be a certain delay when the first cell responds to the first request information or the access information transmitted by the terminal device. Therefore, after the terminal device transmits the first request information or accesses the first cell for a first duration, the terminal device may receive the PDCCH in the first cell and/or perform transmission with the first cell. By setting the first duration, it is helpful to avoid invalid reception by the terminal device, thereby helping to save energy consumption.

In some embodiments, the terminal device may receive the PDCCH in the first cell and/or perform transmission with the first cell.

However, in some cases, for example, when there is a time limit in data transmission, a length limit of data, a length limit of resources, and a time limit in transmission of the common signal of the first cell, the terminal device cannot always operate in the first cell. Accordingly, within the second duration, the terminal device may receive the PDCCH in the first cell and/or perform transmission with the first cell.

After the second duration, the terminal device may fall back to the second cell, or transmit with the second cell.

Wherein the value of the second duration may be determined based on one or more of the above-described several cases. For example, when the transmission resource of the first cell acquired by the terminal device from the second cell has no available transmission resource, or when the transmission is completed, the terminal device may fall back to the second cell. In this case, the value of the second duration may be determined based on the length of the transmission resource, or may be determined based on the transmission duration required for the data to be transmitted.

The starting location or starting point of the second duration may be set according to demand, or may be preconfigured. For example, the starting location or starting point of the second duration may be at the end location of the first duration. As another example, the starting point of the second duration may be a time when the terminal device transmits the first request, accesses the first cell, or succeeds in random access with the first cell.

In some embodiments, the terminal device may perform transmission with the first cell and/or the second cell in a time division multiplexing (TDM), or the terminal device may alternately perform transmission with the first cell and the second cell.

In other embodiments, after the second duration, the terminal device may perform transmission with the first cell and/or the second cell in a TDM. Optionally, after the second duration, the terminal device may alternately perform transmissions with the first cell and the second cell.

In some embodiments, after the terminal device fallback to the second cell, or the terminal device may perform one or more of the following through the second cell: updating information of the first cell; updating system information of the first cell; updating TA information of the first cell; receiving paging in a second cell; determining a paging message that is not supported by the first cell; acquiring update information of a transmission resource configuration with the first cell; or performing transmission with the second cell.

The first cell may or may not transmit a paging message.

If the first cell transmits the paging message, the terminal device may acquire the paging message from the first cell. In some embodiments, the location of the paging message may satisfy one or more of the following requirements: associate with the location of the first information; associated with a location of the second information; positions that occur periodically; or an effective location interval.

For example, the location of the paging message may be configured to have a fixed interval, or a fixed relationship, with the first information or the second information. As another example, the paging message location may occur periodically. For another example, there is a valid location interval and an invalid location interval in the location of a paging message, such as an on/off law, that is, only in the valid location interval does a paging message exist. As an example, the paging message in the effective location interval may satisfy a fixed interval or a fixed relationship with the first information or the second information, or may occur periodically. As another example, paging messages within the valid location interval may not satisfy the above requirements.

In some embodiments, the terminal device may monitor at all paging message locations, that is, the terminal device monitors the paging message at a time of time regardless of the identification of the terminal device.

If the first cell does not transmit the paging message, the terminal device may acquire the paging message from the second cell. For example, the terminal device may receive a paging message for the second cell from the second cell or a paging message for the first cell from the second cell.

It should be noted that if the first cell receives the request message or the state of the first cell transitions, such as transitions to the normal operating state, the first cell uses a conventional paging configuration or monitoring mechanism, that is, the paging configuration is a periodic configuration, and the monitoring location of the paging message is related to the identification of the terminal device.

In some cases, the terminal device cannot directly acquire the first information, and needs to transmit indication information to acquire the first information. For example, before the terminal device receives the first information, the terminal device may transmit second indication information, and the second indication information may be used to indicate the first cell or the second cell to transmit the first information. For another example, after receiving the second indication information, the second cell may further transmit third indication information to the first cell, and the third indication information may be used to indicate the first cell to transmit the first information.

The resource for transmitting the second indication information or the third indication information may be a predefined resource or a resource of the second cell.

In order to detect or measure the first signal, the terminal device needs to acquire the configuration or time-frequency resource location of the first signal. Therefore, as an implementation, before the terminal device receives the first information, the terminal device may receive the third information transmitted by the second cell, and the third information may be used to indicate a configuration of the first information and/or a time-frequency resource location.

In some embodiments, the first information may be used to indicate a cell associated with the first cell, a cell synchronized with the first cell, or an anchor cell of the first cell.

It should be noted that the method provided by the embodiment of the present disclosure can be applied to a terminal device in at least one of an idle state, an inactive state, or a connected state.

How to operate in an energy-saving cell (i.e., a first cell) that does not transmit part or all of the common signal has been described above, and how to operate in an energy-saving cell configured with a cell-level DTX/DRX mechanism will be described below.

FIG. 3 is a schematic flow chart of a wireless communication method according to another embodiment of the present disclosure. The method 300 shown in FIG. 3 may include step S310. The method will be described below from the perspective of interaction between the terminal device and the network device.

In step S310, the terminal receives the fourth information and/or the fifth information transmitted by the network device. Optionally, the network device transmits the fourth information and/or the fifth information to the terminal device. Wherein, the network device is a network device corresponding to the third cell.

The fourth information may be used to indicate configuration information of DTX/DRX of the third cell. The configuration information may be applied to at least one of a terminal device in an idle state, an inactive state, or a connected state.

In some embodiments, the above configuration information may be notified to the terminal device or the third cell through normal RRC signaling or system information.

In some embodiments, the fourth information, that is, the configuration information of DTX/DRX of the third cell, may be indicated in the dedicated RRC message. Optionally, the dedicated RRC message may be a group message or a terminal device-specific (UE-specific) RRC message.

In some embodiments, the fourth information may be updated by a system information update procedure or indication information carried by dedicated downlink control information (DCI) signaling. For example, the update may be performed using indication information carried by the DCI of a specific radio network temporary identifier (RNTI).

In some embodiments, the fourth information may also be used to indicate activation/deactivation of the configuration information of DTX/DRX. For example, if the fourth information includes configuration information of DTX/DRX of the third cell, the fourth information represents or indicates that the configuration information of DTX/DRX is activated; if the fourth information does not include the configuration information of DTX/DRX of the third cell, the fourth information represents or indicates that the configuration information of DTX/DRX is deactivated. As another example, the fourth information may include a first identifier, and the first identifier may be used to indicate activation/deactivation of the configuration information of DTX/DRX of the third cell. For another example, the fourth information may be used for configuration information of DTX/DRX indicating immediate activation or deactivation of the third cell.

In some instances, the fourth information may also indicate that there is no fifth information; or the fourth information may indicate that the fifth information is not used; or fourth information may be used to indicate that the fifth information is not available or is not needed. That is, the fourth information may indicate that separate activation/deactivation information is not used to indicate that the configuration information of DTX/DRX of the third cell is activated/deactivated.

In some embodiments, the configuration of DTX/DRX of the fourth information configuration needs to be used with an activation/deactivation indication. For example, the configuration of DTX/DRX of the fourth information configuration determines whether to activate or deactivate based on the fifth information.

In other embodiments, the configuration information of DTX/DRX for activating/deactivating the third cell may be indicated by independent activation information, such as fifth information. For example, the fifth information may be used to indicate activation/deactivation of one set of the plurality of sets of configuration information, or may be used to indicate activation/deactivation of one set of configuration information. For example, the fifth information may be used to indicate to activate/deactivate a DTX/DRX configuration (without indicating which one, e.g., there is only one set of DTX/DRX configurations).

The configuration information of DTX/DRX of the third cell may be one or more sets of configuration information. The third cell may activate or use only one set of configuration information, or may simultaneously activate or use a plurality of sets of configuration information. For example, different configuration information is used simultaneously or superimposed. As another example, the same configuration information is activated or used for different terminal devices. For another example, different configuration information is activated or used for different terminal devices. Optionally (but not limited to), the same or different terminal devices mentioned herein may be determined based on a network indication, or may refer to different or identical types, quality of service requirements, and RRC states of the terminal devices.

The fourth information is configuration information of DTX/DRX of the third cell. Optionally, the configuration may be configuration information of DTX/DRX for some UEs of the third cell or configuration information of DTX/DRX for a base station of the third cell.

If the terminal device receives a plurality of pieces of indication information to activate/deactivate the configuration of DTX/DRX, the terminal device may determine the indication information to be used according to one or more of the following information: a transmission or reception time of the plurality of pieces of indication information; a priority of activation/deactivation indication information of the configuration information of DTX/DRX; priority of configuration information of DTX/DRX; type of configuration information of DTX/DRX activation/deactivation indication information; the duration of use of configuration information of DTX/DRX; or a usage duration of the configuration information of DTX/DRX used by the terminal device before receiving the plurality of pieces of indication information.

In some embodiments, indication information of a plurality of activation/deactivation DTX/DRX configurations received by the terminal device is carried in one or more of the following signaling: common RRC, SIB, system information, dedicated RRC, UE-specific RRC, dedicated MAC CE, common DCI, or UE-specific DCI.

In some embodiments, the terminal device may activate or deactivate the configuration information of DTX/DRX according to the latest indication information.

In some embodiments, the terminal device may determine the DTX/DRX to be used or activated according to the priority of activating or deactivating DTX/DRX signaling, or the priority of configuration information of DTX/DRX. The priority mentioned herein may be, for example, default (e.g., dedicated signaling is higher than common signaling, or UE-specific signaling is higher than common signaling, or UE-specific signaling is higher than other dedicated signaling), or may be network-indicated or predefined.

For example, among the terminal device-specific RRC signaling, the dedicated RRC signaling, the dedicated DCI signaling, and the activation/deactivation indication information of the configuration information of DTX/DRX carried in the dedicated MAC CE, the terminal device considers that the activation/deactivation indication information of the configuration information of DTX/DRX carried by the specific RRC signaling has the highest priority. If the activation/deactivation indication information of the configuration information of DTX/DRX is carried in the specific RRC signaling, the dedicated RRC signaling, the dedicated DCI signaling, and the dedicated MAC CE of the terminal device, the terminal device may activate/deactivate the configuration information of DTX/DRX according to the indication information carried by the specific RRC signaling.

For another example, if the configuration information of DTX/DRX of the third cell is carried in both the system information (or the common RRC) and the dedicated RRC, the terminal device prioritizes or uses the configuration of DTX/DRX of the third cell carried by the dedicated RRC.

It should be noted that the default priority order given above is merely an example, and the default priority order may be in the reverse order, and the present disclosure does not limit this.

In some embodiments, the terminal device may determine the configuration of DTX/DRX used or activated according to the type of activation or deactivation of DTX/DRX signaling, or the type of DTX/DRX configuration. For example, the terminal device may determine the configuration of DTX/DRX to be used or activated using indication information carried in dedicated signaling (e.g., dedicated RRC, UE-specific RRC, dedicated MAC CE, common DCI, or UE-specific DCI). As another example, the UE determines the configuration of DTX/DRX to be used or activated in accordance with an indication of UE-specific signaling (e.g., UE-specific RRC, or dedicated MAC CE, or UE-specific DCI).

In some embodiments, the terminal device may determine which DTX/DRX to be used or activated in accordance with a network instruction which DTX/DRX to be used, or which activation or deactivation signaling to be used.

In some embodiments, before receiving the plurality of pieces of indication information, the terminal device activates/deactivates the configuration information of DTX/DRX according to the latest indication information after the third duration of the configuration information of DTX/DRX used or transmitted by the terminal device, or the indication information may be updated. The latest indication information mentioned here may be received within the third duration or may be received after the third duration.

If the terminal device receives a plurality of pieces of indication information for activation/deactivation of the configuration of DTX/DRX, the terminal device may execute each of the plurality of pieces of indication information, activate/deactivate the configuration information corresponding to each indication information, or maintain the activation/deactivation state of the configuration of DTX/DRX; the terminal device may execute the latest indication information among the plurality of pieces of indication information, activate/deactivate configuration information corresponding to the latest indication information, or maintain an activation/deactivation state of the configuration of DTX/DRX; the terminal device only executes indication information in the terminal device-specific signaling, activates/deactivates corresponding configuration information in the specific signaling, or maintains an activation/deactivation state of the configuration of DTX/DRX; the terminal device only executes the indication information in the dedicated signaling, activates/deactivates corresponding configuration information in the specific signaling, or maintains the activation/deactivation state of the configuration of DTX/DRX; or the terminal device only executes the indication information in the signaling with the highest priority, activates/deactivates the corresponding configuration information in the specific signaling, or maintains the activation/deactivation state of the configuration of DTX/DRX.

If the terminal device receives a plurality of pieces of indication information for activation/deactivation of the configuration of DTX/DRX, and different indication information activates or deactivates different configuration information of DTX/DRX, the terminal device may execute each of the plurality of pieces of indication information, activate/deactivate the configuration information corresponding to each indication information, or maintain the activation/deactivation state of the configuration of DTX/DRX; the terminal device may execute the latest indication information among the plurality of pieces of indication information, activate/deactivate configuration information corresponding to the latest indication information, or maintain an activation/deactivation state of the configuration of DTX/DRX; the terminal device only executes indication information in the terminal device-specific signaling, activates/deactivates corresponding configuration information in the specific signaling, or maintains an activation/deactivation state of the configuration of DTX/DRX; the terminal device only executes the indication information in the dedicated signaling, activates/deactivates corresponding configuration information in the specific signaling, or maintains the activation/deactivation state of the configuration of DTX/DRX; or the terminal device only executes the indication information in the signaling with the highest priority, activates/deactivates the corresponding configuration information in the specific signaling, or maintains the activation/deactivation state of the configuration of DTX/DRX.

If the terminal device receives a plurality of pieces of indication information for activation/deactivation of the configuration of DTX/DRX, and different indication information activates or deactivates the same configuration information of DTX/DRX, the terminal device may execute each of the plurality of pieces of indication information, activate/deactivate the configuration information corresponding to each indication information, or maintain the activation/deactivation state of the configuration of DTX/DRX; the terminal device may execute the latest indication information among the plurality of pieces of indication information, activate/deactivate configuration information corresponding to the latest indication information, or maintain an activation/deactivation state of the configuration of DTX/DRX; the terminal device only executes indication information in the terminal device-specific signaling, activates/deactivates corresponding configuration information in the specific signaling, or maintains an activation/deactivation state of the configuration of DTX/DRX; the terminal device only executes the indication information in the dedicated signaling, activates/deactivates corresponding configuration information in the specific signaling, or maintains the activation/deactivation state of the configuration of DTX/DRX; or the terminal device only executes the indication information in the signaling with the highest priority, activates/deactivates the corresponding configuration information in the specific signaling, or maintains the activation/deactivation state of the configuration of DTX/DRX.

In some embodiments, if the terminal device activates part of configuration information or maintains the activation/deactivation state of the part of configuration information according to part of indication information among the plurality of pieces of indication information, the terminal device may deactivate the configuration information corresponding to the remaining part of indication information among the plurality of pieces of indication information.

In some embodiments, dedicated information (i.e., fifth information) carrying activation/deactivation indication information of a DTX/DRX configuration may indicate activation/deactivation of one DTX/DRX configuration, or indicate activation/deactivation of a group or a set of DTX/DRX configurations, or indicate activation/deactivation of a plurality of DTX/DRX configurations.

In some embodiments, dedicated information (i.e., fifth information) carrying activation/deactivation indication information of the configuration of DTX/DRX may indicate activation and deactivation of one or more DTX/DRX configurations. For example, at least one DTX/DRX configuration is indicated to be active, and at least one DTX/DRX configuration is indicated to be deactivated.

In some embodiments, dedicated information (i.e., fifth information) carrying activation/deactivation indication information of the configuration of DTX/DRX may indicate activation or deactivation of only one or more DTX/DRX configurations. For example, only at least one DTX/DRX configuration is indicated to be active, or only at least one DTX/DRX configuration is indicated to be deactivated.

If the third cell is in a sleep period of DTX/DRX, the terminal device may perform one or more of the following operations: not receiving or transmitting common signals of the third cell, such as one or more of paging/SSB/SIB/RACH; not receiving or transmitting system information or system information changes associated with the third cell; not transmitting RACH information of the third cell; delaying transmission and/or reception of information of the third cell; transmitting second request information to a third cell; determining that the third cell is a cell to which access is prohibited; or not performing the random access procedure for the third cell.

Optionally, the network device may perform one or more of: not transmitting or transmitting a common signal of the third cell, such as one or more of paging/SSB/SIB/RACH; not transmitting or transmitting system information or system information changes associated with the third cell; not receiving or responding to RACH information of the third cell; delaying transmission and/or reception of information of the third cell; determining that the third cell is a cell to which access is prohibited; or not performing the random access procedure for the third cell.

If it is determined that the third cell is a cell to which access is prohibited, the time for which the third cell is prohibited may be a predefined, preconfigured or specific duration (for example, 300 seconds), or a dormant duration of the third cell. If the sleep duration of the third cell is a plurality of or periodic durations, the time during which the third cell is prohibited may be one or more of the plurality of durations.

The common signal of the third cell may include one or more of a synchronization signal block (SSB), a master information block (MIB), a system information block (SIB), a paging message, or system information or contents thereof.

In some embodiments, the second request information may be used to request the network device to indicate the third cell to perform one or more of: leaving the sleep state of the DTX/DRX; deactivate/deconfigure configuration information of DTX/DRX; replacing the configuration information of DTX/DRX, that is, using another set of configuration information of DTX/DRX; or transition to a non-energy-saving mode or state.

In some embodiments, the fourth information/or fifth information is carried in one or more of: dedicated radio resource control (RRC) signaling; dedicated downlink control information (DCI) signaling; dedicated Media Access Control Information (MAC CE); terminal device-specific RRC signaling; system messages; or broadcasting the message.

Note that the fourth information and/or the fifth information are carried in the same or different types of signaling, such as RRC and RRC, RRC and DCI, RRC and MAC CE.

In some embodiments, the method shown in FIG. 3 may further include step S320.

In step S320, the terminal device transmits the sixth information to the network device. Optionally, the network device receives the sixth information transmitted by the terminal device.

The sixth information may be feedback information of activation/deactivation indication information for the configuration information of DTX/DRX. For example, the sixth information may be information that the UE performs feedback for activation or deactivation of the DTX/DRB configuration. As another example, the sixth information may be information that the UE performs feedback for dedicated signaling, such as common signaling, configured to activate or deactivate the DTX/DRX. As another example, the sixth information may be a signaling indication for activating or deactivating the configuration of DTX/DRX, and the UE performs feedback.

In some embodiments, the sixth information may be used to indicate one or more of the following information: whether activation/deactivation indication information is received; or an activation/deactivation status of one or more sets of configuration information of DTX/DRX.

In some embodiments, the feedback information is fixed in size or length.

In some embodiments, the feedback information is variable in size or length.

In some embodiments, the feedback information is carried by dedicated information, such as MAC CE, RRC, UCI.

In some embodiments, the sixth information may contain information corresponding to all the configuration information of DTX/DRX. For example, the UCI is a fixed size, and/or the MAC CE is a fixed size, and/or the information corresponding to all DTX/DRX configurations may be carried. As one example, information indicating all DTX/DRX configurations by a bitmap (e.g., 1 for active, 0 for deactivated, or 1 for deactivated, 0 for active; another example, e.g., 1 for received, 0 for not received, or 1 for not received, 0 for received; another example, e.g., 1 for changed, 0 for unchanged, or 1 for unchanged, 0 for changed). For another example, the UCI has a variable size, and/or the MAC CE has a variable size, and/or the received information corresponding to the configuration of DTX/DRX may be carried. Optionally, the feedback information carries information of the received configuration information (such as at least one of identification, status, or reception situation, etc.).

Taking the UE using MAC CE feedback and configuring signaling as PDCCH as an example, a feedback method of the sixth information is introduced.

For example, the MAC CE has a fixed size, and/or the MAC CE carries information corresponding to all DTX/DRX configurations. As an example, all DTX/DRX configurations are instructed by bitmap to indicate whether their corresponding activation/deactivation information is received (e.g. 1 for received, 0 for not received, or 0 for received, 1 for not received). For example, the index of the DTX/DRX indicated by the received activation/deactivation information is indicated by feedback.

In another example, the MAC CE has a fixed size, and/or the MAC CE carries information corresponding to all DTX/DRX configurations. As an example, all DTX/DRX configurations are instructed by bitmap whether their corresponding PDCCH is received (e.g., 1 for received, 0 for not received, or 0 for received, 1 for not received). For example, an index indicating the DTX/DRX of the received PDCCH is fed back.

In another example, the MAC CE has a fixed size, and/or the MAC CE carries information corresponding to all DTX/DRX configurations. As an example, it is indicated by bitmap whether all DTX/DRX configurations are active or deactivated (e.g. 1 for active, 0 for inactive, or 0 for active, 1 for inactive). For example, the index of the relevant DTX/DRX is indicated by feedback.

As another example, optionally, the MAC CE has a variable size and/or carries information corresponding to a DTX/DRX configuration corresponding to the received PDCCH. Optionally, the feedback information carries an index of the configuration of DTX/DRX corresponding to the PDCCH.

In another example, the MAC CE has a variable size and/or carries information corresponding to a DTX/DRX configuration corresponding to the received PDCCH. As an example, the feedback information carries an index of the configuration of DTX/DRX corresponding to the PDCCH.

In another example, the MAC CE has a variable size and/or carries information corresponding to a DTX/DRX configuration of an activation/deactivation state change. As one example, the feedback information carries an index of one or more DTX/DRX configurations, or carries a bitmap of information indicating the DTX/DRX of the activated/deactivated state change (e.g., 1 for activated or state change, 0 for deactivated or state unchanged, or 0 for activated or state change, 1 for deactivated or state unchanged).

In another example, the MAC CE has a variable size and/or carries information corresponding to the configuration of DTX/DRX indicated by the activation/deactivation indication signaling. As one example, the feedback information carries an index of one or more DTX/DRX configurations, or carries a bitmap indicating that the activation/deactivation indicates the DTX/DRX indicated by the signaling (e.g., 1, for activation or signaling received, or 0, for deactivation or signaling not received).

As another example, the UE uses the MAC CE to feed back the activation or deactivation status of the DTX/DRX. As an example, the feedback information carries information of a DTX/DRX configuration corresponding to a PDCCH (such as an identity and/or a status and/or a PDCCH reception situation).

In some embodiments, the MAC CE has a fixed size and/or carries information corresponding to all DTX/DRX configurations. For example, the status and/or identity of all DTX/DRX configurations is indicated. As one example, it is indicated by bitmap whether all DTX/DRX configurations are activated or deactivated (e.g. 1 for activated, 0 for deactivated, or 0 for activated, 1 for deactivated). For example, the index of the activated or deactivated DTX/DRX, and/or the activated/deactivated status, is indicated by feedback.

In some embodiments, the MAC CE has a variable size and/or carries information corresponding to the received DTX/DRX configuration corresponding to the signaling. Optionally, the feedback information includes an index of the configuration of DTX/DRX corresponding to the signaling and/or an activation/deactivation state of the corresponding DTX/DRX.

In some embodiments, the feedback information includes a UE identity.

In some embodiments, the terminal device may receive fourth information repeatedly transmitted by the network device, and the number of times for which the fourth information is repeatedly transmitted is N, wherein N is an integer greater than or equal to 1. And/or the terminal device may receive fifth information repeatedly transmitted by the network device, and the number of times of repeatedly transmitting the fifth information is M, wherein M is an integer greater than or equal to 1. Wherein M and/or N may be preconfigured, or scheduled indicated.

In some embodiments, during the activation, deactivation, and feedback of the configuration information of DTX/DRX described above, the configuration of DTX/DRX of the cell may be identified by an index, that is, the indication information or the feedback information may contain an index of the configuration of DTX/DRX of the cell.

In some embodiments, for a terminal device that does not receive a dedicated PDCCH, does not receive activation/deactivation signaling, does not activate a specific DTX/DRX configuration, does not deactivate a specific DTX/DRX configuration, does not activate DTX/DRX, or does not deactivate DTX/DRX, the network device may send dedicated signaling to re-perform activation or deactivation.

It should be noted that the configuration of DTX/DRX mentioned in the embodiment of the present disclosure may take the cell as the configuration granularity.

It should be noted that the third cell mentioned in the embodiment of the present disclosure may be the first cell, the second cell, or another cell mentioned above.

The aforementioned DTX/DRX is DTX and/or DRX.

It should be noted that each of the above-described embodiments may work alone or may be used in combination with other embodiments.

Note that "/" mentioned in the embodiments of the present disclosure means "and/or".

Depending on whether the first cell can be discovered/operated independently, the operation mode of the terminal device in the first cell may be different. If the terminal device is in a different RRC state, the operation mode of the terminal device in the first cell may also be different. Hereinafter, taking the first cell as an SSB-less cell as an example, and in combination with the first to third embodiments, the operation mode of the terminal device in the first cell is described for the terminal device in different RRC states and different types of first cells.

### Embodiment 1

The first embodiment can be applied to a scenario in which the first cell can be independently discovered/operated, and the terminal device is in an idle state or an inactive state.

As an implementation, the SSB-less cell transmits a first signal for the terminal device to discover or measure the SSB-less cell and/or to determine other information (e.g., second information).

As an implementation, the terminal device requests information or requests configuration or requests state transition or access to the SSB-less cell in the SSB-less cell according to the second information; or the terminal device requests the SSB-less transmission information or transmission configuration or state transition from the anchor cell, and further, the anchor cell notifies the SSB-less cell to transmit the information or transmission configuration or state transition (optionally, the SSB-less cell performs transmission information or transmission configuration or state transition); or the terminal device accesses/requests resources or configuration of the SSB-less cell from the anchor cell.

As an implementation, the SSB-less cell may or may not send SIB information. If the SIB information is not transmitted, the SIB may be obtained from the cell through a first request message or another message, or the SIB of the SSB-less cell may be obtained through another cell.

As an implementation, the terminal device camps on the SSB-less cell, or the terminal device camps on the SSB-less cell or determines whether or not camps on the SSB-less cell after acquiring at least one SSB/SIB item of the SSB-less cell.

As an implementation, the terminal device requests the SSB-less cell to transmit at least one item of SSB/SIB/paging in the SSB-less cell, or the terminal device requests the SSB-less cell to transmit at least one item of SSB/SIB/paging in the anchor cell (further, optionally, the anchor cell instructs the SSB-less cell to transmit at least one item of SSB/SIB/paging through an interface such as Xn/N2). If the terminal device obtains the SSB and/or MIB and/or SIB of the SSB-less cell (such as SIB1, further including at least one of SIB2/3/4/5), it determines whether the SSB-less cell can camp on or re-select the SSB-less cell or select the SSB-less cell according to the SSB and/or MIB and/or SIB of the SSB-less cell (for example, whether the SSB-less cell is bar, etc., for example, whether the slice supported by the SSB-less cell matches/contains/equals the slice required by the terminal device).

As an implementation, the terminal device determines whether to perform RACH in the SSB-less cell, or whether to perform RACH in the SSB-less cell. For example, when the SSB-less cell is a camping cell/selected cell/reselected cell, and/or the channel quality of the SSB-less cell is greater than or equal to a threshold, or the data to be transmitted by the terminal device (such as information of data to be transmitted according to a logical channel, or there is a service request), or the amount of data to be transmitted by the terminal device is greater than or equal to the threshold, or the slice supported by the SSB-less cell matches the slice required by the terminal device (for example, the same or included), the terminal device initiates RACH or access in the SSB-less cell.

As an implementation, for cell selection, the terminal device determines whether to perform selection for an SSB-less cell or whether to select an SSB-less cell based on the first signal.

Optionally, the first signal is a discovery signal, or a simplified SSB, or other signal.

Optionally, based on the measurement result of the first signal, determining whether to perform cell selection or select the cell corresponding to the first signal if RSPR/RSRQ/RSSI or the like.

Optionally, whether to perform cell selection or select a corresponding SSB-less cell (or other cell) is determined based on the measurement result of the first signal and the measurement result with other cells, (and/or whether the terminal device has data to be transmitted (such as information of data to be transmitted according to the LCH, or there is a service request) or whether the data to be transmitted is greater than or equal to a threshold, and/or whether the cell supports slice (such as whether the slice supported by other cells/SSB-less cells matches/includes/equals the slice required by the terminal device). Optionally, the other cell is measured based on the first signal or the SSB, or the measurement result of the other cell is based on the first signal or the SSB. Optionally, the measurement result based on the first signal itself or a variant thereof (e.g., with certain changes or corrections) is compared with the measurement result based on the SSB. Optionally, the SSB-less cell can be accessed only when the measurement result of the first measurement satisfies the S criterion or the cell selection criterion.

Optionally, if the terminal device detects that the first signal and/or the channel quality of the first signal is greater than or equal to the threshold, the terminal device determines whether to perform cell selection or whether to select the corresponding SSB-less cell.

Optionally, according to the first signal, or the terminal device detects that the first signal and/or the channel quality of the first signal is greater than or equal to the threshold, the terminal device transmits a first request message, requesting the SSB-less cell to transition to a non-energy saving/normal state, or requesting at least one item of SSB/SIB/paging of the SSB-less cell. Further, the terminal device requests whether or not to select the SSB-less cell. (For example, the above is performed when the S criterion is satisfied according to the first signal).

If NES-cell can be potentially a candidate to camp, then UE transmits UL-WUS, to check if it can be camped on.

As an implementation, for cell reselection, the terminal device may determine whether to perform reselection for an SSB-less cell or whether to reselect to an SSB-less cell based on the first signal.

Optionally, the first signal is a discovery signal, or a simplified SSB, or other signal.

Optionally, based on the measurement result of the first signal, if RSPR/RSRQ/RSSI or the like, whether to perform cell reselection or reselection of the cell corresponding to the first signal is determined.

Optionally, whether to perform cell reselection or reselection of the corresponding SSB-less cell (or other cell) is determined based on the measurement result of the first signal and the measurement result with other cells, (and/or whether the terminal device has data to be transmitted (such as information of data to be transmitted according to the LCH, or there is a service request) or whether the data to be transmitted is greater than or equal to a threshold, and/or whether the cell supports slice (such as whether the slice supported by other cells/SSB-less cells matches/includes/equals the slice required by the terminal device). Optionally, the other cell is measured based on the first signal or the SSB, or the measurement result of the other cell is based on the first signal or the SSB. Optionally, the measurement result based on the first signal itself or a variant thereof (e.g., with certain changes or corrections) is compared with the measurement result based on the SSB. Optionally, the SSB-less cell can be accessed only when the measurement result based on the first measurement satisfies the R criterion and/or the S criterion or the cell reselection criterion.

Optionally, if the terminal device detects that the first signal and/or the channel quality of the first signal is greater than or equal to the threshold, the terminal device determines whether to perform cell reselection or whether to reselect the corresponding SSB-less cell.

Optionally, according to the first signal, or the terminal device detects that the first signal and/or the channel quality of the first signal is greater than or equal to the threshold, the terminal device transmits a first request message, requesting the SSB-less cell to transition to a non-energy saving/normal state, or requesting at least one item of SSB/SIB/paging of the SSB-less cell. Further, the terminal device requests whether or not to re-select the SSB-less cell. (For example, the above is performed when R and/or S criteria are satisfied according to the first signal).

For example, if NES-cell can be potentially a candidate to camp, then UE transmits UL-WUS, to check if it can be camped on.

As an implementation, the terminal device requests information in the SSB-less cell, requests configuration or access to the SSB-less cell, receives the PDCCH in the SSB-less cell, and/or performs transmission with the SSB-less cell. Further, when the terminal device requests SSB-less to transmit information or transmit configuration or state transition, or after the terminal device requests SSB-less to transmit information or transmit configuration or state transition, or after the terminal device requests SSB-less to transmit information or transmit configuration or state transition for a first duration, the terminal device receives the PDCCH in the SSB-less cell and/or performs transmission with the SSB-less cell. Optionally, the terminal device receives the PDCCH in the SSB-less cell and/or performs transmission with the SSB-less cell within the second duration. Optionally, the second duration may start at a location where the first duration ends. Optionally, the starting point of the second duration is when the terminal device transmits a request or accesses the SSB-less cell or successfully RACH with the SSB-less cell. Optionally, after the second duration, the terminal device falls back to the anchor cell to acquire or transmit the SSB-less cell information at the anchor cell.

Optionally, as an embodiment, when the terminal device acquires information from the SSB-less cell, acquires a configuration, or learns the state transition of the SSB-less cell, the terminal device receives the PDCCH in the SSB-less cell, and/or performs transmission with the SSB-less cell. Further, the terminal device receives the PDCCH in the SSB-less cell and/or performs transmission with the SSB-less cell when requesting the SSB-less transmission information or transmission configuration or state transition, or after, or after requesting the SSB-less transmission information or transmission configuration or state transition for a first duration. Optionally, the terminal device receives the PDCCH in the SSB-less cell and/or performs transmission with the SSB-less cell within the second duration. Optionally, the second duration may start at a location where the first duration ends. Optionally, the starting point of the second duration is when the terminal device transmits a request or accesses the SSB-less cell or successfully RACH with the SSB-less cell. Optionally, after the second duration, the terminal device falls back to the anchor cell to acquire or transmit the SSB-less cell information at the anchor cell.

Optionally, as an embodiment, when the terminal device accesses or requests the resource/configuration of the SSB-less cell from the anchor cell, the terminal device acquires the transmission resource (such as UL/DL) of the SSB-less cell from the anchor cell, and performs transmission from the SSB-less cell. Optionally, the terminal device receives the PDCCH in the SSB-less cell and/or performs transmission with the SSB-less cell within the second duration, or before acquiring the transmission of the transmission resource of the SSB-less cell from the anchor cell or completing the transmission. Optionally, the starting point of the second duration is when the terminal device transmits a request or accesses the SSB-less cell or successfully RACH with the SSB-less cell. Optionally, after the second duration, the terminal device acquires the transmission resource of the SSB-less cell from the anchor cell and has no available transmission resource, or after the transmission resource is completed, the terminal device falls back to the anchor cell to acquire a new transmission resource of the SSB-less cell or transmits at the anchor cell.

As an implementation, the SSB-less cell does not transmit paging information. The corresponding terminal device obtains paging information on other cells such as anchor cells. Optionally, the anchor cell is indicated by the first signal or the second information.

As an implementation, the SSB-less cell transmits paging information using a specific configuration or location. Optionally, there is a fixed interval between the location of the paging and the location of the first signal, or there is a fixed interval between the location of paging and the location of the second information. Optionally, the paging location occurs periodically, or the paging location has an on/off law. Optionally, the terminal device performs monitoring at all paging locations, that is, the terminal device monitors the paging at a time of time independent of the terminal device identifier.

One possible implementation of Embodiment 1 is as follows.

As an implementation, the SSB-less cell does not transmit some or all of the common signals, such as SSB and/or SIB information. The SSB-less cell transmits the first signal. The first signal is used for the UE to discover or measure the SSB-less cell, and/or to determine other information (such as second information).

Optionally, the SSB-less cell transmits the first signal after receiving the indication information. The indication information is transmitted by the anchor cell to the SSB-less cell to request transmission of the first signal, or the indication information is request information for the UE to request the SSB-less to transmit the first signal (for example, the anchor cell notifies the UE of the location information of the SSB-less cell through the SIB, and the UE requests the SSB-less cell to transmit the first signal and/or the second information and/or the first request signal according to the location information; for example, when the location or channel quality of the UE and the anchor cell do not meet certain conditions, the UE requests the anchor cell to request the SSB-less cell to transmit the first signal or perform state transition).

For example, the first signal is used for an idle/inactive UE to measure or discover the SSB-less cell.

For example, the first signal is a DL signal transmitted at a specific time-frequency resource location, and/or the first signal is a specific DL signal.

For example, the first signal may carry second information or indicate a location of second information. Optionally, the first signal includes at least one of the following: the second information which is used for the UE to determine the time-frequency resource/preamble/RACH configuration/PRACH configuration on the SSB-less cell, and/or to determine the time-frequency resource/configuration information for transmitting the UL first request information.

Optionally, the UE may perform RACH or transmit UL first request information using the second information accordingly.

Optionally, the UL first request message may request the SSB-less cell to transmit part or all of a common signal, such as transmitting SSB and/or SIB information. Optionally, the UL first request information is used to request the SSB-less cell to perform mode or state transition, or to request transmission of at least one item or at least one item of SSB/SIB/paging of the SSB-less cell, such as from an energy-saving mode to a non-energy-saving mode, from an SSB-less to a normal state, or from not transmitting part or all of the common signal to transmitting part or all of common signals.

Optionally, the SSB-less cell does not transmit paging information. The corresponding UE obtains paging information on other cells such as anchor cells. Optionally, the anchor cell is indicated by the first signal or the second information.

Optionally, the SSB-less cell transmits the paging information using a specific configuration or location. Optionally, the location or configuration of the paging is a fixed interval or a fixed relationship between the first signal or the second information. Optionally, the paging location occurs periodically, or the paging location has an on/off law. Optionally, the UE listens at all paging locations, that is, the time at which the UE listens to the paging is independent of the UE ID.

As an implementation, the UE measures or probes the first signal. Optionally, it includes one of: the UE measures or probes the first signal at a specific time-frequency resource location. The UE acquires a configuration of the first signal of the SSB-less cell and/or a time-frequency resource location through a neighboring cell of the SSB-less cell. For example, the UE acquires the configuration of the first signal and/or the time-frequency resource location of the SSB-less cell through a dedicated RRC message of another cell, such as an RRCrelease, or system information, such as an existing SIB or a new SIB. Optionally, the other cell is an anchor cell.

Optionally, according to the first signal, or when the UE measures or detects the first signal, or when the first signal satisfies the first condition (for example, the channel quality/RSRQ/RSRP or the like of the first signal is greater than or equal to the threshold 1, or the channel quality/RSRQ/RSRP or the like of the first signal is greater than or equal to the threshold 2, and the channel quality/RSRQ/RSRP or the like of the cell in which the current UE camps on is less than or equal to the threshold 3), or when the measurement result of the first signal satisfies the condition of cell reselection or cell selection (for example, the condition of reselection to the SSB-less cell according to the R/S criterion), the UE reselects to the SSB-less cell, or set the frequency point of the SSB-less cell or the priority of the cell to a high priority.

Optionally, the UE transmits the first request message according to the first signal, or if the UE detects the first signal, or according to the first signal, or if the channel quality of the first signal satisfies the R/S criterion (or cell selection and/or reselection criterion). Optionally, the UE determines whether to camp on the corresponding SSB-less cell, or whether to reselect or select to the corresponding SSB-less cell based on at least one item of SSB/SIB/paging of the requested SSB-less cell.

Optionally, according to the first signal, or when the UE measures or detects the first signal, or when the first signal satisfies the second condition (for example, the channel quality/RSRQ/RSRP, etc. of the first signal is less than or equal to threshold 1, or the channel quality/RSRQ/RSRP, etc. of the first signal is less than or equal to threshold 2, and the channel quality/RSRQ/RSRP, etc. of the other cell is greater than or equal to threshold 3), or the measurement result of the first signal does not satisfy the condition of reselection or selection or continuing camping on the SSB-less cell (for example, according to the R/S criterion, when the conditions for reselecting to another cell are satisfied, or when the conditions for camping on an SSB-less cell are not satisfied), the UE reselects another cell. Optionally, the UE preferentially selects the anchor cell.

Optionally, when the UE measures or detects the first signal, or when the first signal satisfies the first condition (for example, the channel quality/RSRQ/RSRP, etc. of the first signal is greater than or equal to the threshold 1, or the channel quality/RSRQ/RSRP, etc. of the first signal is greater than or equal to the threshold 2, and the channel quality/RSRQ/RSRP, etc. of the cell in which the UE currently camps on is less than or equal to the threshold 3), or when the amount of data to be transmitted by the UE satisfies the second condition (for example, greater than or equal to the first threshold), or according to the first signal, or when the measurement result of the first signal does not satisfy the condition of reselecting or selecting or continuing camping on the SSB-less cell (for example, the condition of reselecting to another cell according to the R/S criterion is satisfied, or the condition of camping on the SSB-less cell is not satisfied), or in case of MO, or when paging or MT is received, the UE performs a first action.

Optionally, the first action may include at least one of: acquiring a time-frequency resource/configuration of the second information, performing RACH, determining whether to camp on, performing cell selection or reselection, and transmitting one or more type of UL first request information; the UE measuring or probing a first signal; the UE measures or probes the first signal when the channel quality of the camping cell (such as other cells or anchor cells) is less than or equal to the second threshold; the UE acquires second information according to the first signal; or acquiring a time-frequency resource/configuration carrying the second information, and acquiring the second information; the UE is at a specific time-frequency resource location, and the UE transmits first request information; if the UE does not acquire the second information or does not acquire the time-frequency resource/configuration carrying the second information, the UE performs RACH or transmits the first request information through the anchor cell; the UE transmits UL first request information through the SSB-less cell; the UE acquires the second information or acquires the time-frequency resource/configuration carrying the second information, and the UE transmits the UL first request information through the SSB-less cell; or when the UE acquires the time-frequency resource/configuration in which the second information carries the second information, and the second information is information for RACH/PRACH, the UE performs RACH through the SSB-less cell. Otherwise, the UE performs RACH or transmits the first request information through the anchor cell.

As an implementation, the network device may perform the second behavior, and/or the UE may perform the third behavior. Here, the network device may be a base station of an SSB-less cell and/or a gNB of an anchor cell.

Optionally, the second action includes at least one of receiving RACH information (or performing a RACH procedure), receiving first request information, transmitting a RACH configuration of the SSB-less cell, performing cell or network state transition, indicating the SSB-les cell to perform cell or network state transition, transmitting PDCCH/PDSCH in the SSB-less cell, receiving PUSCH in the SSB-less cell, and transmitting at least one item of SSB/SIB/paging.

Optionally, the second action includes at least one of: receiving RACH information (or performing a RACH procedure, for example, if the RACH configuration of the SSB-less cell is transmitted through the anchor cell or is carried in the second information), receiving the first request information, transmitting the RACH configuration of the SSB-less cell (if the RACH configuration of the SSB-less cell is not transmitted through the anchor cell or is not carried in the second information), transmitting at least one item of SSB/SIB/paging, performing cell or network state transition, transmitting PDCCH/PDSCH in the SSB-less cell, and receiving PUSCH in the SSB-less cell, performing transmission with the UE. Optionally, the action is an action related to a base station or a cell of an SSB-less cell.

Optionally, the action related to the base station or cell of the anchor includes at least one of: receiving the first request information, transmitting the RACH configuration of the SSB-less cell, indicating the SSB-les cell to perform cell or network state transition, indicating the SSB-less cell to transmit the configuration or information, transmitting at least one of SSB/SIB/paging, or transmitting the configuration or information of the SSB-less cell (for example, through a dedicated RRC configuration, such as RRC reconfiguration/RRCrelease, or SIB information).

Optionally, the second action includes paging. Optionally, the SSB-less cell does not transmit paging information. The corresponding UE obtains paging information on other cells such as anchor cells. For example, the anchor cell is indicated by a first signal or second information. Optionally, the SSB-less cell transmits paging information using a specific configuration or location. As one example, the location or configuration of the paging is a fixed interval, or a fixed relationship, for the first signal or the second information. As another example, the paging location occurs periodically, or there is an on/off law for the paging location. Optionally, the UE listens at all paging locations, that is, the time at which the UE listens to the paging is independent of the UE ID.

Optionally, an existing paging configuration or listening mechanism is used in the SSB-less cell when a request message is received, or in the case of an SSB-less state transition. That is, the configuration of paging is a periodic configuration, and the paging detection location of the UE is related to the UE ID.

Optionally, when the SSB-less cell falls back to not transmitting all or part of the common information, the UE performs paging in accordance with the SSB-less cell not transmitting paging information or the SSB-less cell transmitting paging information using a specific configuration or location.

Optionally, when the SSB-less cell transmits all or part of the common information, the UE performs paging according to the SSB-less cell not transmitting paging information or the SSB-less cell transmitting paging information using a specific configuration or location, or when the SSB-less cell falls back to not transmitting all or part of the common information, the UE performs paging according to the SSB-less cell not transmitting paging information or the SSB-less cell transmitting paging information using a specific configuration or location.

Optionally, the third action includes at least one of: transmitting first request information; performing RACH according to the RACH configuration of the SSB-less cell; requesting the SSB-less cell to send at least one item of SSB/SIB/paging; requesting the SSB-less cell to perform cell or network state transition; requesting the SSB-less cell to send configuration or information; requesting or acquiring configuration or transmission resources of the SSB-less cell (for example, through a dedicated RRC configuration, such as RRCrelease, or SIB information); determining whether to camp on the SSB-less cell, whether to perform cell selection/reselection, whether to select/reselect the said SSB-less cell; requesting or acquiring SSB-less cell configuration or common information through the anchor cell; accessing and requesting or obtaining the configuration or transmission resources of the SSB-less cell via the anchor cell; or performing transmission with the SSB-less cell.

Optionally, the UE camps on the SSB-less cell, or the UE camps on the SSB-less cell after acquiring at least one SSB/SIB item of the SSB-less cell.

Optionally, the UE requests the SSB-less cell to transmit at least one item of SSB/SIB/paging in the SSB-less cell, or the UE requests the SSB-less cell to transmit at least one item of SSB/SIB/paging in the anchor cell (further, optionally, the anchor cell instructs the SSB-less cell to transmit at least one item of SSB/SIB/paging through an interface such as Xn/N2). If the UE obtains the SSB and/or MIB and/or SIB of the SSB-less cell (such as SIB1, further including at least one of SIB2/3/4/5), it is determined whether the SSB-less cell can camp on or re-select the SSB-less cell or select the SSB-less cell according to the SSB and/or MIB and/or SIB of the SSB-less cell (for example, whether the SSB-less cell is bar, etc., for example, whether the slice supported by the SSB-less cell matches/contains/equals the slice required by the UE).

Optionally, the UE determines whether to perform RACH in the SSB-less cell, or whether to perform RACH in the SSB-less cell. For example, when the SSB-less cell is a camping cell/selected cell/reselected cell, and/or the channel quality of the SSB-less cell is greater than or equal to the threshold, or the data to be transmitted by the UE (such as information of data to be transmitted according to the LCH, or there is a service request), or the amount of data to be transmitted by the UE is greater than or equal to the threshold, or the slice supported by the SSB-less cell matches the slice required by the UE (such as the same or inclusive), the UE initiates RACH or access in the SSB-less cell.

For example, the UE requests information in the SSB-less cell, requests configuration or access to the SSB-less cell, receives the PDCCH in the SSB-less cell, and/or performs transmission with the SSB-less cell. Further, the UE receives the PDCCH in the SSB-less cell and/or performs transmission with the SSB-less cell when requesting SSB-less transmission information or transmission configuration or state transition, or after requesting SSB-less transmission information or transmission configuration or state transition for a first duration. Optionally, the UE receives the PDCCH in the SSB-less cell and/or performs transmission with the SSB-less cell within the second duration.

For example, when the UE acquires information or configuration from the SSB-less cell, or learns the state transition of the SSB-less cell, the UE receives the PDCCH in the SSB-less cell, and/or performs transmission with the SSB-less cell. Further, the UE receives the PDCCH in the SSB-less cell and/or performs transmission with the SSB-less cell when requesting SSB-less transmission information or transmission configuration or state transition, or after, or after requesting SSB-less transmission information or transmission configuration or state transition for a first duration. Optionally, the UE receives the PDCCH in the SSB-less cell and/or performs transmission with the SSB-less cell within the second duration.

For example, when the UE accesses or requests the resource/configuration of the SSB-less cell from the anchor cell, the UE acquires the transmission resource (such as UL/DL) of the SSB-less cell from the anchor cell, and performs transmission from the SSB-less cell. Optionally, the UE receives the PDCCH in the SSB-less cell and/or performs transmission with the SSB-less cell within the second duration, or before acquiring the transmission of the transmission resource of the SSB-less cell from the anchor cell or completing the transmission. Optionally, when the UE acquires the transmission resource of the SSB-less cell from the anchor cell and no transmission resource is available, or after the transmission resource is completed, the UE falls back to the anchor cell to acquire a new transmission resource of the SSB-less cell or transmits the transmission resource at the anchor cell.

For example, the first duration may be a first timer. For example, when the UE requests the SSB, the terminal device starts a first timer, and when the first timer expires, the UE starts transmission with the SSB-less cell. As an implementation, the UE remains operating on the SSB-less cell without fallback to the anchor cell.

For example, the second duration may be a second timer, or a duration available on the time pattern, or one or more periodic durations. For example, for the second timer, the UE transmits with the SSB-less cell only during the runtime of the second timer. If the second timer is not running, the UE may stop transmission with the SSB-less cell or fall back to the anchor cell.

The method provided by the embodiment of the present disclosure enables a disconnected UE to communicate with an SSB-less cell without transmitting part or all of the common signals.

### Embodiment 2

The second embodiment can be applied to a scenario in which the terminal device is in the connected state. At this time, the first cell may be a cell that can be independently discovered/operated, or may be a cell that cannot be independently discovered/operated.

As an implementation, the UE is in a connected state. For example, the connected UE currently camps on and connects with other cells, such as anchor cells, other non-anchor/non-SSB-less cells.

As an implementation, the UE measures or detects the signal of the SSB-less cell.

As an implementation, if the UE measures or detects the signal of the SSB-less cell, or the signal of the measurement or detection of the SSB-less cell satisfies a certain condition, or the measurement result between the UE and the anchor cell satisfies a certain condition, the UE reports the measurement result to the anchor cell, or the UE has data to be transmitted (e.g., based on information of the data to be transmitted for an LCH, or if there is a service request) or the data to be transmitted by the UE is greater than or equal to a threshold, or the slice supported by the SSB-less cell matches/includes/equals a slice required by the UE, or the UE receives an indication of the anchor cell or a currently connected cell, or the UE requests the SSB-less cell to send part or all of common information (such as at least one of SSB, SIB, or paging) via the anchor cell and/or requests a state transition of the SSB-less cell. Optionally, the UE uses the measurement report to indicate the channel quality of the SSB-less cell to the current cell (in turn, optionally, the current cell may indicate or trigger the SSB-less cell state transition, or indicate the SSB-less cell to send at least one of SSB, SIB, or paging), or the UE transmits a first request signal to the SSB-less cell (optionally, refer to Embodiment 1), or the UE performs RACH or UL synchronization in the SSB-less cell.

Optionally, if the UE is a CA-capable UE after the anchor cell or the current cell of the UE learns the UE report or indication, the anchor cell or the current cell of the UE may send an Scell activation indication, such as a Scell activation MAC CE, for activating the SSB-less cell as the Scell of the UE. Optionally, the anchor cell or the current tag of the UE may add the SSB-less cell as the Scell of the UE.

Optionally, if the UE is a non-CA-capable UE, the anchor cell or the current cell of the UE may switch the UE to the SSB-less cell.

As an implementation, the SSB-less cell may or may not send SIB information. If the SIB information is not transmitted, the UE may acquire the SIB through the dedicated RRC of the SSB-less cell. Optionally, the SIB may be acquired from the cell through a first request message or another message, or the SIB of the SSB-less cell may be acquired through another cell.

As an implementation, the UE acquires the RACH configuration of the SSB-less cell from the anchor cell or the current cell of the UE or the SSB-less cell, and performs UL synchronization with the SSB-less cell. Optionally, the UE acquires the UL TA time difference between the SSB-less cell and the anchor cell from the anchor cell or the current cell of the UE, and performs UL synchronization with the SSB-less cell based on the TA and the time difference between the UE and the anchor cell or the current cell of the UE.

Optionally, when the third condition is satisfied, the connected UE switches or redirects to the SSB-less cell, and/or performs transmission with the SSB-less cell. The third condition is at least one of the following: the connected UE does not have CA/DC capability, the channel quality between the connected UE and the anchor cell is less than or equal to the threshold, the channel quality between the UE and the SSB-less cell is greater than or equal to the threshold, the UE detects the SSB-less cell, the UE needs to transmit data (such as information of data to be transmitted according to the LCH, or there is a service request), the slice supported by the SSB-less cell includes/matches/equals the handover required by the UE, the slice of the current cell of the UE does not include/does not match/does not support the handover required by the UE, the amount of data to be transmitted by the UE is greater than or equal to the threshold, and the UE is located in the coverage range of the SSB-less cell, or the anchor cell instructs the UE to perform a handover or redirection to the SSB-less cell/perform transmission with the SSB-less cell.

Further, optionally, such as the UE handover or redirect to the SSB-less cell, the UE acquires system information from the SSB-less cell, and/or paging.

Further, optionally, the UE is switched to or redirected to the SSB-less cell, and the UE operates in the SSB-less cell and the cell/anchor cell before the switching in a TDM. For example, the cycle or TDM acquires paging or updated system information from the cell/anchor cell before handover.

Further, optionally, after switching to the SSB-less cell, the UE acquires the system information of the SSB-less cell through the dedicated RRC.

Optionally, when the fourth condition is satisfied, the connected UE transmits simultaneously with the current cell of the anchor cell/UE and the SSB-less cell, that is, the SSB-less cell is used as the secondary cell. The fourth condition is at least one of the following: the connected UE has CA/DC capability, the channel quality between the connected UE and the anchor cell is less than or equal to the threshold, the channel quality between the UE and the SSB-less cell is greater than or equal to the threshold, the UE detects the SSB-less cell, the UE needs to transmit data (such as information of data to be transmitted according to the LCH, or there is a service request), the slice supported by the SSB-less cell includes/matches/equals the handover required by the UE, the slice of the current cell of the UE does not include/does not match/does not support the handover required by the UE, the amount of data to be transmitted by the UE is greater than or equal to the threshold, and the UE is located in the coverage range of the SSB-less cell, the anchor cell instructs the UE to perform transmission with the SSB-less cell, or the anchor cell adds or activates the SSB-less cell as an Scell for the UE.

Further, optionally, the UE acquires system information (of the SSB-less cell) from the anchor cell/or the cell in which the UE is currently located, and/or paging.

Further, optionally, the UE acquires the system information of the SSB-less cell through the dedicated RRC.

Optionally, when the fifth condition is satisfied, the connected UE receives system information update/paging (e.g., fixed time and/or fixed location) at the anchor cell/or the cell in which the UE is currently located, and performs transmission (e.g., data transmission, feedback, etc.) with the SSB-less cell. The fifth condition is at least one of the following: the connected UE does not have CA/DC capability, the connected UE has CA/DC capability, the channel quality between the connected state UE and the anchor cell is less than or equal to the threshold, the channel quality between the UE and the SSB-less cell is greater than or equal to the threshold, the UE detects the SSB-less cell, the UE has data to be transmitted (e.g., information of data to be transmitted according to the LCH, or there is a service request), the slice supported by the SSB-less cell includes/matches/is equal to the handover required by the UE, the slice of the current cell of the UE does not include/do not match/do not support the handover required by the UE, the amount of data to be transmitted by the UE is greater than or equal to the threshold, the UE is located in the coverage range of the SSB-less cell, the SSB-less cell does not transmit part or all of the common information (such as paging, SSB, SIB), and the SSB-less cell is in an energy-saving mode, or the anchor cell and/or the UE's current cell instructs to perform transmission with the SSB-less cell.

One possible implementation of Embodiment 2 is as follows.

As an implementation, the UE connects and communicates with the anchor cell. The UE obtains the configuration of the SSB-less cell, such as the content of system information of the SSB-less cell, such as the RACH configuration, from the anchor cell. Optionally, the UE obtains SSB-less cell information indicated by the anchor cell, such as RACH configuration information, or measurement configuration information, through the SIB of the anchor cell (such as a dedicated SSB or an existing SIB) or the RRC reconfiguration message. When the UE finds an SSB-less cell and the channel quality of the SSB-less cell is greater than or equal to threshold 1, the UE performs RACH from the SSB-less cell. Perform UL synchronization with the SSB-less cell. Then, the PDCCH is received from the SSB-less cell and/or transmission is performed. Optionally, the UE fallbacks to the anchor cell after a certain duration, or periodically, or in a fixed one or more durations, or in the case of UL/DL transmission resource transmission of the SSB-less cell. Optionally, the UE fallback to the anchor cell performs at least one of the following: updating information of the SSB-less cell, updating of the system information of the SSB-less cell, timing advance (TA) information of the SSB-less cell (e.g., TA between the SSB-less cell and the UE, or TA offset between the SSB-less cell and the anchor cell), the SSB-less cell for unsupported paging information, synchronize with the anchor cell, performing transmission with the anchor cell, or obtaining the updated resource configuration or scheduling for transmission with the SSB-less cell.

As an implementation, the UE connects and communicates with the anchor cell. The UE obtains the configuration of the SSB-less cell, such as the content of system information of the SSB-less cell, such as measurement configuration, or RACH configuration, from the anchor cell. Optionally, the UE obtains SSB-less cell information indicated by the anchor cell, such as RACH configuration information, or measurement configuration information, through the SIB of the anchor cell (such as a dedicated SSB or an existing SIB) or the RRC reconfiguration message. When the UE finds the SSB-less cell and the channel quality of the SSB-less cell is greater than or equal to the threshold 1, the UE transmits indication information to the anchor cell. The Anchor cell instructs the UE to switch or redirect to the SSB-less cell. The UE performs RACH from the SSB-less cell. Perform UL synchronization with the SSB-less cell. Then, the PDCCH is received from the SSB-less cell and/or transmission is performed. Optionally, the SSB-less cell transmits all or part of the common information, such as paging, SSB, and SIB, according to the RACH of the UE or the instruction of the anchor cell. Optionally, the UE fallbacks to the anchor cell after a certain duration, or periodically, or in a fixed duration or periods, or in the case of UL/DL transmission resource transmission of the SSB-less cell. Optionally, the UE fallback to the anchor cell performs at least one of the following: updating information of the SSB-less cell, updating the system information of the SSB-less cell, TA information of the SSB-less cell (e.g., TA between the SSB-less cell and the UE, or TA offset between the SSB-less cell and the anchor cell), the SSB-less cell for unsupported paging information, synchronizing with the anchor cell, performing transmission with the anchor cell, or obtaining the updated resource configuration or schedule for transmission with the SSB-less cell.

As an implementation, the UE connects and communicates with the anchor cell. The UE obtains the configuration of the SSB-less cell, such as the content of system information of the SSB-less cell, such as measurement configuration, or RACH configuration, from the anchor cell. Optionally, the UE obtains SSB-less cell information indicated by the anchor cell, such as RACH configuration information, or measurement configuration information, through the SIB of the anchor cell (such as a dedicated SSB or an existing SIB) or the RRC reconfiguration message. When the UE finds the SSB-less cell and the channel quality of the SSB-less cell is greater than or equal to the threshold 1, the UE transmits the first request information to the SSB-less cell and/or instructs the anchor cell to go to the SSB-less cell. Optionally, the SSB-less cell transmits the RACH configuration, or the UE performs RACH and UL synchronization in the SSB-less cell using the RACH configuration of the SSB-less cell transmitted by the anchor cell. Optionally, the Anchor cell instructs the UE to switch or redirect to the SSB-less cell. The UE receives the PDCCH from the SSB-less cell and/or performs transmission. Optionally, the SSB-less cell transmits all or part of the common information, such as paging, SSB, and SIB, according to the RACH of the UE or the instruction of the anchor cell. Optionally, the UE fallbacks to the anchor cell after a certain duration, or periodically, or in a fixed one or more durations, or in the case of UL/DL transmission resource transmission of the SSB-less cell. Optionally, the UE fallback to the anchor cell performs at least one of the following: updating information of the SSB-less cell, updating the system information of the SSB-less cell, TA information of the SSB-less cell (e.g., TA between the SSB-less cell and the UE, or TA offset between the SSB-less cell and the anchor cell), the SSB-less cell for unsupported paging information, synchronizing with the anchor cell, performing transmission with the anchor cell, or obtaining the updated resource configuration or schedule for transmission with the SSB-less cell.

As an implementation, the UE accesses from the anchor cell. Then, the UE is HO or redirected to the SSB-less cell, and transmission is performed with the SSB-less cell. Optionally, the UE performs transmission with the SSB-less cell within the second duration. The UE switches to the anchor cell and synchronizes/transmits/acquires the common information of the paging/SSB-less cell with the anchor cell after the second time-out, either in a specific duration, or periodically (optionally, in a specific duration of each cycle, such as the time of on-duration). Outside of a specific time, or periodically (optionally, within a specific duration of each cycle, such as a non-on-duration time), the UE switches to SSB-less cell transmission.

The method provided by the embodiment of the present disclosure enables the connected UE to communicate with the SSB-less cell without transmitting part or all of the common signals.

### Embodiment 3

The third embodiment can be applied to a scenario in which the first cell is a cell that cannot be independently discovered/operated, and the terminal device is in an idle state or an inactive state.

As an implementation, the UE camps on another cell, or accesses the network from another cell, or learns SSB-less cell presence/information through another cell. Optionally, the other cell is an anchor cell or another non-SSB-less cell.

As an implementation, the UE learns the SSB-less cell. Optionally, the UE obtains information or existence of the SSB-less cell through another cell, such as an anchor cell, and thus performs measurement/discovery of the SSB-less cell. Optionally, according to information carried by other cells, or the existence of SSB-less cells, or information of SSB-less cells (e.g., system information, such as RACH configuration), the UE can perform the SSB-less cells. For example, the anchor cell's SIB or dedicated RRC message (such as RRC Reconfiguration or RRCrelease) carries information of the SSB-less cell, such as system information, such as RACH configuration, or the UE acquires the first signal transmitted by the SSB-less cell, wherein the first signal is used for the UE to discover or measure the SSB-less cell, and/or to determine other information (such as the third information). Optionally, the third information is information of a cell associated with the SSB-less cell, or information of a cell synchronized with the SSB-less cell, or an anchor cell of the SSB-less cell. Optionally, the third information is used for the UE to access a network from a corresponding cell (such as a cell associated/synchronized with the SSB-less cell or an anchor cell, and/or to obtain information of the SSB-less cell, such as SIB/RACH).

As an implementation, the UE transmits first request information at the anchor cell for at least one of requesting the SSB-less cell to transmit part or all of the common information (e.g., SIB), or performing state transition, or requesting SSB/SIB/paging of the SSB-less cell. Optionally, request configuration information for the SSB-less cell, such as RACH configuration.

As an implementation, the SSB-less cell may or may not transmit all or part of the common signal. If all or part of the common signal is not transmitted, all or part of the common signal may be obtained from the cell through a first request message or another message, or all or part of the common signal of the SSB-less cell may be obtained through another cell. Optionally, all or part of the common signal may be all or part of the common signal described in Embodiment 1.

Optionally, the SSB-less cell may or may not transmit the MIB information. If the MIB information is not transmitted, the MIB may be obtained from the cell through a first request message or another message, or the MIB of the SSB-less cell may be obtained through another cell.

As an implementation, the SSB-less cell may or may not send SIB information. If the SIB information is not transmitted, the SIB may be obtained from the cell through a first request message or another message, or the SIB of the SSB-less cell may be obtained through another cell.

As an implementation, the UE synchronizes with the SSB-less cell through the RACH configuration of the SSB-less cell. Optionally, the UE accesses the network from the anchor cell (optionally, the RACH configuration of the anchor cell is used to synchronize with the anchor cell. Optionally, the RACH configuration may be a dedicated configuration for the anchor cell to learn that the UE needs to transmit with the SSB-less cell).

As an implementation, an idle or inactive UE may access the network from an SSB-less cell.

Optionally, the UE camps on the SSB-less cell, or after acquiring at least one item of the SSB/SIB of the SSB-less cell, the UE camps on the SSB-less cell or determines whether or not the UE camps on the SSB-less cell.

Optionally, the UE requests the SSB-less cell to transmit at least one item of SSB/SIB/paging in the SSB-less cell, or the UE requests the SSB-less cell to transmit at least one item of SSB/SIB/paging in the anchor cell (further, optionally, the anchor cell instructs the SSB-less cell to transmit at least one item of SSB/SIB/paging through an interface such as Xn/N2). If the UE obtains the SSB and/or MIB and/or SIB of the SSB-less cell (such as SIB1, further including at least one of SIB2/3/4/5), it is determined whether the SSB-less cell can camp on or re-select the SSB-less cell or select the SSB-less cell according to the SSB and/or MIB and/or SIB of the SSB-less cell (for example, whether the SSB-less cell is bar, etc., for example, whether the slice supported by the SSB-less cell matches/contains/equals the slice required by the UE).

Optionally, the UE determines whether to perform RACH in the SSB-less cell, or whether to perform RACH in the SSB-less cell. For example, when the SSB-less cell is a camping cell/selected/cell/reselected cell, and/or the channel quality of the SSB-less cell is greater than or equal to the threshold, or the data to be transmitted by the UE (such as information of data to be transmitted according to the LCH, or there is a service request), or the amount of data to be transmitted by the UE is greater than or equal to the threshold, or the slice supported by the SSB-less cell matches the slice required by the UE (such as the same or inclusive), the UE initiates RACH or access in the SSB-less cell.

Optionally, for cell selection, the UE determines whether to perform selection for an SSB-less cell or whether to select an SSB-less cell based on the first signal.

For example, the first signal is a discovery signal, or a simplified SSB, or other signal.

For example, based on the measurement result of the first signal, determining whether to perform cell selection or select the cell corresponding to the first signal if RSPR/RSRQ/RSSI or the like.

For example, determining whether to perform cell selection or select a corresponding SSB-less cell (or other cell) based on a measurement result of the first signal and a measurement result with other cells, (and/or whether the UE has data to be transmitted (e.g., information of data to be transmitted according to LCH, or a service request) or whether the data to be transmitted is greater than or equal to a threshold, and/or the cell's support for slice (e.g., whether a slice supported by other cells/SSB-less cells matches/includes/equals a slice required by the UE). Optionally, the other cell is measured based on the first signal or the SSB, or the measurement result of the other cell is based on the first signal or the SSB. Optionally, the measurement result based on the first signal itself or a variant thereof (e.g., with certain changes or corrections) is compared with the measurement result based on the SSB. Optionally, the SSB-less cell can be accessed only when the measurement result of the first measurement satisfies the S criterion or the cell selection criterion.

For example, if the UE detects that the first signal and/or the channel quality of the first signal is greater than or equal to a threshold, the UE determines whether to perform cell selection or whether to select a corresponding SSB-less cell.

For example, according to the first signal, or the UE detects that the first signal and/or the channel quality of the first signal is greater than or equal to a threshold, the UE transmits a first request message, requesting the SSB-less cell to transition to a non-energy saving/normal state, or requesting at least one item of SSB/SIB/paging of the SSB-less cell. Further, the UE requests whether or not to select the SSB-less cell. (For example, the above is performed when the S criterion is satisfied according to the first signal).

For example, if NES-cell can be potentially a candidate to camp, then UE transmits UL-WUS, to check if it can be camped on.

For example, for cell reselection, the UE determines whether to perform reselection for an SSB-less cell or whether to reselect to an SSB-less cell based on the first signal.

For example, the first signal is a discovery signal, or a simplified SSB, or other signal.

For example, based on the measurement result of the first signal, if RSPR/RSRQ/RSSI or the like, whether to perform cell reselection or reselection of the cell corresponding to the first signal is determined.

For example, determining whether to perform cell reselection or reselection of a corresponding SSB-less cell (or other cell) based on a measurement result of the first signal and a measurement result with other cells, (and/or whether the UE has data to be transmitted (e.g., information of data to be transmitted according to an LCH, or a service request) or whether the data to be transmitted is greater than or equal to a threshold, and/or whether the cell supports slice (e.g., whether the slice supported by other cells/SSB-less cells matches/includes/equals a slice required by the UE). Optionally, the other cell is measured based on the first signal or the SSB, or the measurement result of the other cell is based on the first signal or the SSB. Optionally, the measurement result based on the first signal itself or a variant thereof (e.g., with certain changes or corrections) is compared with the measurement result based on the SSB. Optionally, the SSB-less cell can be accessed only when the measurement result based on the first measurement satisfies the R criterion and/or the S criterion or the cell reselection criterion.

For example, if the UE detects that the first signal and/or the channel quality of the first signal is greater than or equal to a threshold, the UE determines whether to perform cell reselection or whether to reselect the corresponding SSB-less cell.

For example, according to the first signal, or the UE detects that the first signal and/or the channel quality of the first signal is greater than a threshold, the UE transmits a first request message, requesting the SSB-less cell to transition to a non-energy saving/normal state, or requesting at least one item of SSB/SIB/paging of the SSB-less cell. Further, the UE requests whether or not to reselect the SSB-less cell. (For example, the above is performed when R and/or S criteria are satisfied according to the first signal).

For example, if NES-cell can be potentially a candidate to camp, then UE transmits UL-WUS, to check if it can be camped on.

As an implementation, the UE accesses the network from an anchor cell or other non-SSB-less cell.

Furthermore, optionally, when a sixth condition is satisfied, the connected UE hands over or is redirected to an SSB-less cell, and/or performs transmission with the SSB-less cell. The sixth condition includes at least one of the following: the connected UE does not have CA/DC capability; the channel quality between the connected UE and the anchor cell is less than a threshold; the channel quality between the UE and the SSB-less cell is greater than a threshold; the UE detects an SSB-less cell; the UE has data pending transmission (e.g., based on Logical Channel (LCH) buffer status or a service request); the slice supported by the SSB-less cell matches the slice required by the UE (e.g., identical or inclusive); the amount of pending transmission data in the UE exceeds a threshold; the UE is within the coverage of the SSB-less cell; the anchor cell instructs the UE to hand over or be redirected to the SSB-less cell / to perform transmission with the SSB-less cell; the UE has acquired SSB-less cell RACH information; or the UE has detected an SSB-less cell.

Further, for example, the UE acquires system information from the SSB-less cell, and/or paging, such as the UE handover or redirect to the SSB-less cell.

Further, for example, the UE switches to or redirects to an SSB-less cell, and the UE operates in the SSB-less cell and the cell/anchor cell before the switching in a TDM. For example, the cycle or TDM acquires paging or updated system information from the cell/anchor cell before handover.

Further, for example, after the handover, the UE acquires the system information of the SSB-less cell through the dedicated RRC.

Optionally, when a seventh condition is satisfied, the connected UE performs simultaneous transmission with both the anchor cell and the SSB-less cell, meaning the SSB-less cell serves as a secondary cell. The seventh condition includes at least one of the following: the connected UE has CA/DC capability; the channel quality between the connected UE and the anchor cell is less than or equal to a threshold; the channel quality between the UE and the SSB-less cell is greater than a threshold; the UE detects an SSB-less cell; the UE has data pending transmission (e.g., based on LCH buffer status information or a service request); the slice supported by the SSB-less cell matches the slice required by the UE (e.g., identical or inclusive); the amount of pending transmission data in the UE exceeds a threshold; the UE is located within the coverage of the SSB-less cell; the anchor cell instructs the UE to perform transmission with the SSB-less cell; the anchor cell adds or activates the SSB-less cell as an SCell for the UE; the UE acquires SSB-less cell RACH information; or the UE detects an SSB-less cell.

Further, for example, the UE acquires system information (of the SSB-less cell) from the anchor cell, and/or paging.

Further, for example, the UE acquires the system information of the SSB-less cell through the dedicated RRC.

Optionally, when the eighth condition is satisfied, the connected UE receives system information update/paging (e.g., fixed time and/or fixed location) at the anchor cell, and performs transmission (e.g., data transmission, feedback, etc.) with the SSB-less cell. The eighth condition is at least one of the following: the connected UE does not have CA/DC capability; the channel quality of the connected UE and the anchor cell is less than or equal to the threshold; the channel quality of the UE and the SSB-less cell is greater than the threshold; the UE detects the SSB-less cell; the amount of data to be transmitted by the UE is greater than the threshold; or the UE has data to be transmitted (such as information of data to be transmitted according to the LCH, or there is a service request); or the slice supported by the SSB-less cell matches the slice required by the UE (for example, the same or included), the UE is located in the coverage range of the SSB-less cell, and the SSB-less cell does not transmit part or all of the common information (such as paging, SSB, SIB); the SSB-less cell is in energy-saving mode; the anchor cell instructs transmission with the SSB-less cell; the RACH information of the SSB-less cell is acquired; or the SSB-less cell is detected.

As an implementation, the UE synchronizes with the SSB-less cell using the RACH configuration of the SSB-less cell. Optionally, the UE receives the PDCCH in the SSB-less cell and/or performs transmission with the SSB-less cell within the second duration. Optionally, the UE receives the PDCCH in the SSB-less cell and/or performs transmission with the SSB-less cell before acquiring the transmission of the transmission resource of the SSB-less cell from the anchor cell or completing the transmission. Optionally, after the second duration, or after the transmission resource of the SSB-less cell is acquired from the anchor cell, there is no transmission resource available, or after the transmission resource is completed, the UE falls back to the anchor cell to acquire a new transmission resource of the SSB-less cell or transmits at the anchor cell.

As an implementation, the SSB-less cell does not transmit paging information. The corresponding UE obtains paging information on other cells such as anchor cells. Optionally, the anchor cell is indicated by the first signal or the second information or the third information.

As an implementation, the SSB-less cell transmits paging information using a specific configuration or location. Optionally, the location or configuration of the paging is a fixed interval or a fixed relationship between the first signal or the second information or the third information resource. Optionally, the paging location occurs periodically, or the paging location has an on/off law. Optionally, the UE listens at all paging locations, that is, the time at which the UE listens to the paging is independent of the UE ID.

The embodiment of the present disclosure solves the problem of how the UE communicates with the SSB-less cell when the SSB-less cell cannot operate independently.

Hereinafter, methods such as configuration, activation, deactivation, and feedback of cell-level configuration information of DTX/DRX will be described in conjunction with the fourth embodiment.

### Embodiment 4

As an implementation, the network device may configure a cell DTX/DRX configuration.

Optionally, the cell DTX/DRX configuration is applied to an idle/inactive/connected UE.

Optionally, the cell DTX/DRX configuration is notified to the cell or the UE through common RRC or system information.

Optionally, the cell DTX/DRX configuration is updated by a system information update (SI-update) procedure, or by indication information carried by a dedicated DCI (optionally, the DCI of a specific RNTI may be used).

Optionally, at least one of paging, SSB, SIB, or RACH may not be transmitted/transmitted for a non-active period of cell DTX/DRX. For example, the network does not transmit at least one of SSB, SIB, or paging, and/or does not receive or respond to RACH. For example, the UE does not receive at least one of SSB, SIB, or paging, and/or does not transmit or perform a RACH procedure.

Optionally, for a cell of cell DTX/DRX or for cell DTX/DRX non-active, the UE action may be at least one of the following: delaying TX/RX transmission and/or reception; or transmitting a first request signal to a cell which is considered as a barred cell. Optionally, the first request signal is used to trigger the network to leave the cell DTX/DRX non-active, or to deactivate/deconfigure the cell DTX/DRX, or to use another set of cell DTX/DRB. Or the first request signal for transitioning to a non-energy-saving mode or state. For example, if the cell is considered to be a barred cell, the time of barred may be 300 seconds, or the time of barred may be a predefined or configured or specific duration, or the time of barred may be a duration of cell DTX/DRX non-active (if the durations are multiple or periodic, one or each of them may be considered to be a duration of barred).

As an implementation, the network device may activate or deactivate the cell DTX/DRX configuration.

Optionally, configuring the cell DTX/DRX means activating the cell DTX/DRX, and deconfiguring means deactivating the cell DTX/DRX. Optionally, the cell DTX/DRX configuration is activated or deactivated by dedicated signaling. Optionally, the dedicated signaling may be DCI or MAC CE. Optionally, the dedicated signaling is used to indicate whether cell DTX/DRX is activated/deactivated, and/or which set of cell DTX/DRX is activated/deactivated.

Optionally, the dedicated signaling may be RRC, that is, configuration, that is, activation of the cell DTX/DRX configuration, or whether or not the cell DTX/DRX is activated/deactivated, and/or which set of cell DTX/DRX is activated/deactivated in the RRC message while configuring.

For example, the cell DTX/DRX configuration may be one or more sets. Optionally, the NW may indicate the UE to activate or deactivate one set of cell DTX/DRX configurations from a plurality of sets. Optionally, the network instructs the UE to activate or deactivate the configured set of cell DTX/DRX configurations.

For example, when there are multiple sets of cell DTX/DRX configurations, the cell may activate or use only one set of cell DTX/DRX configurations, or the cell may activate or use multiple sets of cell DTX/DRX simultaneously (different cell DTX/DRXs are used simultaneously/superimposed), or a cell may activate or utilize the same cell DTX/DRX for different UEs, or it may activate or utilize different cell DTX/DRX configurations for different UEs (for example, for different UE types, for different UE QoS requirements, or for idle/inactive versus connected UEs).

For example, the cell DTX/DRX configuration may be broadcast in system information.

For example, the cell DTX/DRX configuration may be indicated in a dedicated RRC message. Optionally, the dedicated RRC message may be a group message or a UE-specific RRC message.

For example, if both the system information (or common RRC) and the dedicated RRC receive the cell DTX/DRX configuration, the UE prioritizes or uses the cell DTX/DRX configuration carried by the dedicated RRC.

For example, if both the system information (or common RRC) and the UE-specfic RRC receive the cell DTX/DRX configuration, the UE takes precedence or uses the cell DTX/DRX configuration carried by the UE-specfic RRC.

For example, if there are multiple methods (such as one or more indication methods among public RRC, SIB, system information, dedicated RRC, UE-specific RRC, dedicated MAC CE, common DCI, or UE-specific DCI) to activate or deactivate cell DTX/DRX, the UE may activate or deactivate cell DTX/DRX according to the latest indication. Optionally, the UE may activate or deactivate cell DTX/DRX based on the indication from the signaling with the highest priority (optionally, the priority may be predefined, e.g., dedicated signaling may have higher priority than common signaling, or UE-specific signaling may have higher priority than common signaling, or UE-specific signaling may have higher priority than other dedicated signaling, or vice versa; the priority may also be indicated by the network or predefined). Furthermore, the UE may activate or deactivate cell DTX/DRX using indications from dedicated signaling (such as dedicated RRC, UE-specific RRC, dedicated MAC CE, common DCI, or UE-specific DCI). Or, the UE may activate or deactivate cell DTX/DRX according to the indication from UE-specific signaling (such as UE-specific RRC, dedicated MAC CE, or UE-specific DCI). Optionally, after a first duration has elapsed since the previous indication was used, the UE may activate or deactivate cell DTX/DRX according to the latest indication (for example, if the previous indication instructed cell DTX/DRX activation, the UE may only update the activation/deactivation status of cell DTX/DRX or activate/deactivate cell DTX/DRX according to the latest indication after the first duration specified for that indication has passed, even if the latest indication is received within or after the first duration).

For example, when there are multiple sets of cell DTX/DRX configurations, if different indication information activates or deactivates different cell DTX/DRX configurations, the UE follows each indication information, activates or deactivates the corresponding cell DTX/DRX configuration, or maintains the cell DTX/DRX activation/deactivation state; or the UE only follows the latest indication information, activates or deactivates the cell DTX/DRX configuration corresponding to the latest indication information, or maintains the cell DTX/DRX activation/deactivation state (optionally, deactivates other cell DTX/DRX configurations); or the UE only follows the UE-specific indication information, activates or deactivates the cell DTX/DRX configuration corresponding to the latest indication information, or maintains the cell DTX/DRX activation/deactivation state (optionally, deactivates other cell DTX/DRX configurations); or the UE only follows the dedicated indication information, activates or deactivates the cell DTX/DRX configuration corresponding to the latest indication information, or maintains the cell DTX/DRX activation/deactivation state (optionally, deactivates other cell DTX/DRX configurations); or the UE only follows the indication information with the highest priority, activates or deactivates the cell DTX/DRX configuration corresponding to the latest indication information, or maintains the cell DTX/DRX activation/deactivation state (optionally, deactivates other cell DTX/DRX configurations).

For example, when there are multiple sets of cell DTX/DRX configurations, if different indication information activates or deactivates the same cell DTX/DRX configuration, the UE follows each indication information, activates or deactivates the corresponding cell DTX/DRX configuration, or maintains the cell DTX/DRX activation/deactivation state; or the UE only follows the latest indication information, activates or deactivates the cell DTX/DRX configuration corresponding to the latest indication information, or maintains the cell DTX/DRX activation/deactivation state (optionally, deactivates other cell DTX/DRX configurations); or the UE only follows the UE-specific indication information, activates or deactivates the cell DTX/DRX configuration corresponding to the latest indication information, or maintains the cell DTX/DRX activation/deactivation state (optionally, deactivates other cell DTX/DRX configurations); or the UE activates or deactivates the cell DTX/DRX configuration corresponding to the latest indication information only with the dedicated indication information or maintains the cell DTX/DRX activation/deactivation state (optionally, deactivates other cell DTX/DRX configurations); or the UE only follows the indication information with the highest priority, activates or deactivates the cell DTX/DRX configuration corresponding to the latest indication information, or maintains the cell DTX/DRX activation/deactivation state (optionally, deactivates other cell DTX/DRX configurations).

For example, the dedicated signaling may be UE group common, cell common, or UE-specific.

For example, the dedicated signaling may be transmitted repeatedly. For example, the dedicated signaling may be repeated N times. Optionally, the N times may be pre-configured or scheduled indicated.

For example, the dedicated signaling carries an identification of the cell DTX/DRX, such as index.

For example, the dedicated information indicates activation/deactivation of one cell DTX/DRX, or activation/deactivation of one group or one set of cell DTX/DRXs, or activation/deactivation of a plurality of cell DTX/DRXs.

For example, dedicated information indicating activation and deactivation of one or more cell DTX/DRX. For example, at least one cell DTX/DRX activation is indicated, and at least one cell DTX/DRX deactivation is indicated.

For example, the dedicated information indicates only activation or deactivation of one or more cell DTX/DRX. For example, only at least one cell DTX/DRX is indicated to be active, or only at least one cell DTX/DRX is indicated to be deactivated.

As an implementation, the UE performs feedback for activation or deactivation of the cell DTX/DRB. Optionally, the UE performs feedback for dedicated signaling that activates or deactivates the cell DTX/DRX configuration. Optionally, the UE performs feedback for a signaling indication to activate or deactivate the cell DTX/DRX configuration.

Optionally, the dedicated signaling may be common signaling.

Optionally, the UE uses the MAC CE to feedback whether signaling of activating or deactivating the cell DTX/DRX configuration has been received. Optionally, the signaling is one or more of the above-described signalings. Optionally, the signaling may be a PDCCH.

Optionally, the MAC CE has a fixed size, and/or the MAC CE carries information corresponding to all cell DTX/DRX configurations. For example, all cells DTX/DRX are instructed by bitmap to configure their corresponding activation/deactivation information to indicate whether it is received (for example, 1 means received, 0 means not received). For example, the index of the cell DTX/DRX indicated by the received activation/deactivation information is indicated by feedback.

For example, the MAC CE has a fixed size, and/or the MAC CE carries information corresponding to all cell DTX/DRX configurations. For example, all cells DTX/DRX are instructed by bitmap to configure whether their corresponding PDCCH is received (for example, 1 means received, 0 means not received). For example, the index of the cell DTX/DRX indicating the received PDCCH is fed back.

For example, the MAC CE has a fixed size, and/or the MAC CE carries information corresponding to all cell DTX/DRX configurations. For example, indicate via bitmap whether all cell DTX/DRX configurations are active or deactivated (e.g. 1 for active, 0 for deactivated). For example, the index of the relevant cell DTX/DRX is indicated by feedback.

For example, the MAC CE has a variable size and/or carries information corresponding to the cell DTX/DRX configuration corresponding to the received PDCCH. Optionally, the feedback information carries an index of the cell DTX/DRX configuration corresponding to the PDCCH.

For example, the MAC CE is a variable size and/or carries information corresponding to the cell DTX/DRX configuration of an activation/deactivation state change. Optionally, the feedback information carries one or more cell DTX/DRX configured indexes, or carries information indicating the cell DTX/DRX whose activation/deactivation state change by bitmap (e.g., 1, representing activation or state change, or 0, representing deactivation or state unchanged).

For example, the MAC CE is of variable size and/or carries information corresponding to the cell DTX/DRX configuration indicated by the activation/deactivation indication signaling. Optionally, the feedback information carries one or more cell DTX/DRX configured indexes, or carries bitmap information indicating the cell DTX/DRX indicated by the activation/deactivation indication signaling (e.g., 1, which represents activation or signaling received, or 0, which represents deactivation or signaling not received).

For example, the UE uses the MAC CE to feed back the activation or deactivation status of the cell DTX/DRX. Optionally, the feedback information carries information of the cell DTX/DRX configuration corresponding to the PDCCH (such as identification and/or status and/or PDCCH reception status).

For example, the MAC CE has a fixed size and/or carries information corresponding to all cell DTX/DRX configurations. For example, indicates the status and/or identity of all cell DTX/DRX configurations. For example, indicate whether all cell DTX/DRX configurations are active or deactivated via bitmap (e.g. 1 for active and 0 for deactivated). For example, the index of the activated or deactivated cell DTX/DRX, and/or the activated/deactivated status, is indicated by feedback.

For example, the MAC CE has a fixed size and/or carries information corresponding to a specific or one cell DTX/DRX configuration. For example, a bitmap indicates whether a particular or one cell DTX/DRX configuration is active or deactivated (e.g. 1 for active and 0 for deactivated). For example, the index of the activated or deactivated cell DTX/DRX, and/or the activated/deactivated status, is indicated by feedback.

For example, the MAC CE has a variable size and/or carries information corresponding to the cell DTX/DRX configuration corresponding to the received PDCCH. Optionally, the feedback information includes an index of the cell DTX/DRX configuration corresponding to the PDCCH and/or an activation/deactivation state of the corresponding cell DTX/DRX.

Optionally, the UE uses the MAC CE to feed back the activation or deactivation state of the cell DTX/DRX. Optionally, the feedback information carries information of the cell DTX/DRX configuration indicated by the activation/deactivation signaling (such as identification and/or status and/or reception of the activation/deactivation signaling).

For example, the MAC CE has a fixed size and/or carries information corresponding to all cell DTX/DRX configurations. For example, indicates the status and/or identity of all cell DTX/DRX configurations. For example, indicate via bitmap whether all cell DTX/DRX configurations are active or deactivated (e.g. 1 for active, 0 for deactivated). For example, the index of the activated or deactivated cell DTX/DRX, and/or the activated/deactivated status, is indicated by feedback.

For example, the MAC CE has a fixed size and/or carries information corresponding to a specific or one cell DTX/DRX configuration. For example, a bitmap indicates whether a particular or one cell DTX/DRX configuration is active or deactivated (e.g. 1 for active and 0 for deactivated). For example, the index of the activated or deactivated cell DTX/DRX, and/or the activated/deactivated status, is indicated by feedback.

Optionally, the MAC CE has a variable size and/or carries information corresponding to the cell DTX/DRX configuration corresponding to the received signaling. Optionally, the feedback information includes an index of the cell DTX/DRX configuration corresponding to the signaling and/or an activation/deactivation state of the corresponding cell DTX/DRX.

As an implementation, for a terminal that does not receive the dedicated PDCCH, or does not receive the activation/deactivation signaling, or does not activate the specific cell DTX/DRX, or does not activate the specific cell DTX/DRX, or does not activate the cell DTX/DRX, or does not activate the cell DTX/DRX, the network may transmit the dedicated signaling to perform reactivation or deactivation.

It should be noted that each of the above-described embodiments may work alone or may be used in combination with other embodiments.

Note that "/" mentioned in the embodiments of the present disclosure means "and/or".

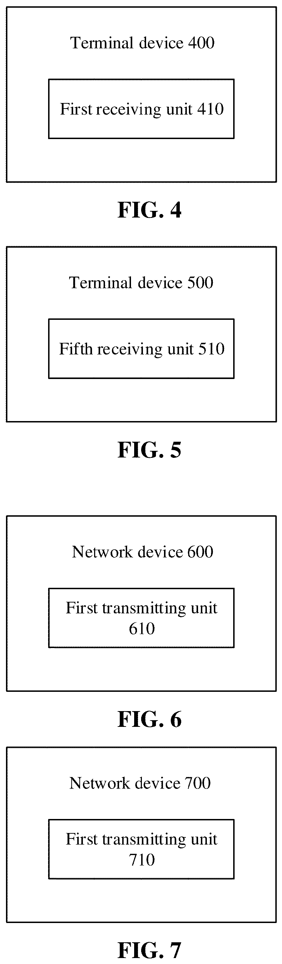

Embodiments of the method of the present disclosure are described in detail above with reference to FIGS. 1 to 3, and embodiments of the device of the present disclosure are described in detail below with reference to FIGS. 4 to 12. It should be understood that the description of the method embodiment and the description of the device embodiment correspond to each other, and therefore, the portions not described in detail can be referred to the foregoing method embodiments.

FIG. 4 is a schematic structural diagram of a terminal device according to an embodiment of the present disclosure. The terminal device 400 may include a first receiving unit 410.

The first receiving unit 410 is configured to receive first information for one or more of: indicating a first cell and/or second information; identifying the first cell; synchronizing with the first cell; or providing information of the first cell; wherein the second information includes information associated with the first cell, and the first cell is a cell that does not transmit part or all of common signals.

In some embodiments, in a case where the first information is acquired, the terminal device acquires the second information.

In some embodiments, the terminal device performs one or more of the following operations based on the first information: acquiring a time-frequency resource location of the second information; transmitting first request information; identifying the first cell; performing measurements; performing cell selection or reselection; camping; downlink synchronization with the first cell; performing a random access channel (RACH) procedure in the first cell; receiving a paging message in the first cell; accessing the first cell; determining whether to camp on the first cell; determining whether to perform cell selection; determining whether to perform cell reselection; determining whether to perform a cell handover; determining whether to perform cell redirection; determining whether to select the first cell; determining whether to reselect the first cell; determining whether to handover to the first cell; or determining whether to redirect to the first cell; and determining whether to use the first cell as a secondary cell; wherein the first request information is associated with the first cell.

In some embodiments, the first request information is used to request one or more of the following operations: transmitting or acquiring one or more common signals of the first cell; transmitting or acquiring one or more common signals not transmitted, broadcasted, or provided by the first cell; transmitting or acquiring part or all of the system information/system information content of the first cell; transmitting or acquiring part or all of the system information/system information content not transmitted, broadcasted or provided by the first cell; or a transition of an operating mode or operating state of the first cell.

In some embodiments, the transition of the operating mode or operating state includes one or more of: a transition between an energy-saving mode and a non-energy-saving mode; a transition between a state in which part or all of the common signal is not transmitted and a normal operating state; a transition between a state in which one or more common signals are not transmitted, broadcasted or provided and a normal operating state; a transition between a state in which part or all of the system information/system information content are not transmitted and a normal operating state; a transition between a state in which part or all of the system information/system information content is not transmitted, not broadcasted, or not provided and a normal operating state; and a transition between a state in which part or all of the common signal is not transmitted and a state in which part or all of the common signal is transmitted; wherein the normal operation state is a normal transmission state, a state in which all the common signals are transmitted, or a state in which minimum system information (MSI) is transmitted.

In some embodiments, based on the request result of the first request information, the terminal device determines one or more of the following information: whether the terminal device can camp on the first cell; Whether it is able to select the first cell; whether it is able to reselect the first cell; whether to perform a RACH procedure in the first cell; whether to receive paging in the first cell; whether to handover to the first cell; whether to establish a connection or operation in the first cell; or whether it is redirected to the first cell.

In some embodiments, the second information includes one or more of: time-frequency resources of the first cell; a preamble of the first cell; RACH configuration information of the first cell; physical random access channel (PRACH) configuration information of the first cell; a time-frequency resource for transmitting the first request information; and configuration information of the first request information.

In some embodiments, the terminal device determines whether to camp on, select, reselect, handover, redirect, or access the first cell; whether to receive paging in the first cell; whether to perform a RACH procedure in the first cell; or determines at which cell/frequency point to camp on, select, reselect, handover, redirect, receive paging, perform a RACH procedure or access based on one or more of the following information: whether the first information is detected; whether the second information is acquired; whether a time-frequency resource location of the second information is acquired; whether it is able to transmit the first request information; a measurement result of the first information; a measurement result of the second cell; a comparison result of the measurement result of the first information with the measurement result of the second cell; data to be transmitted; R criterion; S criterion; whether the terminal device supports carrier aggregation (CA) and/or dual connectivity (DC); slice information of the terminal device; or support of network slices by the first cell and/or the second cell.

In some embodiments, after acquiring at least one of the SSB or SIB of the first cell, the terminal device determines whether to camp on the first cell, reselect the first cell, or select the first cell.

In some embodiments, at least one of the SSB or SIB of the first cell is obtained from the first cell and/or obtained from the second cell.

In some embodiments, if the measurement result of the first information is greater than or equal to a first threshold, the terminal device camps on, selects or reselects the first cell.

In some embodiments, if a comparison result of the measurement result of the first information and the measurement result of the second cell is greater than a second threshold, or if the measurement result of the first information is greater than a third threshold and the measurement result of the second cell is less than a fourth threshold, the terminal device camps on, selects or reselects the first cell.

In some embodiments, the comparison result is determined based on the measurement result of the first information and the measurement result of the second cell; or the comparison result is determined based on the correction result associated with the measurement result of the first information, and the measurement result of the second cell.

In some embodiments, the measurement result of the second cell includes measurements of one or more of a discovery signal, an SSB signal, a tracking reference signal, a simplified SSB signal, or a non-SSB signal.

In some embodiments, if the measurement result of the current serving cell of the terminal device is less than a third threshold, the terminal device camps on, selects or reselects the first cell.

In some embodiments, if the data to be transmitted by the terminal device or the amount of data to be transmitted is greater than a fourth threshold, the terminal device camps on, selects or reselects the first cell.

In some embodiments, if the measurement result of the first information satisfies an S criterion or a cell selection criterion, the terminal device selects the first cell.

In some embodiments, the terminal device reselects the first cell if the measurement result of the first information satisfies one or more of: R criterion; S criterion; or a cell reselection criterion.

In some embodiments, if a slice supported by the first cell is the same as a slice required by the terminal device, or the slice supported by the first cell includes the slice required by the terminal device, the terminal device camps on, selects or reselects the first cell.

In some embodiments, if the terminal device supports CA/DC, when the terminal device accesses the first cell, the first cell is a secondary cell of the terminal device.

In some embodiments, if the terminal device supports CA/DC, when the terminal device accesses the first cell, the first cell is a secondary cell of the terminal device.

In some embodiments, the device further includes a first transmitting unit configured to transmit a measurement report to a current serving cell, and the measurement report is configured to indicate a channel quality of the first cell.

In some embodiments, the first transmitting unit is configured to: if the measurement result of the first information is greater than a first threshold, the terminal device transmits a measurement report to the current serving cell.

In some embodiments, the device further includes a second receiving unit configured to receive first indication information transmitted by the second cell, wherein the first indication information is determined based on the measurement report, and the first indication information is used to indicate the terminal device to handover or redirect to the first cell, or that the terminal device transmits simultaneously with the first cell and the second cell.

In some embodiments, if the terminal device has CA/DC capability, the first indication information is used to indicate that the first cell is used as a secondary cell of the terminal device, and the terminal device transmits simultaneously with the first cell and the second cell; if the terminal device does not have CA/DC capability, the first indication information is used to indicate the terminal device to handover to the first cell.

In some embodiments, the terminal device performs synchronization with the first cell based on a timing advance amount of the second cell and a difference between the timing advance amount of the second cell and the timing advance amount of the first cell.

In some embodiments, the device further includes a first performing unit configured to perform a random access procedure with the first cell or synchronize with the first cell based on RACH configuration information of the first cell.

In some embodiments, the terminal device performs a random access procedure with the first cell when one or more of the following conditions are satisfied: the first cell is a camping cell; the first cell is a cell selected cell; the first cell is a cell reselected cell; the channel quality of the first cell is greater than a fifth threshold; the terminal device has data to be transmitted; the amount of data to be transmitted is greater than or equal to a sixth threshold; the slice supported by the first cell is the same as the slice required by the terminal device; or the slice supported by the first cell includes a slice required by the terminal device.

In some embodiments, the device further includes: a second performing unit configured to: when the terminal device transmits first request information or accesses the first cell, receive a physical downlink control channel (PDCCH) in the first cell, and/or perform transmission with the first cell; or receiving a PDCCH in the first cell and/or performing transmission with the first cell after the terminal device transmits the first request information or accesses the first cell for a first duration.

In some embodiments, the device further includes: a third performing unit configured to receive a PDCCH in the first cell and/or perform transmission with the first cell; or for receiving a PDCCH in the first cell and/or performing transmission with the first cell within a second duration.

In some embodiments, the device further includes a fourth performing unit configured to fall back to a second cell or transmit in the second cell after the second duration.

In some embodiments, the device further includes: a fifth performing unit configured to perform transmission with the first cell and/or the second cell in a time division multiplexing (TDM); For alternately performing transmissions with the first cell and the second cell; Configured for the terminal device to perform transmission with the first cell and/or the second cell in a TDM after the second duration; or for the terminal device to alternately perform transmissions with the first cell and the second cell after the second duration.

In some embodiments, after the terminal device fallback to the second cell, or through the second cell, the terminal device performs one or more of: updating information of the first cell; updating system information of the first cell; updating TA information of the first cell; receiving paging in a second cell; determining a paging message not supported by the first cell; acquiring update information of a transmission resource configuration with the first cell; or performing transmission with the second cell.

In some embodiments, the device further includes a third receiving unit for receiving a paging message from the second cell.

In some embodiments, the third receiving unit is configured to: if the first cell does not transmit a paging message, the terminal device receives a paging message of the second cell from a second cell; or if the first cell does not transmit a paging message, the terminal device receives a paging message for the first cell from a second cell.

In some embodiments, the device further includes a fourth receiving unit configured to receive a paging message from the first cell.

In some embodiments, the location of the paging message satisfies one or more of the following requirements: the location of the paging message is associated with the location of the first information; the location of the paging message is associated with a location of the second information; positions that occur periodically; or an effective location interval.

In some embodiments, before the terminal device receives the first information, the device further includes: a second transmitting unit configured to transmit second indication information, and the second indication information is configured to indicate the first cell or the second cell to transmit the first information.

In some embodiments, the resource for transmitting the second indication information is a predefined resource or a resource of the second cell.

In some embodiments, before the terminal device receives the first information, the device further includes a fourth receiving unit configured to receive third information transmitted by the second cell, and the third information is configured to indicate a configuration of the first information and/or a time-frequency resource location.

In some embodiments, the second cell is a primary cell of the terminal device, an anchor cell, a cell that provides the first cell information, a cell that controls or indicates the first cell, a cell that receives a request from the terminal device for the first cell, or a cell that communicates with the terminal device before the terminal device accesses the first cell.

In some embodiments, the first information is used to indicate a cell associated with the first cell, a cell synchronized with the first cell, or an anchor cell of the first cell.

In some embodiments, the common signal of the first cell includes one or more of a synchronization signal block (SSB), a master information block (MIB), a system information block (SIB), a paging message, or system information content.

In some embodiments, the terminal device is in an idle state, an inactive state, or a connected state.

FIG. 5 is a schematic structural diagram of another terminal device according to an embodiment of the present disclosure. The terminal device 500 may include a fifth receiving unit 510.

The fifth receiving unit 510 is configured to receive fourth information and/or fifth information transmitted by a network device, the fourth information is configured to indicate discontinuous transmission (DTX) and/or discontinuous reception (DRX) configuration information of a third cell, and the fifth information is configured to indicate activation/deactivation of the configuration information of DTX/DRX of the third cell, wherein the network device is a network device corresponding to the third cell.

In some embodiments, the fourth information is used for one or more of: if the fourth information includes configuration information of DTX/DRX of the third cell, the fourth information represents or indicates activation of the configuration information of DTX/DRX; if the fourth information does not include configuration information of DTX/DRX of the third cell, the fourth information represents or indicates deactivation of the configuration information of DTX/DRX; the fourth information carries a first identifier, and the first identifier is used to indicate activation/deactivation of the configuration information of DTX/DRX of the third cell; the fourth information is used to indicate instant activation/deactivation of the configuration information of DTX/DRX of the third cell; the fourth information indicates that the fifth information does not exist; or the fourth information indicates that the fifth information is not used.

In some embodiments, if the fourth information includes configuration information of DTX/DRX of the third cell, the fourth information is updated by a system information update procedure or indication information carried by dedicated downlink control information (DCI) signaling.

In some embodiments, if the terminal device receives a plurality of pieces of indication information to activate/deactivate the configuration of DTX/DRX, the terminal device determines the indication information to be used according to one or more of the following information: a transmission or reception time of the plurality of pieces of indication information; a priority of activation/deactivation indication information of the configuration information of DTX/DRX; or a usage duration of the configuration information of DTX/DRX used by the terminal device before receiving the plurality of pieces of indication information.

In some embodiments, the plurality of pieces of indication information of activation/deactivation of the configuration of DTX/DRX is used to indicate an activation/deactivation state of the same configuration information of DTX/DRX, or activation/deactivation states of a plurality of pieces of configuration information of DTX/DRX.

In some embodiments, the plurality of pieces of indication information of activation/deactivation of the configuration of DTX/DRX is carried in the same type of signaling or in different types of signaling.

In some embodiments, if the terminal device receives the plurality of pieces of indication information of activation/deactivation of the configuration of DTX/DRX, and the plurality of pieces of indication information are carried in different types of signaling, the terminal device performs each of the plurality of pieces of indication information; the terminal device performs the latest indication information among the plurality of pieces of indication information; or the terminal device performs the indication information carried in the terminal device-specific signaling among the plurality of pieces of indication information.

In some embodiments, during the sleep period of the third cell in the DTX/DRX, the terminal device performs one or more of: not receiving one or more of the common signals of the third cell; not receiving system information or system information changes associated with the third cell; not transmitting RACH information of the third cell; delaying transmitting and/or receiving information of the third cell; transmitting second request information to the third cell; determining that the third cell is an access-prohibited cell; or not performing a random access procedure for the third cell.

In some embodiments, the second request information is used to request the network device to indicate the third cell to perform one or more of: leaving a sleep state of DTX/DRX; deactivating/deconfiguring configuration information of DTX/DRX; replacing configuration information of DTX/DRX; or switching to a non-energy-saving mode.

In some embodiments, the fourth information/or the fifth information carries one or more of: dedicated radio resource control (RRC) signaling; dedicated downlink control information (DCI) signaling; dedicated Media Access Control Information (MAC CE); terminal device-specific RRC signaling; system messages; or broadcasting the message.

In some embodiments, among the terminal device-specific RRC signaling, the dedicated RRC signaling, the dedicated DCI signaling, and the indication information for activation/deactivation of the configuration information of DTX/DRX carried in the dedicated MAC CE, the indication information for activation/deactivation of the configuration information of DTX/DRX carried by the terminal device-specific RRC signaling has the highest priority.

In some embodiments, the device further includes a third transmitting unit configured to transmit sixth information to the network device, and the sixth information is feedback information for activation/deactivation indication information of configuration information of DTX/DRX.

In some embodiments, the sixth information is used to indicate one or more of: whether the indication information for activation/deactivation is received; or an activation/deactivation status of the one or more sets of configuration information of DTX/DRX.

In some embodiments, the common signal of the third cell includes one or more of a synchronization signal block (SSB), a master information block (MIB), a system information block (SIB), a paging message, or system information content.

In some embodiments, the device further includes: a sixth receiving unit configured to receive the fourth information repeatedly transmitted by the network device, and the number of times for which the fourth information is repeatedly transmitted is N, wherein N is an integer greater than or equal to 1; and/or is configured to receive the fifth information repeatedly transmitted by the network device, wherein the number of times for which the fifth information is repeatedly transmitted is M, wherein M is an integer greater than or equal to 1.

FIG. 6 is a schematic structural diagram of a network device according to an embodiment of the present disclosure. The network device shown in FIG. 6 may be a network device corresponding to the first cell. The network device 600 may include a first transmitting unit 610.

A first transmitting unit 610, configured to transmit first information to the terminal device, the first information being used for one or more of: indicating the first cell and/or second information; identifying the first cell; synchronizing with the first cell; or providing information of the first cell; wherein the second information includes information associated with the first cell, and the first cell is a cell that does not transmit part or all of common signals.

In some embodiments, before transmitting the first information to the terminal device, the network device further includes:
A first receiving unit configured to receive second indication information transmitted by the terminal device, wherein the second indication information is configured to indicate the first cell to transmit the first information; or is used for receiving third indication information transmitted by the second cell, wherein the third indication information is used for indicating the first cell to transmit the first information.

In some embodiments, the network device further includes: a second receiving unit configured to receive first request information transmitted by the terminal device, the first request information being associated with the first cell; or for receiving third request information transmitted by the second cell, wherein the third request information is associated with the first request information.

In some embodiments, the first request information or the third request information is used to request the first cell to perform one or more of: transmitting the second information; or transmitting one or more common signals of the first cell; transmitting one or more common signals not transmitted, broadcasted, or provided by the first cell; transmitting part or all of the system information/system information content of the first cell; transmitting part or all of the system information/system information content not transmitted, broadcasted, or provided by the first cell; or a transition of an operating mode or operating state of the first cell.

In some embodiments, the transition of the operating mode or operating state includes one or more of: a transition between an energy-saving mode and a non-energy-saving mode; a transition between a state in which one or more common signals are not transmitted, broadcasted or provided and a normal operating state; a transition between a state in which part or all of the system information/system information content are not transmitted and a normal operating state; a transition between a state in which part or all of the system information/system information content is not transmitted, not broadcasted, or not provided and a normal operating state; or a transition between a state in which part or all of the common signal is not transmitted and a state in which part or all of the common signal is transmitted; wherein the normal operation state is a normal transmission state, a state in which all the common signals are transmitted, or a state in which minimum system information (MSI) is transmitted.

In some embodiments, the second information includes one or more of: time-frequency resources of the first cell; a preamble of the first cell; random access channel (RACH) configuration information of the first cell; physical random access channel (PRACH) configuration information of the first cell; a time-frequency resource for transmitting the first request information; or configuration information of the first request information.

In some embodiments, the first cell performs synchronization with the terminal device based on a timing advance amount of a second cell and a difference between the timing advance amount of the second cell and the timing advance amount of the first cell.

In some embodiments, the network device further includes a first performing unit configured to perform a random access procedure with the terminal device or synchronize with the terminal device based on the RACH configuration information.

In some embodiments, the first cell performs a random access procedure with the terminal device when one or more of the following conditions are satisfied: the first cell is a camping cell; the first cell is a cell selected cell; the first cell is a cell reselected cell; the channel quality of the first cell is greater than a fifth threshold; the terminal device has data to be transmitted; the amount of data to be transmitted is greater than or equal to a sixth threshold; the slice supported by the first cell is the same as the slice required by the terminal device; or the slice supported by the first cell includes a slice required by the terminal device.

In some embodiments, the network device further includes: a second performing unit configured to transmit a PDCCH to the terminal device and/or perform transmission with the terminal device; or for transmitting a physical downlink control channel (PDCCH) to the terminal device and/or performing transmission with the terminal device within a second duration.

In some embodiments, the network device further includes a third performing unit configured to stop transmission with the terminal device after the second duration.

In some embodiments, the network device further includes: a fourth performing unit configured to perform transmission with the terminal device by the first cell and/or the second cell using a time division multiplexing (TDM); For the first cell and the second cell to alternately perform transmissions with the terminal device; Configured to perform transmission with the terminal device by the first cell and/or the second cell using a time division multiplexing (TDM) after the second duration; or for the first cell and the second cell alternately performing transmission with the terminal device after the second duration.

In some embodiments, if the first cell transmits a paging message, the location of the paging message satisfies one or more of the following requirements: the location of the paging message is associated with the location of the first information; the location of the paging message is associated with a location of the second information; positions that occur periodically; or an effective location interval.

In some embodiments, the second cell is a primary cell of the terminal device, an anchor cell, a cell that provides the first cell information, a cell that controls or indicates the first cell, a cell that receives a request from the terminal device for the first cell, or a cell that communicates with the terminal device before the terminal device accesses the first cell.

In some embodiments, the first information is used to indicate a cell associated with the first cell, a cell synchronized with the first cell, or an anchor cell of the first cell.

In some embodiments, the common signal of the first cell includes one or more of a synchronization signal block (SSB), a master information block (MIB), a system information block (SIB), a paging message, or system information content.

FIG. 7 is a schematic structural diagram of another network device provided by an embodiment of the present disclosure. The network device shown in FIG. 7 may be a network device corresponding to the second cell. The network device 700 may include a first transmitting unit 710.

A first transmitting unit 710, configured to transmit, to the terminal device, first information for one or more of: indicating the first cell and/or second information; identifying the first cell; synchronizing with the first cell; or providing information of the first cell; wherein the second information includes information associated with the first cell, and the first cell is a cell that does not transmit part or all of common signals.

In some embodiments, before the transmission of the first information to the terminal device, the network device further includes: a first receiving unit configured to receive second indication information transmitted by the terminal device, and the second indication information is configured to indicate the second cell to transmit the first information.

In some embodiments, after receiving the second indication information, the network device further includes a second transmitting unit configured to transmit third indication information to the first cell, and the third indication information is configured to indicate the first cell to transmit the first information.

In some embodiments, the network device further includes a second receiving unit configured to receive first request information transmitted by the terminal device, and the first request information is associated with the first cell.

In some embodiments, the network device further includes: a third transmitting unit configured to transmit part or all of the common signals of the first cell; or third request information for transmission to the first cell, the third request information being associated with the first request information.

In some embodiments, the first request information or the third request information is used to request one or more of: transmitting or acquiring the second information; transmitting or acquiring one or more common signals of the first cell; transmitting or acquiring one or more common signals not transmitted, broadcasted, or provided by the first cell; transmitting or acquiring part or all of the system information/system information content of the first cell; transmitting or acquiring part or all of the system information/system information content not transmitted, broadcasted or provided by the first cell; or a transition of an operating mode or operating state of the first cell.

In some embodiments, the transition of the operating mode or operating state includes one or more of: a transition between an energy-saving mode and a non-energy-saving mode; a transition between a state in which one or more common signals are not transmitted, broadcasted or provided and a normal operating state; a transition between a state in which part or all of the system information/system information content are not transmitted and a normal operating state; a transition between a state in which part or all of the system information/system information content is not transmitted, not broadcasted, or not provided and a normal operating state; or a transition between a state in which part or all of the common signal is not transmitted and a state in which part or all of the common signal is transmitted; wherein the normal operation state is a normal transmission state, a state in which all the common signals are transmitted, or a state in which minimum system information (MSI) is transmitted.

In some embodiments, the second information includes one or more of: time-frequency resources of the first cell; a preamble of the first cell; random access channel (RACH) configuration information of the first cell; physical random access channel (PRACH) configuration information of the first cell; a time-frequency resource for transmitting the first request information; or configuration information of the first request information.

In some embodiments, the network device further includes: an performing unit configured to perform transmission with the terminal device by the second cell and/or the first cell using a time division multiplexing (TDM); For the second cell to alternately perform transmissions with the terminal device with the first cell; Configured to perform transmission with the terminal device by the second cell and/or the first cell using a time division multiplexing (TDM) after the second duration; or for the second cell alternately performing transmission with the terminal device with the first cell after the second duration.

In some embodiments, the network device further includes a fourth transmitting unit configured to transmit a paging message to the terminal device.

In some embodiments, the fourth transmitting unit is configured to: if the first cell does not transmit a paging message, the second cell transmits a paging message of the second cell to the terminal device; or if the first cell does not transmit a paging message, the second cell transmits a paging message for the first cell to the terminal device.

In some embodiments, the network device further includes: the second cell transmits third information to the terminal device, and the third information is used to indicate a configuration of the first information and/or a time-frequency resource location.

In some embodiments, the network device further includes a third receiving unit configured to receive a measurement report transmitted by the terminal device if the second cell is a current serving cell of the terminal device, and the measurement report is configured to indicate a channel quality of the first cell.

In some embodiments, the network device further includes a second performing unit configured to indicate or trigger the first cell to perform a state transition or indicate the first cell to transmit a part of common signals based on the measurement report, wherein the part of the common signals includes one or more of SSB, SIB, or paging.

In some embodiments, the network device further includes a fourth transmitting unit configured to transmit first indication information to the terminal device, wherein the first indication information is determined based on the measurement report, and the first indication information is used to indicate the terminal device to handover or redirect to the first cell, or that the terminal device transmits simultaneously with the first cell and the second cell.

In some embodiments, if the terminal device has CA/DC capability, the first indication information is used to indicate that the first cell is a secondary cell of the terminal device, or that the terminal device transmits simultaneously with the first cell and the second cell; if the terminal device does not have CA/DC capability, the first indication information is used to indicate the terminal device to handover to the first cell.

In some embodiments, the second cell is a primary cell of the terminal device, an anchor cell, a cell that provides the first cell information, a cell that controls or indicates the first cell, a cell that receives a request from the terminal device for the first cell, or a cell that communicates with the terminal device before the terminal device accesses the first cell.

In some embodiments, the first information is used to indicate a cell associated with the first cell, a cell synchronized with the first cell, or an anchor cell of the first cell.

In some embodiments, the common signal of the first cell includes one or more of a synchronization signal block (SSB), a master information block (MIB), a system information block (SIB), a paging message, or system information content.

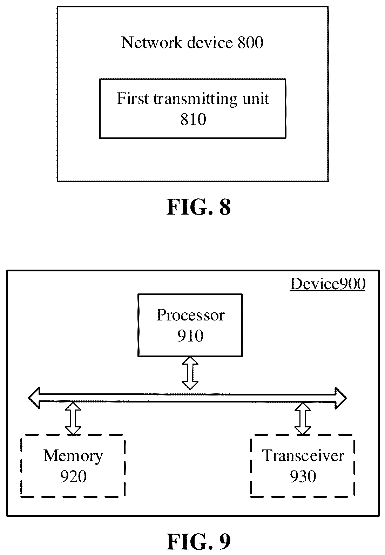

FIG. 8 is a schematic structural diagram of another network device provided by an embodiment of the present disclosure. The network device 800 may include a first transmitting unit 810.

The first transmitting unit 810 is configured to transmit fourth information and/or fifth information to the terminal device, wherein the fourth information is used to indicate discontinuous transmission (DTX) and/or discontinuous reception (DRX) configuration information by a third cell, and the fifth information is used to indicate activation/deactivation of the configuration information of DTX/DRX of the third cell, wherein the network device is a network device corresponding to the third cell.

In some embodiments, the fourth information is used for one or more of: if the fourth information includes configuration information of DTX/DRX of the third cell, the fourth information represents or indicates activation of the configuration information of DTX/DRX; if the fourth information does not include configuration information of DTX/DRX of the third cell, the fourth information represents or indicates deactivation of the configuration information of DTX/DRX; the fourth information carries a first identifier for indicating activation/deactivation of a DTX/DRX configuration of the third cell; the fourth information is used to indicate an instant activation/deactivation of a DTX/DRX configuration of the third cell; the fourth information indicates that the fifth information does not exist; or the fourth information indicates that the fifth information is not used.

In some embodiments, if the fourth information includes configuration information of DTX/DRX of the third cell, the fourth information is updated by a system information update procedure or indication information carried by dedicated downlink control information (DCI) signaling.

In some embodiments, the device further includes: a first receiving unit configured to receive second request information transmitted by the terminal device, wherein the second request information is configured to request the network device to indicate the third cell to perform one or more of the following operations: leaving a sleep state of DTX/DRX; deactivating/deconfiguring configuration information of DTX/DRX; or replacing configuration information of DTX/DRX; and switching to a non-energy saving mode.

In some embodiments, the fourth information and/or the fifth information carries one or more of: dedicated radio resource control (RRC) signaling; dedicated downlink control information (DCI) signaling; or dedicated Media Access Control Information (MAC CE);
Terminal device-specific RRC signaling; system messages; and broadcasting the message.

In some embodiments, among the terminal device-specific RRC signaling, the dedicated RRC signaling, the dedicated DCI signaling, and the indication information for activation/deactivation of the configuration information of DTX/DRX carried in the dedicated MAC CE, the indication information for activation/deactivation of the configuration information of DTX/DRX carried by the terminal device-specific RRC signaling has the highest priority.

In some embodiments, the device further includes a second receiving unit configured to receive sixth information transmitted by the terminal device, and the sixth information is feedback information for activation/deactivation indication information of configuration information of DTX/DRX.

In some embodiments, the sixth information is used to indicate one or more of: whether the indication information for activation/deactivation is received; or an activation/deactivation status of the one or more sets of configuration information of DTX/DRX.

In some embodiments, the device further includes: a second transmitting unit configured to repeatedly transmit the fourth information to the terminal device, and the number of times for which the fourth information is repeatedly transmitted is N, wherein N is an integer greater than or equal to 1; and/or is configured to repeatedly transmit the fifth information to the terminal device, wherein the number of times for which the fifth information is repeatedly transmitted is M, wherein M is an integer greater than or equal to 1.

In an alternative embodiment, the transmitting unit and the receiving unit described above may be the transceiver 930. As shown in FIG. 8, the terminal device 400, the terminal device 500, the network device 600, the network device 700, and the network device 800 may further include a processor 910 and a memory 920.

FIG. 9 is a schematic configuration diagram of an device for communication according to an embodiment of the present disclosure. The dashed line in FIG. 9 indicates that the unit or module is optional. The device 900 may be used to implement the method described in the method embodiments described above. The device 900 may be a chip, a terminal device, or a network device.

The device 900 may include one or more processors 910. The processor 910 may support the device 900 to implement the methods described in the above method embodiments. The processor 910 may be a general-purpose processor or a special-purpose processor. For example, the processor may be a central processing unit (CPU). Optionally, the processor may also be another general purpose processor, a digital signal processor (DSP), an application specific integrated circuit (ASIC), an off-the-shelf programmable gate array (FPGA) or other programmable logic device, a discrete gate or transistor logic device, a discrete hardware component, or the like. The general purpose processor may be a microprocessor or the processor may be any conventional processor or the like.

The device 900 may also include one or more memories 920. The memory 920 has stored a program that can be executed by the processor 910 to cause the processor 910 to perform the method described in the above method embodiments. The memory 920 may be independent of the processor 910 or may be integrated in the processor 910.

The device 900 may also include a transceiver 930. The processor 910 may communicate with other devices or chips through the transceiver 930. For example, the processor 910 may transmit and receive data with other devices or chips through the transceiver 930.

An embodiment of the present disclosure further provides a computer-readable storage medium for storing a program. The computer-readable storage medium can be applied to a terminal or a network device provided by an embodiment of the present disclosure, and the program causes a computer to execute a method executed by the terminal device or the network device in each embodiment of the present disclosure.

Embodiments of the present disclosure also provide a computer program product. The computer program product includes a program. The computer program product can be applied to a terminal or a network device provided by an embodiment of the present disclosure, and the program causes a computer to execute a method executed by the terminal device or the network device in each embodiment of the present disclosure.

Embodiments of the present disclosure also provide a computer program. The computer program can be applied to the terminal device or the network device provided in the embodiment of the present disclosure, and the computer program causes the computer to execute the method executed by the terminal or the network device in the respective embodiments of the present disclosure.

It is to be understood that the terms "system" and "network" may be used interchangeably in this application. In addition, the terminology used in the present disclosure is for explanation of specific embodiments of the present disclosure only, and is not intended to limit the present disclosure. The terms "first," "second," "third," and "fourth," etc. in the specification and claims of the present disclosure and the accompanying drawings are used to distinguish different objects, and are not used to describe a specific order. Furthermore, the terms "including" and "having" and any variations thereof are intended to cover non-exclusive inclusions.

In the embodiments of the present disclosure, the "indication" mentioned may be a direct indication, an indirect indication, or an associated relationship. For example, A indicates B, which may mean that A directly indicates B, for example, B can be acquired by A; it can also be indicated that A indicates B indirectly, for example, A indicates C, and B can be obtained through C; it may also indicate that there is an association relationship between A and B.

In the embodiments of the present disclosure, the reference to "including" may refer to directly including or indirectly including. Optionally, the reference to "including" in the embodiments of the present disclosure may be replaced with "indicating" or "for determining". For example, A includes B, can be replaced with A to indicate B, or A is used to determine B.

In an embodiment of the present disclosure, "B corresponding to A" means that B is associated with A, and B can be determined from A. However, it should also be understood that determining B from A does not mean that B is determined from A alone, and that B may also be determined from A and/or other information.

In the embodiments of the present disclosure, the term "correspondence" may indicate that there is a direct correspondence or indirect correspondence relationship between the two, may indicate that there is a correlation relationship between the two, or may indicate a relationship between indicating and being instructed, configuring and being configured, or the like.

In the embodiment of the present disclosure, "predefined" or "preconfigured" may be realized by storing corresponding codes, tables, or other methods that can be used to indicate relevant information in advance in devices (including, for example, terminal devices and network devices), and the present disclosure does not limit specific implementations thereof. For example, predefined may refer to defined in the protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiment of the present disclosure is only an association relationship describing an association object, and indicates that there may be three kinds of relationships, for example, A and/or B, which may indicate that A exists alone, A and B exist simultaneously, and B exists alone. In addition, the character "/" in this article generally indicates that the related objects before and after are in an "or" relationship.

In various embodiments of the present disclosure, the size of the sequence number of the above-described processes does not mean the sequence of execution, and the sequence of execution of each process should be determined by its function and internal logic, and should not constitute any limitation on the implementation process of the embodiments of the present disclosure.

In several embodiments provided herein, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that includes an integration of one or more available media. The available media may be magnetic media (e.g., floppy disk, hard disk, magnetic tape), optical media (e.g., digital video disc (DVD)), or semiconductor media (e.g., solid state disk (SSD)), etc.

The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of the present disclosure should be based on the scope of protection of the claims.

## Claims

1. A method for wireless communication, comprising:
receiving, by a terminal device, first information, the first information being used for one or more of:
indicating a first cell and/or second information;
identifying the first cell;
synchronizing with the first cell; or
providing information of the first cell;
wherein the second information comprises information associated with the first cell, and the first cell is a cell that does not transmit part or all of common signals.

2. The method of claim 1, wherein the terminal device acquires the second information when the first information is acquired.

3. The method of claim 1 or 2, wherein the terminal device performs, based on the first information, one or more of following operations:
acquiring a time-frequency resource location of the second information;
transmitting first request information;
identifying the first cell;
performing measurements;
performing cell selection or reselection;
camping;
downlink synchronization with the first cell;
performing a random access channel (RACH) procedure in the first cell;
receiving a paging message in the first cell;
accessing the first cell;
determining whether to camp on the first cell;
determining whether to perform cell selection;
determining whether to perform cell reselection;
determining whether to perform a cell handover;
determining whether to perform cell redirection;
determining whether to select the first cell;
determining whether to reselect the first cell;
determining whether to handover to the first cell;
determining whether to redirect to the first cell; or
determining whether to use the first cell as a secondary cell,
wherein the first request information is associated with the first cell.

4. The method of claim 3, wherein the first request information is used to request one or more of:
transmitting or acquiring one or more common signals of the first cell;
transmitting or acquiring one or more common signals not transmitted, broadcasted, or provided by the first cell;
transmitting or acquiring part or all of system information/system information content of the first cell;
transmitting or acquiring part or all of the system information/system information content not transmitted, broadcasted, or provided by the first cell; or
a transition of an operating mode or an operating state of the first cell.

5. The method of claim 4, wherein the transition of the operating mode or operating state comprises one or more of:
a transition between an energy-saving mode and a non-energy-saving mode;
a transition between a state in which part or all of the common signal is not transmitted and a normal operating state;
a transition between a state in which one or more common signals are not transmitted, broadcasted or provided and a normal operating state;
a transition between a state in which part or all of the system information/system information content are not transmitted and a normal operating state;
a transition between a state in which part or all of the system information/system information content is not transmitted, not broadcasted, or not provided and a normal operating state; or
a transition between a state in which part or all of the common signal is not transmitted and a state in which part or all of the common signal is transmitted;
wherein the normal operation state is a normal transmission state, a state in which all the common signals are transmitted, or a state in which minimum system information (MSI) is transmitted.

6. The method of any one of claims 3-5, wherein the terminal device determines, based on a request result of the first request information, one or more of following information:
whether it is able to camp on the first cell;
whether it is able to select the first cell;
whether it is able to reselect the first cell;
whether to perform a RACH procedure in the first cell;
whether to receive paging in the first cell;
whether to handover to the first cell;
whether to establish a connection or operation in the first cell; or
whether to redirect to the first cell.

7. The method of any one of claims 1-6, wherein the second information comprises one or more of following information:
time-frequency resources of the first cell;
a preamble of the first cell;
random access channel (RACH) configuration information of the first cell;
physical random access channel (PRACH) configuration information of the first cell;
a time-frequency resource for transmitting the first request information; or
configuration information of the first request information.

8. The method of any one of claims 1-7, wherein the terminal device determines whether to camp on, select, reselect, handover, redirect, or access the first cell; whether to receive paging in the first cell; whether to perform a physical random access channel (PRACH) procedure in the first cell; or determines which cell/frequency point to camp on, select, reselect, handover, redirect, receive paging, perform RACH procedure or access based on one or more of following information:
whether the first information is detected;
whether the second information is acquired;
whether a time-frequency resource location of the second information is acquired;
whether it is able to transmit the first request information;
a measurement result of the first information;
a measurement result of the second cell;
a comparison result of the measurement result of the first information with the measurement result of the second cell;
data to be transmitted;
R criterion;
S criterion;
whether the terminal device supports carrier aggregation (CA) and/or dual connectivity (DC);
slice information of the terminal device; or
support of the first cell and/or the second cell for the network slice.

9. The method of claim 8, wherein after acquiring at least one of Synchronization Signal Block (SSB) or System Information Block (SIB) of the first cell, the terminal device determines whether to camp on the first cell, reselect the first cell, or select the first cell.

10. The method of claim 9, wherein at least one of the SSB or SIB of the first cell is acquired from the first cell and/or from the second cell.

11. The method of any one of claims 8-10, wherein the terminal device camps on, selects or reselects the first cell if the measurement result of the first information is greater than a first threshold.

12. The method of any one of claims 8-11, wherein the terminal device camps on, selects or reselects the first cell if the comparison result of the measurement result of the first information with the measurement result of the second cell is greater than a second threshold, or if the measurement result of the first information is greater than a third threshold and the measurement result of the second cell is less than a fourth threshold.

13. The method of claim 12, wherein the comparison result is determined based on the measurement result of the first information and the measurement result of the second cell; or
the comparison result is determined based on a correction result associated with the measurement result of the first information, and the measurement result of the second cell.

14. The method of any one of claims 8-13, wherein the measurement result of the second cell comprises measurements of one or more of a discovery signal, an SSB signal, a tracking reference signal, a simplified SSB signal, or a non-SSB signal.

15. The method of any one of claims 8-14, wherein the terminal device camps on, selects or reselects the first cell if the measurement result of a current serving cell of the terminal device is less than a third threshold.

16. The method of any one of claims 8-15, wherein the terminal device camps on, selects or reselects the first cell if the terminal device has data to be transmitted, or amount of the data to be transmitted is greater than a fourth threshold.

17. The method of any one of claims 8-16, wherein the terminal device selects the first cell if the measurement result of the first information satisfies an S criterion or a cell selection criterion.

18. The method of any one of claims 8-17, wherein the terminal device reselects the first cell if the measurement result of the first information satisfies one or more of:
R criterion;
S criterion; or
cell reselection criteria.

19. The method of any one of claims 8-18, wherein the terminal device camps on, selects or reselects the first cell if a slice supported by the first cell is the same as a slice required by the terminal device, or if the slice supported by the first cell comprises the slice required by the terminal device.

20. The method of any one of claims 8-19, wherein if the terminal device supports carrier aggregation (CA) and/or dual connectivity (DC), when the terminal device accesses the first cell, the first cell is a secondary cell of the terminal device.

21. The method of any one of claims 1-20, further comprising:
transmitting, by the terminal device, a measurement report to a current serving cell, the measurement report being used to indicate channel quality of the first cell.

22. The method of claim 21, wherein transmitting, by the terminal device, the measurement report to the current serving cell comprises:
if the measurement result of the first information is greater than a first threshold, transmitting, by the terminal device, the measurement report to the current serving cell.

23. The method of claim 21 or 22, further comprising:
receiving, by the terminal device, first indication information transmitted by the second cell, wherein the first indication information is determined based on the measurement report, and the first indication information is used to indicate the terminal device to handover or redirect to the first cell, or that the terminal device transmits simultaneously with the first cell and the second cell.

24. The method of claim 23, wherein
if the terminal device has CA/DC capability, the first indication information is used to indicate that the first cell is used as a secondary cell of the terminal device, and the terminal device transmits simultaneously with the first cell and the second cell;
if the terminal device does not have CA/DC capability, the first indication information is used to indicate the terminal device to handover to the first cell.

25. The method of any one of claims 1-24, wherein the terminal device performs synchronization with the first cell based on a timing advance amount of the second cell and a difference between the timing advance amount of the second cell and the timing advance amount of the first cell.

26. The method of any one of claims 1-25, further comprising:
performing, by the terminal device, a random access procedure with the first cell or performing synchronization with the first cell based on random access channel (RACH) configuration information of the first cell.

27. The method of claim 26, wherein performing, by the terminal device, the random access procedure with the first cell when one or more of following conditions are satisfied:
the first cell is a camping cell;
the first cell is a cell selected through cell selection;
the first cell is a cell selected through cell reselection;
channel quality of the first cell is greater than a fifth threshold;
the terminal device has data to be transmitted;
the amount of data to be transmitted is greater than or equal to a sixth threshold;
slices supported by the first cell are the same as slices required by the terminal device; or
the slices supported by the first cell comprise the slices required by the terminal device.

28. The method of any one of claims 1-27, further comprising:
the terminal device transmits first request information accesses the first cell, receiving, by the terminal device, a physical downlink control channel (PDCCH) in the first cell and/or performing transmission with the first cell; or
after the terminal device transmits the first request information or accesses the first cell for a first duration, receiving by the terminal device, the PDCCH in the first cell and/or performing transmission with the first cell.

29. The method of any one of claims 1-28, further comprising:
receiving, by the terminal device, a PDCCH in the first cell and/or performing transmission with the first cell; or
within a second duration, receiving, by the terminal device, a PDCCH in the first cell and/or performing a transmission with the first cell.

30. The method of claim 29, further comprising:
after the second duration, fallbacking, by the terminal device, to the second cell or transmitting in the second cell.

31. The method of any one of claims 1-30, further comprising:
performing, by the terminal device, transmission with the first cell and/or the second cell by a time division multiplexing (TDM) manner;
performing, by the terminal device, transmissions with the first cell and the second cell alternately;
after the second duration, performing, by the terminal device, transmission with the first cell and/or the second cell in a TDM; or
after the second duration, performing, by the terminal device, transmission with the first cell and the second cell alternately.

32. The method of claim 30 or 31, wherein after the terminal device fallbacking to the second cell, or through the second cell, the terminal device performs one or more of:
updating information of the first cell;
updating system information of the first cell;
updating time advance (TA) information of the first cell;
receiving paging in a second cell;
determining a paging message not supported by the first cell;
acquiring update information of a transmission resource configuration with the first cell; or
performing transmission with the second cell.

33. The method of any one of claims 1-32, further comprising:
receiving, by the terminal device, a paging message from a second cell.

34. The method of claim 33, wherein receiving, by the terminal device, the paging message from a second cell comprises:
if the first cell does not transmit a paging message, receiving, by the terminal device, a paging message for the second cell from the second cell; or
if the first cell does not transmit a paging message, receiving, by the terminal device, a paging message for the first cell from the second cell.

35. The method of any one of claims 1-32, further comprising:
receiving, by the terminal device a paging message from the first cell.

36. The method of claim 35, wherein the location of the paging message satisfies one or more of following requirements:
associating with a location of the first information;
associated with a location of the second information;
locations that occur periodically; or
effective location interval.

37. The method of any one of claims 1-36, wherein before receiving, by the terminal device, the first information, the method further comprises:
transmitting, by the terminal device, second indication information, and the second indication information is used to indicate the first cell or the second cell to transmit the first information.

38. The method of claim 37, wherein a resource for transmitting the second indication information is a predefined resource or a resource of the second cell.

39. The method of any one of claims 1-38, wherein before receiving, by the terminal device, the first information, the method further comprises:
receiving third information transmitted by the second cell, the third information being used to indicate a configuration of the first information and/or a time-frequency resource location.

40. The method of any one of claims 1-39, wherein the second cell is a primary cell of the terminal device, an anchor cell, a cell providing the first cell information, a cell controlling or indicating the first cell, a cell receiving a request from the terminal device for the first cell, or a cell communicating with the terminal device before the terminal device accesses the first cell.

41. The method of any one of claims 1-40, wherein the first information is used to indicate a cell associated with the first cell, a cell synchronized with the first cell, or an anchor cell of the first cell.

42. The method of any one of claims 1-41, wherein the common signal of the first cell comprises one or more of a synchronization signal block (SSB), a master information block (MIB), a system information block (SIB), a paging message, or system information content.

43. The method of any one of claims 1-42, wherein the method is applied to the terminal device in at least one of an idle state, an inactive state, or a connected state.

44. A method for wireless communication, comprising:
receiving, by a terminal device, fourth information and/or fifth information transmitted by a network device, wherein the fourth information is used to indicate configuration information of discontinuous transmission (DTX) and/or discontinuous reception (DRX) of a third cell, and the fifth information is used to indicate activation/deactivation of the configuration information of DTX/DRX of the third cell, wherein the network device is a network device corresponding to the third cell.

45. The method of claim 44, wherein the fourth information is for one or more of:
if the fourth information comprises the configuration information of DTX/DRX of the third cell, the fourth information represents or indicates activation of the configuration information of DTX/DRX;
if the fourth information does not comprise the configuration information of DTX/DRX of the third cell, the fourth information represents or indicates deactivation of the configuration information of DTX/DRX;
the fourth information carries a first identifier, and the first identifier is used to indicate activation/deactivation of the configuration information of DTX/DRX of the third cell;
the fourth information is used to indicate activation/deactivation of the configuration information of DTX/DRX of the third cell for instant;
the fourth information indicates that the fifth information does not exist; or
the fourth information indicates that the fifth information is not used.

46. The method of claim 44 or 45, wherein if the fourth information comprises the configuration information of DTX/DRX of the third cell, the fourth information is updated by a system information update procedure or indication information carried by dedicated downlink control information (DCI) signaling.

47. The method of any one of claims 44-46, wherein if the terminal device receives a plurality of pieces of indication information for activation/deactivation of the configuration of DTX/DRX, the terminal device determines the indication information to be used according to one or more of following information:
transmission time or reception time of the plurality of pieces of indication information;
a priority of the indication information of activation/deactivation of the configuration information of DTX/DRX; or
a usage duration of the configuration information of DTX/DRX used by the terminal device before the plurality of pieces of indication information are received.

48. The method of claim 47, wherein the plurality of pieces of indication information of activation/deactivation of the configuration of DTX/DRX is used to indicate an activation/deactivation state of a same configuration information of DTX/DRX or activation/deactivation states of a plurality of pieces of configuration information of DTX/DRX.

49. The method of claim 47 or 48, wherein the plurality of pieces of indication information of activation/deactivation of the configuration of DTX/DRX is carried in a same type of signaling or in different types of signaling.

50. The method of claim 49, wherein if the terminal device receives the plurality of pieces of indication information of activation/deactivation of the configuration of DTX/DRX, and the plurality of pieces of indication information are carried in different types of signaling, the terminal device performs each of the plurality of pieces of indication information;
the terminal device performs latest indication information among the plurality of pieces of indication information; or
the terminal device performs indication information carried in a terminal device specific signaling among the plurality of pieces of indication information.

51. The method of any one of claims 44-50, wherein when the third cell is in a sleep period of the DTX/DRX, the terminal device performs one or more of:
not receiving one or more of the common signals of the third cell;
not receiving system information or system information changes associated with the third cell;
not transmitting Random Access Channel (RACH) information of the third cell;
delaying transmitting and/or receiving information of the third cell;
transmitting second request information to the third cell;
determining that the third cell is an access-prohibited cell; or
not performing the random access procedure for the third cell.

52. The method of claim 51, wherein the second request information is used to request the network device to indicate the third cell to perform one or more of:
leaving a sleep state of DTX/DRX;
deactivating/deconfiguring configuration information of DTX/DRX;
replacing configuration information of DTX/DRX; or
converting to a non-energy saving mode.

53. The method of any one of claims 44-52, wherein the fourth information/or the fifth information is carried in one or more of:
dedicated Radio Resource Control (RRC) signaling;
dedicated Downlink Control Information (DCI) signaling;
dedicated Media Access Control Information (MAC CE);
terminal device-specific RRC signaling;
a system message; or
s broadcast message.

54. The method of claim 53, wherein among the terminal device-specific RRC signaling, the dedicated RRC signaling, the dedicated DCI signaling, and the indication information for activation/deactivation of the configuration information of DTX/DRX carried in the dedicated MAC CE, the indication information for activation/deactivation of the configuration information of DTX/DRX carried by the terminal device-specific RRC signaling has the highest priority.

55. The method of any one of claims 44-54, further comprising:
transmitting, by the terminal device, sixth information to the network device, and the sixth information is feedback information for the indication information for activation/deactivation of configuration information of DTX/DRX.

56. The method of claim 55, wherein the sixth information is used to indicate one or more of:
whether the indication information for activation/deactivation is received; or
an activation/deactivation state of one or more sets of configuration information of DTX/DRX.

57. The method of any one of claims 44-56, wherein the common signal of the third cell comprises one or more of a synchronization signal block (SSB), a master information block (MIB), a system information block (SIB), a paging message, or system information content.

58. The method of any one of claims 44-57, further comprising:
receiving, by the terminal device, the fourth information repeatedly transmitted by the network device, and a number of times for which the fourth information is repeatedly transmitted is N, wherein N is an integer greater than or equal to 1; and/or
receiving, by the terminal device, the fifth information repeatedly transmitted by the network device, and the number of times for which the fifth information is repeatedly transmitted is M, wherein M is an integer greater than or equal to 1.

59. A method for wireless communication, comprising:
transmitting, by a first cell, first information to a terminal device, the first information being used for one or more of:
indicating the first cell and/or second information;
identifying the first cell;
synchronizing with the first cell; or
providing information of the first cell;
wherein the second information comprises information associated with the first cell, and the first cell is a cell that does not transmit part or all of common signals.

60. The method of claim 59, wherein before transmitting, by the first cell, the first information to the terminal device, the method further comprises:
receiving, by the first cell, second indication information transmitted by the terminal device, and the second indication information being used to indicate the first cell to transmit the first information; or
receiving third indication information transmitted by a second cell, the third indication information being used to indicate the first cell to transmit the first information.

61. The method of claim 59 or 60, further comprising:
receiving, by the first cell, first request information transmitted by the terminal device, the first request information being associated with the first cell; or
receiving, by the first cell, third request information transmitted by the second cell, the third request information being associated with the first request information.

62. The method of claim 61, wherein the first request information or the third request information is used to request the first cell to perform one or more of following operations:
transmitting the second information;
transmitting one or more common signals of the first cell;
transmitting one or more common signals not transmitted, broadcasted, or provided by the first cell;
transmitting part or all of system information/system information content of the first cell;
transmitting part or all of the system information/system information content not transmitted, broadcasted, or provided by the first cell; or
a transition of an operating mode or an operating state of the first cell.

63. The method of claim 62, wherein the transition of the operating mode or operating state comprises one or more of:
a transition between an energy-saving mode and a non-energy-saving mode;
a transition between a state in which one or more common signals are not transmitted, broadcasted or provided and a normal operating state;
a transition between a state in which part or all of the system information/system information content are not transmitted and a normal operating state;
a transition between a state in which part or all of the system information/system information content is not transmitted, not broadcasted, or not provided and a normal operating state; or
a transition between a state in which part or all of the common signal is not transmitted and a state in which part or all of the common signal is transmitted;
wherein the normal operation state is a normal transmission state, a state in which all the common signals are transmitted, or a state in which minimum system information (MSI) is transmitted.

64. The method of any one of claims 59-63, wherein the second information comprises one or more of following information:
time-frequency resources of the first cell;
a preamble of the first cell;
random access channel (RACH) configuration information of the first cell;
physical random access channel (PRACH) configuration information of the first cell;
a time-frequency resource for transmitting the first request information; or
configuration information of the first request information.

65. The method of any one of claims 59-64, wherein the first cell performs synchronization with the terminal device based on a timing advance amount of a second cell and a difference between the timing advance amount of the second cell and a timing advance amount of the first cell.

66. The method of any one of claims 59-65, further comprising:
performing, by the first cell, a random access procedure with the terminal device or performing synchronization with the terminal device based on the random access channel (RACH) configuration information.

67. The method of claim 66, wherein the first cell performs the random access procedure with the terminal device when one or more of following conditions are satisfied:
the first cell is a camping cell;
the first cell is a cell selected cell;
the first cell is a cell reselected cell;
a channel quality of the first cell is greater than a fifth threshold;
the terminal device has data to be transmitted;
amount of the data to be transmitted is greater than or equal to a sixth threshold;
a slice supported by the first cell is the same as a slice required by the terminal device; or
the slice supported by the first cell comprises the slice required by the terminal device.

68. The method of any one of claims 59-67, further comprising:
transmitting, by the first cell, PDCCH to the terminal device and/or performing transmission with the terminal device; or
within a second duration, transmitting, by the first cell, a physical downlink control channel (PDCCH) to the terminal device and/or performing transmission with the terminal device.

69. The method of claim 68, further comprising:
after the second duration, stopping, by the first cell, transmission with the terminal device.

70. The method of claim 69, further comprising:
performing, by the first cell and/or the second cell, transmission with the terminal device using a time division multiplexing (TDM);
performing, alternately by the first cell and the second cell, transmission with the terminal device;
after the second duration, performing, by the first cell and/or the second cell, transmission with the terminal device using a time division multiplexing (TDM); or
after the second duration, performing, alternately by the first cell and the second cell, transmission with the terminal device.

71. The method of claims 59-70, wherein if the first cell transmits a paging message, a location of the paging message satisfies one or more of following requirements:
associating with a location of the first information;
associated with a location of the second information;
locations that occur periodically; or
effective location interval.

72. The method of any one of claims 59-71, wherein the second cell is a primary cell of the terminal device, an anchor cell, a cell that provides information of the first cell, a cell that controls or indicates the first cell, a cell that receives a request from the terminal device for the first cell, or a cell that communicates with the terminal device before the terminal device accesses the first cell.

73. The method of any one of claims 59-72, wherein the first information is used to indicate a cell associated with the first cell, a cell synchronized with the first cell, or an anchor cell of the first cell.

74. The method of any one of claims 59-73, wherein the common signal of the first cell comprises one or more of a synchronization signal block (SSB), a master information block (MIB), a system information block (SIB), a paging message, or system information content.

75. A method for wireless communication, comprising:
transmitting, by a second cell, first information to the terminal device, the first information being used for one or more of:
indicating a first cell and/or second information;
identifying the first cell;
synchronizing with the first cell; or
providing information of the first cell;
wherein the second information comprises information associated with the first cell, and the first cell is a cell that does not transmit part or all of common signals.

76. The method of claim 75, wherein before transmitting, by the second cell, the first information to the terminal device, the method further comprises:
receiving, by the second cell, second indication information transmitted by the terminal device, the second indication information being used to indicate the second cell to transmit the first information.

77. The method of claim 76, wherein after receiving the second indication information, the method further comprises:
transmitting, by the second cell, third indication information to the first cell, the third indication information being used to indicate the first cell to transmit the first information.

78. The method of any one of claims 75-77, further comprising:
receiving, by the second cell, first request information transmitted by the terminal device, the first request information being associated with the first cell.

79. The method of claim 78, further comprising:
transmitting, by the second cell, part or all of the common signals of the first cell; or
transmitting, by the second cell, third request information to the first cell, the third request information being associated with the first request information.

80. The method of claim 79, wherein the first request information or the third request information is used to request one or more of:
transmitting or acquiring the second information;
transmitting or acquiring one or more common signals of the first cell;
transmitting or acquiring one or more common signals not transmitted, broadcasted, or provided by the first cell;
transmitting or acquiring part or all of system information/system information content of the first cell;
transmitting or acquiring part or all of the system information/system information content not transmitted, broadcasted or provided by the first cell; or
a transition of an operating mode or an operating state of the first cell.

81. The method of claim 80, wherein the transition of the operating mode or operating state comprises one or more of:
a transition between an energy-saving mode and a non-energy-saving mode;
a transition between a state in which one or more common signals are not transmitted, broadcasted or provided and a normal operating state;
a transition between a state in which part or all of the system information/system information content are not transmitted and a normal operating state;
a transition between a state in which part or all of the system information/system information content is not transmitted, not broadcasted, or not provided and a normal operating state; or
a transition between a state in which part or all of the common signal is not transmitted and a state in which part or all of the common signal is transmitted;
wherein the normal operation state is a normal transmission state, a state in which all the common signals are transmitted, or a state in which minimum system information (MSI) is transmitted.

82. The method of any one of claims 75-81, wherein the second information comprises one or more of:
time-frequency resources of the first cell;
a preamble of the first cell;
random access channel (RACH) configuration information of the first cell;
physical random access channel (PRACH) configuration information of the first cell;
a time-frequency resource for transmitting the first request information; or
configuration information of the first request information.

83. The method of any one of claims 75-82, further comprising:
performing, by the second cell and/or the first cell, transmission with the terminal device using a time division multiplexing (TDM);
performing, alternately, by the second cell and the first cell, transmission with the terminal device;
after the second duration, performing, by the second cell and/or the first cell, transmission with the terminal device using a time division multiplexing (TDM); or
after the second duration, performing, alternately by the second cell and the first cell, transmission with the terminal device.

84. The method of any one of claims 75-83, further comprising:
transmitting, by the second cell, a paging message to the terminal device.

85. The method of claim 84, wherein transmitting, by the second cell, the paging message to the terminal device, comprising:
if the first cell does not transmit a paging message, transmitting, by the second cell, the paging message for the second cell to the terminal device; or
if the first cell does not transmit a paging message, transmitting, by the second cell, the paging message for the first cell to the terminal device.

86. The method of any one of claims 75-85, further comprising:
transmitting, by the second cell, third information to the terminal device, the third information being used to indicate a configuration of the first information and/or a time-frequency resource location.

87. The method of any one of claims 75-86, further comprising:
if the second cell is a current serving cell of the terminal device, receiving, by the second cell, a measurement report transmitted by the terminal device, the measurement report being used to indicate a channel quality of the first cell.

88. The method of claim 87, further comprising:
based on the measurement report, indicating or triggering, by the second cell, the first cell to perform a state transition, or indicating the first cell to transmit a part of common signals, wherein the part of the common signals comprises one or more of SSB, SIB, or paging.

89. The method of claim 87 or 88, further comprising:
transmitting, by the second cell, first indication information to the terminal device, wherein the first indication information is determined based on the measurement report, and the first indication information is used to indicate the terminal device to handover or redirect to the first cell, or the terminal device to transmit simultaneously with the first cell and the second cell.

90. The method of claim 89, wherein if the terminal device has capability of carrier aggregation (CA) and/or dual connectivity (DC), the first indication information is used to indicate that the first cell is a secondary cell of the terminal device, or that the terminal device transmits simultaneously with the first cell and the second cell;
if the terminal device does not have the capability of the CA/DC, the first indication information is used to indicate the terminal device to handover to the first cell.

91. The method of any one of claims 75-90, wherein the second cell is a primary cell of the terminal device, an anchor cell, a cell that provides the first cell information, a cell that controls or indicates the first cell, a cell that receives a request from the terminal device for the first cell, or a cell that communicates with the terminal device before the terminal device accesses the first cell.

92. The method of any one of claims 75-91, wherein the first information is used to indicate a cell associated with the first cell, a cell synchronized with the first cell, or an anchor cell of the first cell.

93. The method of any one of claims 75-92, wherein the common signal of the first cell comprises one or more of a synchronization signal block (SSB), a master information block (MIB), a system information block (SIB), a paging message, or system information content.

94. A method for wireless communication, comprising:
transmitting, by a network device, fourth information and/or fifth information to a terminal device, wherein the fourth information is used to indicate configuration information of discontinuous transmission (DTX) and/or discontinuous reception (DRX) of a third cell, and the fifth information is used to indicate activation/deactivation of the configuration information of DTX/DRX of the third cell, wherein the network device is a network device corresponding to the third cell.

95. The method of claim 94, wherein the fourth information is for one or more of:
if the fourth information comprises configuration information of DTX/DRX of the third cell, the fourth information represents or indicates activation of the configuration information of DTX/DRX;
if the fourth information does not comprise configuration information of DTX/DRX of the third cell, the fourth information represents or indicates deactivation of the configuration information of DTX/DRX;
the fourth information carries a first identifier for indicating activation/deactivation of a DTX/DRX configuration of the third cell;
the fourth information is used to indicate an instant activation/deactivation of the DTX/DRX configuration of the third cell;
the fourth information indicates that the fifth information does not exist; or
the fourth information indicates that the fifth information is not used.

96. The method of claim 94 or 95, wherein if the fourth information comprises configuration information of DTX/DRX of the third cell, the fourth information is updated by a system information update procedure or indication information carried by dedicated downlink control information (DCI) signaling.

97. The method of any one of claims 94-96, further comprising:
receiving, by the network device, second request information transmitted by the terminal device, wherein the second request information is used to request the network device to indicate the third cell to perform one or more of following operations:
leaving a sleep state of DTX/DRX;
deactivating/deconfiguring the configuration information of DTX/DRX;
replacing the configuration information of DTX/DRX; or
converting to a non-energy saving mode.

98. The method of any one of claims 94-97, wherein the fourth information and/or the fifth information is carried in one or more of:
dedicated Radio Resource Control (RRC) signaling;
dedicated downlink control information (DCI) signaling;
dedicated Media Access Control Information (MAC CE);
terminal device-specific RRC signaling;
a system message; or
a broadcast message.

99. The method of claim 98, wherein among the terminal device-specific RRC signaling, the dedicated RRC signaling, the dedicated DCI signaling, and the indication information for activation/deactivation of the configuration information of DTX/DRX carried in the dedicated MAC CE, the indication information for activation/deactivation of the configuration information of DTX/DRX carried by the terminal device-specific RRC signaling has the highest priority.

100. The method of any one of claims 94-99, further comprising:
receiving, by the network device, sixth information transmitted by the terminal device, the sixth information being feedback information for the indication information for activation/deactivation of configuration information of DTX/DRX.

101. The method of claim 100, wherein the sixth information is used to indicate one or more of:
whether the indication information for activation/deactivation is received; or
an activation/deactivation state of the one or more sets of configuration information of DTX/DRX.

102. The method of any one of claims 94-101, further comprising:
repeatedly transmitting, by the network device, the fourth information to the terminal device, wherein a number of times for which the fourth information is repeatedly transmitted is N, and N is an integer greater than or equal to 1; and/or
repeatedly transmitting, by the network device, the fifth information to the terminal device, wherein a number of times for which the fifth information is repeatedly transmitted is M, and M is an integer greater than or equal to 1.

103. A terminal device, comprising:
a first receiving unit configured to receive first information, the first information being used for one or more of:
indicating a first cell and/or second information;
identifying the first cell;
synchronizing with the first cell; or
providing information of the first cell;
wherein the second information comprises information associated with the first cell, and the first cell is a cell that does not transmit part or all of common signals.

104. The device of claim 103, wherein when the first information is acquired, the terminal device acquires the second information.

105. The device of claim 103 or 104, wherein the terminal device performs, based on the first information, one or more of following operations:
acquiring a time-frequency resource location of the second information;
transmitting first request information;
identifying the first cell;
performing measurement;
performing cell selection or reselection;
camping;
downlink synchronization with the first cell;
performing a random access channel (RACH) procedure in the first cell;
receiving a paging message in the first cell;
accessing the first cell;
determining whether to camp on the first cell;
determining whether to perform cell selection;
determining whether to perform cell reselection;
determining whether to perform a cell handover;
determining whether to perform cell redirection;
determining whether to select the first cell;
determining whether to reselect the first cell;
determining whether to handover to the first cell;
determining whether to redirect to the first cell; or
determining whether to use the first cell as a secondary cell;
wherein the first request information is associated with the first cell.

106. The device of claim 105, wherein the first request information is used to request one or more of:
transmitting or acquiring one or more common signals of the first cell;
transmitting or acquiring one or more common signals not transmitted, broadcasted, or provided by the first cell;
transmitting or acquiring part or all of system information/system information content of the first cell;
transmitting or acquiring part or all of the system information/system information content not transmitted, broadcasted or provided by the first cell; or
a transition of an operating mode or an operating state of the first cell.

107. The device of claim 106, wherein the transition of the operating mode or operating state comprises one or more of:
a transition between an energy-saving mode and a non-energy-saving mode;
a transition between a state in which part or all of the common signal is not transmitted and a normal operating state;
a transition between a state in which one or more common signals are not transmitted, broadcasted or provided and a normal operating state;
a transition between a state in which part or all of the system information/system information content are not transmitted and a normal operating state;
a transition between a state in which part or all of the system information/system information content is not transmitted, not broadcasted, or not provided and a normal operating state; or
a transition between a state in which part or all of the common signal is not transmitted and a state in which part or all of the common signal is transmitted;
wherein the normal operation state is a normal transmission state, a state in which all the common signals are transmitted, or a state in which minimum system information (MSI) is transmitted.

108. The device of any one of claims 105-107, wherein the terminal device determines, based on a request result of the first request information, one or more of following information:
whether it is able to camp on the first cell;
whether it is able to select the first cell;
whether it is able to reselect the first cell;
whether to perform a RACH procedure in the first cell;
whether to receive paging in the first cell;
whether to handover to the first cell;
whether to establish a connection or operation in the first cell; or
whether to redirect to the first cell.

109. The device of any one of claims 103-108, wherein the second information comprises one or more of following information:
time-frequency resources of the first cell;
a preamble of the first cell;
RACH configuration information of the first cell;
physical random access channel (PRACH) configuration information of the first cell;
a time-frequency resource for transmitting the first request information; or
configuration information of the first request information.

110. The device of any one of claims 103-109, wherein the terminal device determines whether to camp on, select, reselect, handover, redirect, or access the first cell; whether to receive paging in the first cell; whether to perform a RACH procedure in the first cell; or determine which cell/frequency point to camp on, select, reselect, handover, redirect, receive paging, perform RACH procedure or access based on one or more of the following information:
whether the first information is detected;
whether the second information is acquired;
whether the time-frequency resource location of the second information is acquired;
whether it is able to transmit the first request information;
a measurement result of the first information;
a measurement result of the second cell;
a comparison result of the measurement result of the first information with the measurement result of the second cell;
data to be transmitted;
R criterion;
S criterion;
whether the terminal device supports carrier aggregation (CA) and/or dual connectivity (DC);
slice information of the terminal device; or
support of the first cell and/or the second cell for the network slice.

111. The device of claim 110, wherein the terminal device determines whether to camp on the first cell, reselect the first cell, or select the first cell after acquiring at least one of the SSB or SIB of the first cell.

112. The device of claim 111, wherein at least one of the SSB or SIB of the first cell is acquired from the first cell and/or from the second cell.

113. The device of any one of claims 110-112, wherein the terminal device camps on, selects or reselects the first cell if the measurement result of the first information is greater than a first threshold.

114. The device of any one of claims 110-113, wherein the terminal device camps on, selects or reselects the first cell if a comparison result of the measurement result of the first information with the measurement result of the second cell is greater than a second threshold, or if the measurement result of the first information is greater than a third threshold and the measurement result of the second cell is less than a fourth threshold.

115. The device of claim 114, wherein the comparison result is determined based on a measurement result of the first information and a measurement result of the second cell; or
the comparison result is determined based on a correction result associated with the measurement result of the first information, and the measurement result of the second cell.

116. The device of any one of claims 110-115, wherein the measurement result of the second cell comprises measurements of one or more of a discovery signal, an SSB signal, a tracking reference signal, a simplified SSB signal, or a non-SSB signal.

117. The device of any one of claims 110-116, wherein the terminal device camps on, selects or reselects the first cell if the measurement result of a current serving cell of the terminal device is less than a third threshold.

118. The device of any one of claims 110-117, wherein the terminal device camps on, selects or reselects the first cell if the terminal device has data to be transmitted, or amount of the data to be transmitted is greater than a fourth threshold.

119. The device of any one of claims 110-118, wherein the terminal device selects the first cell if the measurement result of the first information satisfies an S criterion or a cell selection criterion.

120. The device of any one of claims 110-119, wherein the terminal device reselects the first cell if the measurement result of the first information satisfies one or more of:
R criterion;
S criterion; or
cell reselection criteria.

121. The device of any one of claims 110-120, wherein the terminal device camps on, selects or reselects the first cell if a slice supported by the first cell is the same as a slice required by the terminal device, or if the slice supported by the first cell comprises the slice required by the terminal device.

122. The device of any one of claims 110-121, wherein if the terminal device supports carrier aggregation (CA)/dual connectivity (DC), the first cell is a secondary cell of the terminal device when the terminal device accesses the first cell.

123. The device of any one of claims 110-122, further comprising:
a first transmitting unit, configured to transmit a measurement report to a current serving cell, wherein the measurement report is used to indicate a channel quality of the first cell.

124. The device of claim 123, wherein the first transmitting unit is configured to:
if the measurement result of the first information is greater than the first threshold, the terminal device transmits the measurement report to the current serving cell.

125. The device of claim 123 or 124, further comprising:
a second receiving unit, configured to receive first indication information transmitted by the second cell, wherein the first indication information is determined based on the measurement report, and the first indication information is used to indicate the terminal device to handover or redirect to the first cell, or that the terminal device transmits simultaneously with the first cell and the second cell.

126. The device of claim 125, wherein if the terminal device has carrier aggregation (CA)/dual connectivity (DC) capability, the first indication information is used to indicate that the first cell is a secondary cell of the terminal device, and the terminal device transmits simultaneously with the first cell and the second cell;
if the terminal device does not have the CA/DC capability, the first indication information is used to indicate the terminal device to handover to the first cell.

127. The device of any one of claims 103-126, wherein the terminal device performs synchronization with the first cell based on a timing advance amount of the second cell and a difference between the timing advance amount of the second cell and a timing advance amount of the first cell.

128. The device of any one of claims 103-127, further comprising:
a first execution unit, configured to perform a random access procedure with the first cell or synchronize with the first cell based on RACH configuration information of the first cell.

129. The device of claim 128, wherein the terminal device performs a random access procedure with the first cell when one or more of following conditions are satisfied:
the first cell is a camping cell;
the first cell is a cell selected cell;
the first cell is a cell reselected cell;
channel quality of the first cell is greater than a fifth threshold;
the terminal device has data to be transmitted;
amount of the data to be transmitted is greater than or equal to a sixth threshold;
a slice supported by the first cell is the same as a slice required by the terminal device; or
the slice supported by the first cell comprises a slice required by the terminal device.

130. The device of any one of claims 103-129, further comprising:
a second performing unit configured to: when the terminal device transmits first request information or accesses the first cell, receive a physical downlink control channel (PDCCH) in the first cell, and/or perform transmission with the first cell; or
configured to receive a PDCCH in the first cell and/or perform transmission with the first cell after the terminal device transmits the first request information or accesses the first cell for a first duration.

131. The device of any one of claims 103-130, further comprising:
a third performing unit configured to receive a PDCCH in the first cell and/or perform transmission with the first cell; or
configured to receive a PDCCH in the first cell and/or performing transmission with the first cell within a second duration.

132. The device of claim 131, further comprising:
a fourth performing unit configured to fall back to a second cell or transmit in the second cell after the second duration.

133. The device of any one of claims 103-132, further comprising:
a fifth performing unit configured to perform transmission with the first cell and/or the second cell by a time division multiplexing (TDM);
configured to alternately perform transmission with the first cell and the second cell;
configured to perform, by the terminal device, transmission with the first cell and/or the second cell in a TDM after the second duration; or
configured to alternately perform transmissions, by the terminal device, with the first cell and the second cell after the second duration.

134. The device of claim 132 or 133, wherein after fallbacking to the second cell or through the second cell, the terminal device performs one or more of:
updating information of the first cell;
updating system information of the first cell;
updating time advance (TA) information of the first cell;
receiving paging in a second cell;
determining a paging message not supported by the first cell;
acquiring update information of a transmission resource configuration with the first cell; or
performing transmission with the second cell.

135. The device of any one of claims 103-134, further comprising:
a third receiving unit configured to receive a paging message from the second cell.

136. The device of claim 135, wherein the third receiving unit is configured to:
if the first cell does not transmit a paging message, receive, by the terminal device, the paging message for the second cell from the second cell; or
if the first cell does not transmit a paging message, receive, by the terminal device, the paging message for the first cell from the second cell.

137. The device of any one of claims 103-134, further comprising:
a fourth receiving unit configured to receive a paging message from the first cell.

138. The device of claim 137, wherein the location of the paging message satisfies one or more of following requirements:
associating with a location of the first information;
associated with a location of the second information;
locations that occur periodically; or
effective location interval.

139. The device of any one of claims 103-138, further comprising:
a second transmitting unit configured to: before the terminal device receives the first information, transmit second indication information for indicating the first cell or the second cell to transmit the first information.

140. The device of claim 139, wherein a resource for transmitting the second indication information is a predefined resource or a resource of the second cell.

141. The device of any one of claims 103-140, further comprising:
a fourth receiving unit configured to: before the terminal device receives the first information, receive third information transmitted by the second cell, wherein the third information is used to indicate a configuration of the first information and/or a time-frequency resource location.

142. The device of any one of claims 103-141, wherein the second cell is a primary cell of the terminal device, an anchor cell, a cell that provides the first cell information, a cell that controls or indicates a first cell, a cell that receives a request from the terminal device for the first cell, or a cell that communicates with the terminal device before the terminal device accesses the first cell.

143. The device of any one of claims 103-142, wherein the first information is used to indicate a cell associated with the first cell, a cell synchronized with the first cell, or an anchor cell of the first cell.

144. The device of any one of claims 103-143, wherein the common signal of the first cell comprises one or more of a synchronization signal block (SSB), a master information block (MIB), a system information block (SIB), a paging message, or system information content.

145. The device of any one of claims 103-144, wherein the terminal device is in an idle state, an inactive state, or a connected state.

146. A terminal device, comprising:
a fifth receiving unit, configured to receive fourth information and/or fifth information transmitted by a network device, wherein the fourth information is used to indicate configuration information of discontinuous transmission (DTX) and/or discontinuous reception (DRX) of a third cell, and the fifth information is used to indicate activation/deactivation of the configuration information of DTX/DRX of the third cell, wherein the network device is a network device corresponding to the third cell.

147. The device of claim 146, wherein the fourth information is for one or more of:
if the fourth information comprises configuration information of DTX/DRX of the third cell, the fourth information represents or indicates activation of the configuration information of DTX/DRX;
if the fourth information does not comprise configuration information of DTX/DRX of the third cell, the fourth information represents or indicates deactivation of the configuration information of DTX/DRX;
the fourth information carries a first identifier, and the first identifier is used to indicate activation/deactivation of the configuration information of DTX/DRX of the third cell;
the fourth information is used to indicate instant activation/deactivation of configuration information of DTX/DRX of the third cell;
the fourth information indicates that the fifth information does not exist; or
the fourth information indicates that the fifth information is not used.

148. The device of claim 146 or 147, wherein if the fourth information comprises configuration information of DTX/DRX of the third cell, the fourth information is updated by a system information update procedure or indication information carried by dedicated downlink control information (DCI) signaling.

149. The device of any one of claims 146-148, wherein if the terminal device receives a plurality of pieces of indication information for activation/deactivation of the configuration of DTX/DRX, the terminal device determines indication information to be used according to one or more of:
transmission time or reception time of the plurality of pieces of indication information;
priority of indication information for activation/deactivation of the configuration information of DTX/DRX; or
a usage duration of the configuration information of DTX/DRX used by the terminal device before the plurality of pieces of indication information are received.

150. The device of claim 149, wherein the plurality of pieces of indication information of activation/deactivation of the configuration of DTX/DRX is used to indicate an activation/deactivation state of a same piece of configuration information of DTX/DRX or activation/deactivation states of the plurality of pieces of configuration information of DTX/DRX.

151. The device of claim 149 or 150, wherein the plurality of pieces of indication information of activation/deactivation of the configuration of DTX/DRX is carried in a same type of signaling or in different types of signaling.

152. The device of claim 151, wherein if the terminal device receives the plurality of pieces of indication information of activation/deactivation of the configuration of DTX/DRX, and the plurality of pieces of indication information are carried in different types of signaling, the terminal device performs each of the plurality of pieces of indication information;
the terminal device performs latest indication information among the plurality of pieces of indication information; or
the terminal device performs the indication information carried in the terminal device specific signaling among the plurality of pieces of indication information.

153. The device of any one of claims 146-152, wherein when the third cell is in a sleep period of the DTX/DRX, the terminal device performs one or more of following operations:
not receiving one or more of common signals of the third cell;
not receiving system information or system information changes associated with the third cell;
not transmitting random access channel (RACH) information of the third cell;
delaying transmitting and/or receiving information of the third cell;
transmitting second request information to the third cell;
determining that the third cell is an access-prohibited cell; or
not performing the random access procedure for the third cell.

154. The device of claim 153, wherein the second request information is used to request the network device to indicate the third cell to perform one or more of following operations:
leaving a sleep state of DTX/DRX;
deactivating/deconfiguring configuration information of DTX/DRX;
replacing configuration information of DTX/DRX; or
converting to a non-energy saving mode.

155. The device of any one of claims 146-154, wherein the fourth information/or the fifth information is carried in one or more of:
dedicated Radio Resource Control (RRC) signaling;
dedicated downlink control information (DCI) signaling;
dedicated Media Access Control Information (MAC CE);
terminal device-specific RRC signaling;
a system message; or
a broadcast message.

156. The device of claim 155, wherein among the terminal device-specific RRC signaling, the dedicated RRC signaling, the dedicated DCI signaling, and the indication information for activation/deactivation of the configuration information of DTX/DRX carried in the dedicated MAC CE, the indication information for activation/deactivation of the configuration information of DTX/DRX carried in the terminal device-specific RRC signaling has the highest priority.

157. The device of any one of claims 146-156, further comprising:
a third transmitting unit configured to transmit sixth information to the network device, where the sixth information is feedback information for indication information for activation/deactivation of configuration information of DTX/DRX.

158. The device of claim 157, wherein the sixth information is for indicating one or more of following information:
whether indication information for activation/deactivation is received; or
an activation/deactivation state of one or more sets of configuration information of DTX/DRX.

159. The device of any one of claims 146-158, wherein the common signal of the third cell comprises one or more of a synchronization signal block (SSB), a master information block (MIB), a system information block (SIB), a paging message, or system information content.

160. The device of any one of claims 146-159, further comprising:
a sixth receiving unit configured to receive the fourth information repeatedly transmitted by the network device, wherein a number of times in which the fourth information is repeatedly transmitted is N, wherein N is an integer greater than or equal to 1; and/or
configured to receive the fifth information repeatedly transmitted by the network device, wherein the number of times for which the fifth information is repeatedly transmitted is M, wherein M is an integer greater than or equal to 1.

161. A network device, wherein the network device is a network device corresponding to a first cell, and the network device comprises:
a first transmitting unit configured to transmit first information to the terminal device, the first information being used for one or more of:
indicating the first cell and/or second information;
identifying the first cell;
synchronizing with the first cell; or
providing information of the first cell;
wherein the second information comprises information associated with the first cell, and the first cell is a cell that does not transmit part or all of common signals.

162. The network device of claim 161, wherein the network device further comprises:
a first receiving unit configured to: before transmitting the first information to the terminal device, receive second indication information transmitted by the terminal device, wherein the second indication information is configured to indicate the first cell to transmit the first information; or
configured to receive third indication information transmitted by a second cell, wherein the third indication information is configured to indicate the first cell to transmit the first information.

163. The network device of claim 161 or 162, further comprising:
a second receiving unit configured to receive first request information transmitted by the terminal device, the first request information being associated with the first cell; or
configured to receive third request information transmitted by the second cell, the third request information being associated with the first request information.

164. The network device of claim 163, wherein the first request information or the third request information is used to request the first cell to perform one or more of following operations:
transmitting the second information;
transmitting one or more common signals of the first cell;
transmitting one or more common signals not transmitted, broadcasted, or provided by the first cell;
transmitting part or all of system information/system information content of the first cell;
transmitting part or all of the system information/system information content not transmitted, broadcasted, or provided by the first cell; or
a transition of an operating mode or an operating state of the first cell.

165. The network device of claim 164, wherein the transition of the operating mode or operating state comprises one or more of:
a transition between an energy-saving mode and a non-energy-saving mode;
a transition between a state in which one or more common signals are not transmitted, broadcasted or provided and a normal operating state;
a transition between a state in which part or all of the system information/system information content are not transmitted and the normal operating state;
a transition between a state in which part or all of the system information/system information content is not transmitted, not broadcasted, or not provided and the normal operating state; or
a transition between a state in which part or all of the common signals is not transmitted and a state in which part or all of the common signals is transmitted;
wherein the normal operation state is a normal transmission state, a state in which all the common signals are transmitted, or a state in which minimum system information (MSI) is transmitted.

166. The network device of any one of claims 161-165, wherein the second information comprises one or more of:
time-frequency resources of the first cell;
a preamble of the first cell;
random access channel (RACH) configuration information of the first cell;
physical random access channel (PRACH) configuration information of the first cell;
a time-frequency resource for transmitting the first request information; or
configuration information of the first request information.

167. The network device of any one of claims 161-166, wherein the first cell performs synchronization with the terminal device based on a timing advance amount of a second cell and a difference between the timing advance amount of the second cell and a timing advance amount of the first cell.

168. The network device of any one of claims 161-167, further comprising:
a first performing unit configured to perform a random access procedure with the terminal device or synchronize with the terminal device based on random access channel (RACH) configuration information.

169. The network device of claim 168, wherein the first cell performs a random access procedure with the terminal device when one or more of the following conditions are satisfied:
the first cell is a camping cell;
the first cell is a cell selected cell;
the first cell is a cell reselected cell;
channel quality of the first cell is greater than a fifth threshold;
the terminal device has data to be transmitted;
amount of the data to be transmitted is greater than or equal to a sixth threshold;
a slice supported by the first cell is the same as a slice required by the terminal device; or
the slice supported by the first cell comprises the slice required by the terminal device.

170. The network device of any one of claims 161-169, further comprising:
a second performing unit configured to transmit a PDCCH to the terminal device and/or perform transmission with the terminal device; or
configured to transmit a physical downlink control channel (PDCCH) to the terminal device and/or perform transmission with the terminal device within a second duration.

171. The network device of claim 170, further comprising:
a third performing unit configured to stop transmission with the terminal device after the second duration.

172. The network device of claim 171, further comprising:
a fourth performing unit configured to perform transmission with the terminal device by the first cell and/or the second cell using a time division multiplexing (TDM);
configured to perform transmissions with the terminal device alternately by the first cell and the second cell;
configured to perform transmission with the terminal device by the first cell and/or the second cell using a time division multiplexing (TDM) after the second duration; or
configured to perform transmission with the terminal device alternately by the first cell and the second cell after the second duration.

173. The network device of claims 1-172, wherein if the first cell transmits a paging message, a location of the paging message satisfies one or more of following requirements:
associating with a location of the first information;
associated with a location of the second information;
locations that occur periodically; or
effective location interval.

174. The network device of any one of claims 1-173, wherein the second cell is a primary cell of the terminal device, an anchor cell, a cell providing the first cell information, a cell controlling or indicating the first cell, a cell receiving a request from the terminal device for the first cell, or a cell communicating with the terminal device before the terminal device accesses the first cell.

175. The network device of any one of claims 1-174, wherein the first information is used to indicate a cell associated with the first cell, a cell synchronized with the first cell, or an anchor cell of the first cell.

176. The network device of any one of claims 1-175, wherein the common signal of the first cell comprises one or more of a synchronization signal block (SSB), a master information block (MIB), a system information block (SIB), a paging message, or system information content.

177. A network device, wherein the network device is a network device corresponding to a second cell, and the network device comprises:
a first transmitting unit configured to transmit first information to the terminal device, the first information being used for one or more of:
indicating a first cell and/or second information;
identifying the first cell;
synchronizing with the first cell; or
providing information of the first cell;
wherein the second information comprises information associated with the first cell, and the first cell is a cell that does not transmit part or all of common signals.

178. The network device of claim 177, wherein the network device further comprises:
a first receiving unit configured to: before transmitting the first information to the terminal device, receive second indication information transmitted by the terminal device, wherein the second indication information is configured to indicate the second cell to transmit the first information.

179. The network device of claim 178, wherein the network device further comprises:
a second transmitting unit configured to: after receiving the second indication information, transmit third indication information to the first cell, wherein the third indication information is configured to indicate the first cell to transmit the first information.

180. The network device of any one of claims 177-179, further comprising:
a second receiving unit configured to receive first request information transmitted by the terminal device, wherein the first request information is associated with the first cell.

181. The network device of claim 180, further comprising:
a third transmitting unit configured to transmit part or all of the common signals of the first cell; or
configured to transmit third request information to the first cell, the third request information being associated with the first request information.

182. The network device of claim 181, wherein the first request information or the third request information is used to request one or more of following operations:
transmitting or acquiring the second information;
transmitting or acquiring one or more common signals of the first cell;
transmitting or acquiring one or more common signals not transmitted, broadcasted, or provided by the first cell;
transmitting or acquiring part or all of system information/system information content of the first cell;
transmitting or acquiring part or all of the system information/system information content not transmitted, broadcasted or provided by the first cell; or
a transition of an operating mode or an operating state of the first cell.

183. The network device of claim 182, wherein the transition of the operating mode or operating state comprises one or more of:
a transition between an energy-saving mode and a non-energy-saving mode;
a transition between a state in which one or more common signals are not transmitted, broadcasted or provided and a normal operating state;
a transition between a state in which part or all of the system information/system information content are not transmitted and a normal operating state;
a transition between a state in which part or all of the system information/system information content is not transmitted, not broadcasted, or not provided and a normal operating state; or
a transition between a state in which part or all of the common signal is not transmitted and a state in which part or all of the common signal is transmitted;
wherein the normal operation state is a normal transmission state, a state in which all the common signals are transmitted, or a state in which minimum system information (MSI) is transmitted.

184. The network device of any one of claims 177-183, wherein the second information comprises one or more of:
time-frequency resources of the first cell;
a preamble of the first cell;
random access channel (RACH) configuration information of the first cell;
physical random access channel (PRACH) configuration information of the first cell;
a time-frequency resource for transmitting the first request information; or
configuration information of the first request information.

185. The network device of any one of claims 177-184, further comprising:
a performing unit configured to perform transmission with the terminal device by the second cell and/or the first cell using a time division multiplexing (TDM);
configured to perform transmissions with the terminal device alternately by the second cell and the first cell;
configured to perform transmission with the terminal device by the second cell and/or the first cell in a time division multiplexing (TDM) after the second duration,; or
configured to perform transmission with the terminal device alternately by the second cell and the first cell after the second duration.

186. The network device of any one of claims 177-185, further comprising:
a fourth transmitting unit configured to transmit a paging message to the terminal device.

187. The network device of claim 186, wherein the fourth transmitting unit is configured to:
if the first cell does not transmit a paging message, transmit, by a second cell, a paging message for the second cell to the terminal device; or
if the first cell does not transmit a paging message, transmit, by a second cell, the paging message for the first cell to the terminal device.

188. The network device of any one of claims 177-187, further comprising:
transmitting, by the second cell, third information to the terminal device, wherein the third information is used to indicate a configuration of the first information and/or a time-frequency resource location.

189. The network device of any one of claims 177-188, further comprising:
a third receiving unit configured to receive a measurement report transmitted by the terminal device if the second cell is a current serving cell of the terminal device, wherein the measurement report is used to indicate a channel quality of the first cell.

190. The network device of claim 189, further comprising:
a second performing unit configured to indicate or trigger the first cell to perform a state transition or indicate the first cell to transmit a part of common signals based on the measurement report, wherein the part of the common signals comprises one or more of Synchronization Signal Block (SSB), System Information Block (SIB), or paging.

191. The network device of claim 189 or 190, further comprising:
a fourth transmitting unit configured to transmit first indication information to the terminal device, wherein the first indication information is determined based on the measurement report, and the first indication information is used to indicate the terminal device to handover or redirect to the first cell, or that the terminal device transmits simultaneously with the first cell and the second cell.

192. The network device of claim 191, wherein if the terminal device has Carrier Aggregation (CA)/Dual connectivity (DC) capability, the first indication information is used to indicate that the first cell is used as a secondary cell of the terminal device or that the terminal device transmits simultaneously with the first cell and the second cell;
if the terminal device does not have CA/DC capability, the first indication information is used to indicate the terminal device to handover to the first cell.

193. The network device of any one of claims 177-192, wherein the second cell is a primary cell of the terminal device, an anchor cell, a cell providing the first cell information, a cell controlling or indicating a first cell, a cell receiving a request from the terminal device for the first cell, or a cell communicating with the terminal device before the terminal device accesses the first cell.

194. The network device of any one of claims 177-193, wherein the first information is used to indicate a cell associated with the first cell, a cell synchronized with the first cell, or an anchor cell of the first cell.

195. The network device of any one of claims 177-194, wherein the common signal of the first cell comprises one or more of a synchronization signal block (SSB), a master information block (MIB), a system information block (SIB), a paging message, or system information content.

196. A network device, comprising:
a first transmitting unit configured to transmit fourth information and/or fifth information to a terminal device, wherein the fourth information is used to indicate configuration information of discontinuous transmission (DTX) and/or discontinuous reception (DRX) of the third cell, and the fifth information is used to indicate activation/deactivation of the configuration information of DTX/DRX of the third cell, wherein the network device is a network device corresponding to the third cell.

197. The device of claim 196, wherein the fourth information is for one or more of:
if the fourth information comprises configuration information of DTX/DRX of the third cell, the fourth information represents or indicates activation of the configuration information of DTX/DRX;
if the fourth information does not comprise configuration information of DTX/DRX of the third cell, the fourth information represents or indicates deactivation of the configuration information of DTX/DRX;
the fourth information carries a first identifier for indicating activation/deactivation of a DTX/DRX configuration of the third cell;
the fourth information is used to indicate instant activation/deactivation of the DTX/DRX configuration of the third cell;
the fourth information indicates that the fifth information does not exist; or
the fourth information indicates that the fifth information is not used.

198. The device of claim 196 or 197, wherein if the fourth information comprises the configuration information of DTX/DRX of the third cell, the fourth information is updated by a system information update procedure or indication information carried by dedicated downlink control information (DCI) signaling.

199. The device of any one of claims 196-198, further comprising:
a first receiving unit, configured to receive second request information transmitted by the terminal device, wherein the second request information is configured to request the network device to indicate the third cell to perform one or more of following operations:
leaving a sleep state of Discontinuous Transmission (DTX)/Discontinuous Reception (DRX);
deactivating/deconfiguring the configuration information of DTX/DRX;
replacing the configuration information of DTX/DRX; or
converting to a non-energy saving mode.

200. The device of any one of claims 196-199, wherein the fourth information and/or the fifth information is carried in one or more of:
dedicated Radio Resource Control (RRC) signaling;
dedicated downlink control information (DCI) signaling;
dedicated Media Access Control Information (MAC CE);
terminal device-specific RRC signaling;
a system message; or
a broadcast message.

201. The device of claim 200, wherein indication information for activation/deactivation of the configuration information of DTX/DRX carried by the terminal device-specific RRC signaling, the dedicated RRC signaling, the dedicated DCI signaling, and the indication information for activation/deactivation of the configuration information of DTX/DRX carried by the terminal device-specific RRC signaling has the highest priority.

202. The device of any one of claims 1-201, further comprising:
a second receiving unit configured to receive sixth information transmitted by the terminal device, wherein the sixth information is feedback information for indication information for activation/deactivation of configuration information of DTX/DRX.

203. The device of claim 202, wherein the sixth information is for indicating one or more of following information:
whether the indication information for activation/deactivation is received; or
an activation/deactivation state of the one or more sets of configuration information of DTX/DRX.

204. The device of any one of claims 196-203, further comprising:
a second transmitting unit configured to repeatedly transmit the fourth information to the terminal device, wherein a number of times for which the fourth information is repeatedly transmitted is N, wherein N is an integer greater than or equal to 1; and/or
configured to repeatedly transmit the fifth information to the terminal device, wherein a number of times for which the fifth information is repeatedly transmitted is M, wherein M is an integer greater than or equal to 1.

205. A terminal device comprising a memory for storing a program and a processor for invoking the program in the memory to perform a method as claimed in any one of claims 1-43 or 44-58.

206. A network device comprising a memory for storing a program and a processor for invoking a program in the memory to perform a method as claimed in any one of claims 59-74, 75-93 or 94-102.

207. A terminal device comprising a processor for invoking a program from a memory to perform a method as claimed in any one of claims 1-43 or 44-58.

208. A network device comprising a processor for invoking a program from a memory to perform a method as claimed in any one of claims 59-74, 75-93 or 94-102.

209. A chip comprising a processor for invoking a program from a memory such that a device on which the chip is mounted performs a method as claimed in any one of claims 1-43 or 44-58.

210. A chip comprising a processor for invoking a program from a memory such that a device on which the chip is mounted performs a method as claimed in any one of claims 59-74, 75-93 or 94-102.

211. A computer-readable storage medium having stored thereon a program that causes a computer to perform the method of any one of claims 1-43 or 44-58.

212. A computer-readable storage medium having stored thereon a program that causes a computer to perform the method of any one of claims 59-74, 75-93, or 94-102.

213. A computer program product comprising a program that causes a computer to perform the method of any one of claims 1-43 or 44-58.

214. A computer program product comprising a program that causes a computer to perform a method as claimed in any one of claims 59-74, 75-93 or 94-102.

215. A computer program, wherein the computer program causes a computer to perform the method of any one of claims 1-43 or 44-58.

216. A computer program, wherein the computer program causes a computer to perform the method of any one of claims 59-74, 75-93 or 94-102.
